(19) Europäisches Patentamt
European Patent Office
Office européen des brevets

(11) **EP 4 375 098 B1**

(12) **EUROPEAN PATENT SPECIFICATION**

(45) Date of publication and mention
of the grant of the patent:
**01.10.2025 Bulletin 2025/40**

(21) Application number: **24169656.6**

(22) Date of filing: **16.04.2020**

(51) International Patent Classification (IPC):
**C09K 5/04** *(2006.01)*  **F25B 1/00** *(2006.01)*
**B60H 1/32** *(2006.01)*

(52) Cooperative Patent Classification (CPC):
**C09K 5/045;** C09K 2205/106; C09K 2205/126;
C09K 2205/40; F25B 1/00; F25B 2400/121

(54) **COMPOSITION INCLUDING REFRIGERANT, USE THEREOF, REFRIGERATOR HAVING SAME, AND METHOD FOR OPERATING SAID REFRIGERATOR**

ZUSAMMENSETZUNG MIT KÜHLMITTEL, VERWENDUNG DAVON, KÜHLSCHRANK DAMIT UND VERFAHREN ZUM BETRIEB DES BESAGTEN KÜHLSCHRANKS

COMPOSITION COMPRENANT UN FLUIDE FRIGORIGÈNE, SON UTILISATION, RÉFRIGÉRATEUR LA COMPRENANT ET PROCÉDÉ DE FONCTIONNEMENT DUDIT RÉFRIGÉRATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.04.2019 JP 2019078133**

(43) Date of publication of application:
**29.05.2024 Bulletin 2024/22**

(60) Divisional application:
**25192363.7**

(62) Document number(s) of the earlier application(s) in
accordance with Art. 76 EPC:
**20791124.9 / 3 957 700**

(73) Proprietor: **Daikin Industries, Ltd.
Osaka-shi, Osaka 530-0001 (JP)**

(72) Inventors:
• **Itano, Mitsushi**
**Osaka-Shi, Osaka, 530-0001 (JP)**
• **Karube, Daisuke**
**Osaka-Shi, Osaka, 530-0001 (JP)**
• **Yotsumoto, Yuuki**
**Osaka-Shi, Osaka, 530-0001 (JP)**
• **Ohkubo, Shun**
**Osaka-Shi, Osaka, 530-0001 (JP)**
• **Takakuwa, Tatsuya**
**Osaka-Shi, Osaka, 530-0001 (JP)**

(74) Representative: **Hoffmann Eitle
Patent- und Rechtsanwälte PartmbB
Arabellastraße 30
81925 München (DE)**

(56) References cited:
US-A1- 2016 097 569     US-A1- 2017 058 172
US-A1- 2017 058 173     US-A1- 2017 058 174

## Description

Technical Field

The present disclosure relates to a composition comprising a refrigerant, use of the composition, a refrigerating machine having the composition, and a method for operating the refrigerating machine.

Background Art

R410A is currently used as an air conditioning refrigerant for, e.g., home air conditioners. R410A is a two-component mixed refrigerant of difluoromethane ($CH_2F_2$: HFC-32 or R32) and pentafluoroethane ($C_2HF_5$: HFC-125 or R125), and is a pseudo-azeotropic composition.

However, the global warming potential (GWP) of R410A is 2088. Due to growing concerns about global warming, R32, which has a GWP of 675, has been increasingly used.

For this reason, various low-GWP mixed refrigerants that can replace R410A have been proposed (WO 2015/186557).

Summary of Invention

Technical Problem

The present inventors performed independent examination and conceived of the idea that no prior art had developed refrigerant compositions that have three types of performance, i.e., a refrigerating capacity (also referred to as "cooling capacity" and "capacity") that is equivalent to or higher than that of R410A, a sufficiently low GWP, and a lower flammability (Class 2L) according to the American Society of Heating, Refrigerating and Air-Conditioning Engineers (ASHRAE) standard. An object of the present disclosure is to solve this unique problem.

Solution to Problem

The present invention provides a composition comprising a refrigerant comprising $CO_2$, trans-1,2-difluoroethylene (HFO-1132(E)), difluoromethane (R32), and 2,3,3,3-tetrafluoro-1-propene (R1234yf); the composition further containing water, the water content being ≤ 0.1 mass% based on the entire refrigerant, wherein, when the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are within the range of any of the following aspects 1-6:

1. The coordinates (x,y,z) are within the range of a figure surrounded by curves IJ, JK, and KL, and straight lines LB", B"D, DC and CI that connect the points I, J, K, L, B", D and C, or on the above line segments (excluding points on the straight lines B"D and CI):

| | |
|---|---|
| I | (0.0, 72.0, 28.0-w), |
| J | (18.3, 48.5, 33.2-w), |
| K | (36.8, 35.6, 27.6-w), |
| L | (51.7, 28.9, 19.4-w); and |

if

$$0 < w \le 1.2:$$

| | |
|---|---|
| B" | ($-1.5278w^2+2.75w+50.5$, 0.0, $1.5278w^2-3.75w+49.5$), |
| D | ($-2.9167w+40.317$, 0.0, $1.9167w+59.683$), |
| C | (0.0, $-4.9167w+58.317$, $3.9167w+41.683$); |

if

$$1.2 < w \le 4.0:$$

| | |
|---|---|
| B" | (51.6, 0.0, 48.4-w), |
| D | (-2.8226w+40.211, 0.0, 1.8226w+59.789), |
| C | (0.0, $0.1081w^2$-5.169w+58.447, $-0.1081w^2$+4.169w+41.553); |

if

$$4.0 < w \le 7.0:$$

| | |
|---|---|
| B" | (51.6, 0.0, 48.4-w), |
| D | (-2.8w+40.1, 0.0, 1.8w+59.9), |
| C | (0.0, $0.0667w^2$-4.9667w+58.3, $-0.0667w^2$+3.9667w+41.7); |

the curves IJ, JK and KL being represented by the following coordinates:

| | |
|---|---|
| IJ | (x, $0.0236x^2$-1.716x+72, $-0.0236x^2$+0.716x+28-w), |
| JK | (x, $0.0095x^2$-1.2222x+67.676, $-0.0095x^2$+0.2222x+32.324-w), |
| KL | (x, $0.0049x^2$-0.8842x+61.488, $-0.0049x^2$-0.1158x+38.512-w). |

2. The coordinates (x,y,z) are within the range of a figure surrounded by curves IJ and JK, and straight lines KF, FC and CI that connect the points I, J, K, F and C, or on the above line segments (excluding points on the straight line CI):

| | |
|---|---|
| I | (0.0, 72.0, 28.0-w), |
| J | (18.3, 48.5, 33.2-w), |
| K | (36.8, 35.6, 27.6-w), and |

if

$$0 < w \le 1.2:$$

| | |
|---|---|
| F | (-0.0833w+36.717, -4.0833w+5.1833, 3.1666w+58.0997), |
| C | (0.0, -4.9167w+58.317, 3.9167w+41.683); |

if

$$1.2 < w \le 1.3:$$

| | |
|---|---|
| F | (36.6, -3w+3.9, 2w+59.5), |
| C | (0.0, $0.1081w^2$-5.169w+58.447, $-0.1081w^2$+4.169w+41.553); |

or are within the range of a figure surrounded by curves IJ and JK, and straight lines KB', B'D, DC and CI that connect the points I, J, K, B', D and C, or on the above line segments (excluding points on the straight line CI):

| | |
|---|---|
| I | (0.0, 72.0, 28.0-w), |
| J | (18.3, 48.5, 33.2-w), |
| K | (36.8, 35.6, 27.6-w), |
| B' | (36.6, 0.0, -w+63.4), and |

if

$$1.3 < w \leq 4.0:$$

D     (-2.8226w+40.211, 0.0, 1.8226w+59.789),

C     (0.0, $0.1081w^2$-5.169w+58.447, $-0.1081w^2$+4.169w+41.553);

if

$$4.0 < w \leq 7.0:$$

D     (-2.8w+40.1, 0.0, 1.8w+59.9),

C     (0.0, $0.0667w^2$-4.9667w+58.3, $-0.0667w^2$+3.9667w+41.7);

the curves IJ and JK being represented by the following coordinates:

IJ     (x, $0.0236x^2$-1.716x+72, $-0.0236x^2$+0.716x+28-w);

JK     (x, $0.0095x^2$-1.2222x+67.676, $-0.0095x^2$+0.2222x+32.324-w).

3. The coordinates (x,y,z) are within the range of a figure surrounded by curves IJ and JK, and straight lines KF, FC and CI that connect the points I, J, E and C, or on the above line segments (excluding points on the straight line CI):

I     (0.0, 72.0, 28.0-w),

J     (18.3, 48.5, 33.2-w), and

if

$$0 < w \leq 1.2:$$

E     (18.2, $-1.1111w^2$-3.1667w+31.9, $1.1111w^2$+2.1667w+49.9),

C     (0.0, -4.9167w+58.317, 3.9167w+41.683);

if

$$1.2 < w \leq 4.0:$$

E     (-0.0365w+18.26, $0.0623w^2$-4.5381w+31.856, $-0.0623w^2$+3.5746w+49.884),

C     (0.0, $0.1081w^2$-5.169w+58.447, $-0.1081w^2$+4.169w+41.553); or

if

$$4.0 < w \leq 7.0:$$

E     (18.1, $0.0444w^2$-4.3556w+31.411, $-0.0444w^2$+3.3556w+50.489),

C     (0.0, $0.0667w^2$-4.9667w+58.3, $-0.0667w^2$+3.9667w+41.7);

the curve IJ being represented by the coordinates (x, $0.0236x^2$-1.716x+72, $-0.0236x^2$+0.716x+28-w).

4. The coordinates (x,y,z) are

if

$$0 < w \leq 0.6:$$

within the range of a figure surrounded by curves GO and OP, and straight lines PB", B"D and DG that connect the points G, O, P, B", and D, or on the above line segments (excluding points on the straight line B"D):

| | |
|---|---|
| G | $(-5.8333w^2-3.1667w+22.2, 7.0833w^2+1.4167w+26.2, -1.25w^2+0.75w+51.6)$, |
| O | $(36.8, 0.8333w^2+1.8333w+22.6, -0.8333w^2-2.8333w+40.6)$, |
| P | $(51.7, 1.1111w^2+20.5, -1.1111w^2-w+27.8)$, |
| B" | $(-1.5278w^2+2.75w+50.5, 0.0, 1.5278w^2-3.75w+49.5)$, |
| D | $(-2.9167w+40.317, 0.0, 1.9167w+59.683)$; |

the curves GO and OP being represented by the following coordinates:

| | |
|---|---|
| GO | $(x, (0.00487w^2-0.0059w+0.0072)x^2+(-0.279w^2+0.2844w-0.6701)x+3.7639w^2-0.2467w+37.512, 100-w-x-y)$; |
| OP | $(x, (0.0074w^2-0.0133w+0.0064)x^2+ (-0.5839w^2+1.0268w-0.7103)x+11.472w^2-17.455w+40.07, 100-w-x-y)$; |

if

$$0.6 < w \le 1.2:$$

within the range of a figure surrounded by curves GN, NO and OP, and straight lines PB", B"D and DG that connect the points G, N, O, P, B" and D, or on the above line segments (excluding points on the straight line B"D):
points G, O, P, B" and D being as defined above, and N being $(18.2, 0.2778w^2+3w+27.7, -0.2778w^2-4w+54.1)$;
the curve OP being as defined above, and the curves GN and NO being represented by the following coordinates:

| | |
|---|---|
| GN | $(x, (0.0122w^2-0.0113w+0.0313)x^2+(-0.3582w^2+0.1624w-1.4551)x+2.7889w^2+3.7417w+43.824 , 100-w-x-y)$; |
| NO | $(x, (0.00487w^2-0.0059w+0.0072)x^2+(-0.279w^2+0.2844w-0.6701)x+3.7639w^2-0.2467w+37.512, 100-w-x-y)$; |

if

$$1.2 < w \le 4.0:$$

within the range of a figure surrounded by curves MW, WN, NO, and OP, and straight lines PB", B"D, DC, and CM that connect the points M, W, N, O, P, B", D and C, or on the above line segments (excluding points on the straight line B"D and CM):

| | |
|---|---|
| M | $(0.0, -0.3004w^2+2.419w+55.53, 0.3004w^2-3.419w+44.47)$, |
| W | $(10.0, -0.3645w^2+3.5024w+34.422, 0.3645w^2-4.5024w+55.578)$, |
| N | $(18.2, -0.3773w^2+3.319w+28.26, 0.3773w^2-4.319w+53.54)$, |
| O | $(36.8, -0.1392w^2+1.4381w+24.475, 0.1392w^2-2.4381w+38.725)$, |
| P | $(51.7, -0.2381w^2+1.881w+20.186, 0.2381w^2-2.881w+28.114)$, |
| B" | $(51.6, 0.0, -w+48.4)$, |
| D | $(-2.8226w+40.211, 0.0, 1.8226w+59.789)$, |
| C | $(0.0, 0.1081w^2-5.169w+58.447, -0.1081w^2+4.169w+41.553)$; |

the curves MW, WN, NO, and OP being represented by the following coordinates:

| | |
|---|---|
| MW | $(x, (0.0043w^2-0.0359w+0.1509)x^2+(-0.0493w^2+0.4669w-3.6193)x-0.3004w^2+2.419w+55.53, 100-w-x-y)$, |
| WN | $(x, (0.0055w^2-0.0326w+0.0665)x^2+ (-0.1571w^2+0.8981w-2.6274)x+0.6555w^2-2.2153w+54.044, 100-w-x-y)$, |
| NO | $(x, (-0.00062w^2+0.0036w+0.0037)x^2+(0.0375w^2-0.239w-0.4977)x-0.8575w^2+6.4941w+36.078, 100-w-x-y)$, |
| OP | $(x, (-0.000463w^2+0.0024w-0.0011)x^2+(0.0457w^2-0.2581w-0.075)x-1.355w^2+8.749w+27.096, 100-w-x-y)$; and |

if

$$4.0 < w \leq 7.0:$$

within the range of a figure surrounded by curves MW, WN, NO, and OP, and straight lines PB", B"D, DC, and CM that connect the points M, W, N, O, P, B", D and C, or on the above line segments (excluding points on the straight line B"D and CM):

| M | $(0.0, -0.0667w^2+0.8333w+58.133, 0.0667w^2-1.8333w+41.867)$, |
|---|---|
| W | $(10.0, -0.0667w^2+1.1w+39.267, 0.0667w^2-2.1w+50.733)$, |
| N | $(18.2, -0.0889w^2+1.3778w+31.411, 0.0889w^2-2.3778w+50.389)$, |
| O | $(36.8, -0.0444w^2+0.6889w+25.956, 0.0444w^2-1.6889w+37.244)$, |
| P | $(51.7, -0.0667w^2+0.8333w+21.633, 0.0667w^2-1.8333w+26.667)$, |
| B" | $(51.6, 0.0, -w+48.4)$, |
| D | $(-2.8w+40.1, 0.0, 1.8w+59.9)$, |
| C | $(0.0, 0.0667w^2-4.9667w+58.3, -0.0667w^2+3.9667w+41.7)$; |

the curves MW, WN, NO, and OP being represented by the following coordinates:

MW $(x, (0.00357w^2-0.0391w+0.1756)x^2+(-0.0356w^2+0.4178w-3.6422)x-0.0667w^2+0.8333w+58.103, 100-w-x-y)$,

WN $(x, (-0.002061w^2+0.0218w-0.0301)x^2+(0.0556w^2-0.5821w-0.1108)x-0.4158w^2+4.7352w+43.383, 100-w-x-y)$,

NO $(x, 0.0082x^2+(0.0022w^2-0.0345w-0.7521)x-0.1307w^2+2.0247w+42.327, 100-w-x-y)$,

OP $(x, (-0.0006258w^2+0.0066w-0.0153)x^2+(0.0516w^2-0.5478w+0.9894)x-1.074w^2+11.651w+10.992, 100-w-x-y)$.

5. The coordinates (x,y,z) are
if

$$0 < w \leq 0.6:$$

within the range of a figure surrounded by curve GO, and straight lines OF and FG that connect the points G, O and F, or on the above line segments:

| G | $(-5.8333w^2-3.1667w+22.2, 7.0833w^2+1.4167w+26.2, -1.25w^2+0.75w+51.6)$, |
|---|---|
| O | $(36.8, 0.8333w^2+1.8333w+22.6, -0.8333w^2-2.8333w+40.6)$, |
| F | $(-0.0833w+36.717, -4.0833w+5.1833, 3.1666w+58.0997)$, or the above line segments; |

the curve GO being represented by the coordinates $(x, (0.00487w^2-0.0059w+0.0072)x^2+(-0.279w^2+0.2844w-0.6701)x+3.7639w^2-0.2467w+37.512, 100-w-x-y)$;
if

$$0.6 < w \leq 1.2:$$

within the range of a figure surrounded by curves GN and NO, and straight lines OF and FG that connect the points G, N, O and F, or on the above line segments:
points G, O and F being as defined above, and N being $(18.2, 0.2778w^2+3.0w+27.7, -0.2.778w^2-4.0w+54.1)$;
the curves GN and NO being represented by the following coordinates:

GN $(x, (0.0122w^2-0.0113w+0.0313)x^2+(-0.3582w^2+0.1624w-1.4551)x+2.7889w^2+3.7417w+43.824, 100-w-x-y)$;

NO $(x, (0.00487w^2-0.0059w+0.0072)x^2+(-0.279w^2+0.2844w-0.6701)x+3.7639w^2-0.2467w+37.512, 100-w-x-y)$;

if

$$1.2 < w \leq 1.3:$$

within the range of a figure surrounded by curves MW, WN, and NO, and straight lines OF, FC, and CM that connect the points M, W, N, O, F and C, or on the above line segments (excluding points on the straight line CM):

| | |
|---|---|
| M | $(0.0, -0.3004w^2+2.419w+55.53, 0.3004w^2-3.419w+44.47)$, |
| W | $(10.0, -0.3645w^2+3.5024w+34.422, 0.3645w^2-4.5024w+55.578)$, |
| N | $(18.2, -0.3773w^2+3.319w+28.26, 0.3773w^2-4.319w+53.54)$, |
| O | $(36.8, -0.1392w^2+1.4381w+24.475, 0.1392w^2-2.4381w+38.725)$, |
| F | $(36.6, -3w+3.9, 2w+59.5)$, |
| C | $(0.0, 0.1081w^2-5.169w+58.447, -0.1081w^2+4.169w+41.553)$; |

the curves MW, WN and NO being represented by the following coordinates:

| | |
|---|---|
| MW | $(x, (0.0043w^2-0.0359w+0.1509)x^2+(-0.0493w^2+0.4669w-3.6193)x-0.3004w^2+2.419w+55.53, 100-w-x-y)$, |
| WN | $(x, (0.0055w^2-0.0326w+0.0665)x^2+(-0.1571w^2+0.8981w-2.6274)x+0.6555w^2-2.2153w+54.044, 100-w-x-y)$, |
| NO | $(x, (-0.00062w^2+0.0036w+0.0037)x^2+(0.0375w^2-0.239w-0.4977)x-0.8575w^2+6.4941w+36.078, 100-w-x-y)$; |

if

$$1.3 < w \le 4.0:$$

within the range of a figure surrounded by curves MW, WN, and NO, and straight lines OB', B'D, DC, and CM that connect the points M, W, N, O, B', D and C, or on the above line segments (excluding points on the straight line CM):
points M, W, N, O and C being defined as in the case of ($1.2 < w \le 1.3$), and

| | |
|---|---|
| B' | $( 36.6, 0.0, -w+63.4)$, |
| D | $(-2.8226w+40.211, 0.0, 1.8226w+59.789)$, and |

the curves MW, WN and NO being represented by the coordinates as in the case of ($1.2 < w \le 1.3$); and
if

$$4.0<w\le7.0:$$

within the range of a figure surrounded by curves MW, WN, and NO, and straight lines OB', B'D, DC, and CM that connect the points M, W, N, O, F and C, or on the above line segments (excluding points on the straight line CM):

| | |
|---|---|
| M | $(0.0, -0.0667w^2+0.8333w+58.133, 0.0667w^2-1.8333w+41.867)$, |
| W | $(10.0, -0.0667w^2+1.1w+39.267, 0.0667w^2-2.1w+50.733)$, |
| N | $(18. 2, -0.0889w^2+1.3778w+31.411, 0.0889w^2-2.3778w+50.389)$, |
| O | $(36.8, -0.0444w^2+0.6889w+25.956, 0.0444w^2-1.6889w+37.244)$, |
| B' | $(36.6, 0.0, -w+63.4)$, |
| D | $(-2.8w+40. 1, 0.0, 1.8w+59.9)$, |
| C | $(0.0, 0.0667w^2-4.9667w+58.3, -0.0667w^2+3.9667w+41.7)$; |

the curves MW, WN and NO being represented by the following coordinates:

| | |
|---|---|
| MW | $(x, (0.00357w^2-0.0391w+0.1756)x^2+(-0.0356w^2+0.4178w-3.6422)x-0.0667w^2+0.8333w+58.103, 100-w-x-y)$, |
| WN | $(x, (-0.002061w^2+0.0218w-0.0301)x^2+(0.0556w^2-0.5821w-0.1108)x-0.4158w^2+4.7352w+43.383, 100-w-x-y)$, |
| NO | $(x, (0.0082x^2+(0.0022w^2-0.0345w-0.7521)x-0.1307w^2+2.0247w+42.327, 100-w-x-y)$. |

6. The coordinates (x,y,z) are
if

$$1.2 < w \le 4.0:$$

within the range of a figure surrounded by curves MW and WN, and straight lines NE, EC, and CM that connect the points M, W, N, E and C, or on the above line segments (excluding points on the straight line CM):

M       $(0.0, -0.3004w^2+2.419w+55.53, 0.3004w^2-3.419w+44.47)$,
W       $(10.0, -0.3645w^2+3.5024w+34.422, 0.3645w^2-4.5024w+55.578)$,
N       $(18.2, -0.3773w^2+3.319w+28.26, 0.3773w^2-4.319w+53.54)$,
E       $(-0.0365w+18.26, 0.0623w^2-4.5381w+31.856, -0.0623w^2+3.5746w+49.884)$,
C       $(0.0, 0.1081w^2-5.169w+58.447, -0.1081w^2+4.169w+41.553)$;

the curves MW and WN being represented by the following coordinates:

MW      $(x, (0.0043w^2-0.0359w+0.1509)x^2+(-0.0493w^2+0.4669w-3.6193)x-0.3004w^2+2.419w+55.53, 100-w-x-y)$,
WN      $(x, (0.0055w^2-0.0326w+0.0665)x^2+ (-0.1571w^2+0.8981w-2.6274)x+0.6555w^2-2.2153w+54.044, 100-w-x-y)$; or

if

$$4.0<w\le7.0:$$

within the range of a figure surrounded by curves MW and WN, and straight lines NE, EC, and CM that connect the points M, W, N, E and C, or on the above line segments (excluding points on the straight line CM):

M       $(0.0, -0.0667w^2+0.8333w+58.133, 0.0667w^2-1.8333w+41.867)$,
W       $(10.0, -0.0667w^2+1.1w+39.267, 0.0667w^2-2.1w+50.733)$,
N       $18.2, -0.0889w^2+1.3778w+31.411, 0.0889w^2-2.3778w+50.389)$,
E       $(18.1, 0.0444w^2-4.3556w+31.411, -0.0444w^2+3.3556w+50.489)$,
C       $(0.0, 0.0667w^2-4.9667w+58.3, -0.0667w^2+3.9667w+41.7)$;

the curves MW and WN being represented by the following coordinates:

MW  $(x, (0.00357w^2-0.0391w+0.1756)x^2+(-0.0356w^2+0.4178w-3.6422)x-0.0667w^2+0.8333w+58.103, 100-w-x-y)$, and

WN  $(x, (-0.002061w^2+0.0218w-0.0301)x^2+(0.0556w^2-0.5821w-0.1108)x-0.4158w^2+4.7352w+43.383, 100-w-x-y)$.

Furthermore, the present invention provides (i) the use of the above composition as an alternative refrigerant for R410A, (ii) a refrigerating machine comprising the above as a working fluid, and (iii) a method for operating a refrigerating machine, comprising circulating the above composition as a working fluid in a refrigerating machine.
Preferred embodiments of the invention are as defined in the appended dependent claims and/or in the following detailed description.

Advantageous Effects of Invention

The present refrigerant (also referred to as "the present refrigerant") has three types of performance, i.e., a refrigerating capacity that is equivalent to or higher than that of R410A, a sufficiently low GWP, and a lower flammability (Class 2L) according to the ASHRAE standard.

Brief Description of Drawings

Fig. 1 is a schematic view of an apparatus used for the measurement of burning velocity.

Fig. 2 is a diagram showing points and line segments that define the present refrigerant in a ternary composition diagram in which the sum of R32, HFO-1132(E), and R1234yf is 100 mass%.

Fig. 3 is a diagram showing points and line segments that define the present refrigerant in a ternary composition diagram in which the sum of R32, HFO-1132(E), and R1234yf is 99.4 mass% ($CO_2$ content is 0.6 mass%).

Fig. 4 is a diagram showing points and line segments that define the present refrigerant in a ternary composition diagram in which the sum of R32, HFO-1132(E), and R1234yf is 98.8 mass% ($CO_2$ content is 1.2 mass%).

Fig. 5 is a diagram showing points and line segments that define the present refrigerant in a ternary composition diagram in which the sum of R32, HFO-1132(E), and R1234yf is 98.7 mass% ($CO_2$ content is 1.3 mass%).

Fig. 6 is a diagram showing points and line segments that define the present refrigerant in a ternary composition diagram in which the sum of R32, HFO-1132(E), and R1234yf is 97.5 mass% ($CO_2$ content is 2.5 mass%).

Fig. 7 is a diagram showing points and line segments that define the present refrigerant in a ternary composition diagram in which the sum of R32, HFO-1132(E), and R1234yf is 96 mass% ($CO_2$ content is 4 mass%).

Fig. 8 is a diagram showing points and line segments that define the present refrigerant in a ternary composition diagram in which the sum of R32, HFO-1132(E), and R1234yf is 94.5 mass% ($CO_2$ content is 5.5 mass%).

Fig. 9 is a diagram showing points and line segments that define the present refrigerant in a ternary composition diagram in which the sum of R32, HFO-1132(E), and R1234yf is 93 mass% ($CO_2$ content is 7 mass%).

Description of Embodiments

In order to achieve the above object, the present inventors conducted extensive research and found that a mixed refrigerant comprising $CO_2$, R32, HFO-1132(E), and R1234yf has the characteristics described above.

The present disclosure has been completed as a result of further research based on this finding. The present disclosure includes the following embodiments, and in the present specification the following definitions apply.

Definition of Terms

The term "refrigerant" includes at least compounds that are specified in ISO 817 (International Organization for Standardization) and that are given a refrigerant number (ASHRAE number) representing the type of refrigerant with "R" at the beginning, and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC). Examples of non-fluorocarbon compounds include propane (R290), propylene (R1270), butane (R600), isobutane (R600a), carbon dioxide (R744), and ammonia (R717).

The phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration-oil-containing working fluid" so as to distinguish it from the "refrigerant composition."

When the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

The term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

A refrigerant having a "WCF lower flammability" means that the most flammable composition (worst case of formulation for flammability: WCF) has a burning velocity of 10 cm/s or less according to the US ANSI/ASHRAE Standard 34-2013. Further, in the present specification, a refrigerant having "ASHRAE lower flammability" means that the burning velocity of WCF is 10 cm/s or less, that the most flammable fraction composition (worst case of fractionation for flammability: WCFF), which is specified by performing a leakage test during storage, shipping, or use based on ANSI/ASHRAE 34-2013 using WCF, has a burning velocity of 10 cm/s or less, and that flammability classification according to the US ANSI/ASHRAE Standard 34-2013 is determined to be classified as Class 2L.

1. Refrigerant

1.1 Refrigerant Component

The present refrigerant is a mixed refrigerant comprising $CO_2$, R32, HFO-1132(E), and R1234yf.

The present refrigerant has various properties that are desirable as an R410A-alternative refrigerant, i.e., a refrigerating capacity that is equivalent to those of R410A, a sufficiently low GWP, and a lower flammability.

The present refrigerant is as follows. When the mass% of $CO_2$, R32, HFO-1132(E), and R1234yf based on their sum is respectively represented by w, x, y, and z,

coordinates (x,y,z) are within the range of a figure surrounded by curves IJ, JK, and KL, and straight lines LB", B"D, DC and CI that connect the points I, J, K, L, B", D and C, or on the above line segments (excluding points on the straight lines B"D and CI):

| | |
|---|---|
| I | (0.0, 72.0, 28.0-w), |
| J | (18.3, 48.5, 33.2-w), |
| K | (36.8, 35.6, 27.6-w), |
| L | (51.7, 28.9, 19.4-w); and |

if

$$0 < w \le 1.2:$$

| | |
|---|---|
| B" | ($-1.5278w^2+2.75w+50.5$, 0.0, $1.5278w^2-3.75w+49.5$), |
| D | ($-2.9167w+40.317$, 0.0, $1.9167w+59.683$), |
| C | (0.0, $-4.9167w+58.317$, $3.9167w+41.683$); |

if

$$1.2 < w \le 4.0:$$

| | |
|---|---|
| B" | (51.6, 0.0, 48.4-w), |
| D | ($-2.8226w+40.211$, 0.0, $1.8226w+59.789$), |
| C | (0.0, $0.1081w^2-5.169w+58.447$, $-0.1081w^2+4.169w+41.553$); |

if

$$4.0 < w \le 7.0:$$

| | |
|---|---|
| B" | (51.6, 0.0, 48.4-w), |
| D | ($-2.8w+40.1$, 0.0, $1.8w+59.9$), |
| C | (0.0, $0.0667w^2-4.9667w+58.3$, $-0.0667w^2+3.9667w+41.7$); |

the curves IJ, JK and KL being represented by the following coordinates:

IJ      $(x, 0.0236x^2-1.716x+72, -0.0236x^2+0.716x+28-w)$,

JK      $(x, 0.0095x^2-1.2222x+67.676, -0.0095x^2+0.2222x+32.324-w)$,

KL      $(x, 0.0049x^2-0.8842x+61.488, -0.0049x^2-0.1158x+38.512-w)$.

The present refrigerant has a refrigerating capacity ratio of 80% or more and a GWP of 350 or less relative to that of R410A, and further ensures a WCF lower flammability.

The present refrigerant is preferably as follows. When the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are

within the range of a figure surrounded by curves IJ and JK, and straight lines KF, FC and CI that connect the points I, J, K, F and C, or on the above line segments (excluding points on the straight line CI):

I      (0.0, 72.0, 28.0-w),

J      (18.3, 48.5, 33.2-w),

K      (36.8, 35.6, 27.6-w), and

if

$$0 < w \le 1.2:$$

F      (-0.0833w+36.717, -4.0833w+5.1833, 3.1666w+58.0997),

C      (0.0, -4.9167w+58.317, 3.9167w+41.683);

if

$$1.2 < w \le 1.3:$$

F      (36.6, -3w+3.9, 2w+59.5),

C      $(0.0, 0.1081w^2-5.169w+58.447, -0.1081w^2+4.169w+41.553)$;

or are within the range of a figure surrounded by curves IJ and JK, and straight lines KB', B'D, DC and CI that connect the points I, J, K, B', D and C, or on the above line segments (excluding points on the straight line CI):

I      (0.0, 72.0, 28.0-w),

J      (18.3, 48.5, 33.2-w),

K      (36.8, 35.6, 27.6-w),

B'      (36.6, 0.0, -w+63.4), and

if

$$1.3 < w \le 4.0:$$

D      (-2.8226w+40.211, 0.0, 1.8226w+59.789),

C      $(0.0, 0.1081w^2-5.169w+58.447, -0.1081w^2+4.169w+41.553)$;

if

$$4.0 < w \le 7.0:$$

D      (-2.8w+40.1, 0.0, 1.8w+59.9),

C      (0.0, $0.0667w^2$-4.9667w+58.3, $-0.0667w^2$+3.9667w+41.7);

the curves IJ and JK being represented by the following coordinates:

IJ      (x, $0.0236x^2$-1.716x+72, $-0.0236x^2$+0.716x+28-w);

JK      (x, $0.0095x^2$-1.2222x+67.676, $-0.0095x^2$+0.2222x+32.324-w).

When the present refrigerant satisfies the above requirements, it has a refrigerating capacity ratio of 80% or more and a GWP of 250 or less relative to that of R410A, and further ensures a WCF lower flammability.

The present refrigerant is preferably as follows. When the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are within the range of a figure surrounded by curves IJ and JK, and straight lines KF, FC and CI that connect the points I, J, E and C, or on the above line segments (excluding points on the straight line CI):

I      (0.0, 72.0, 28.0-w),

J      (18.3, 48.5, 33.2-w), and

if

$$0 < w \leq 1.2:$$

E      (18.2, $-1.1111w^2$-3.1667w+31.9, $1.1111w^2$+2.1667w+49.9),

C      (0.0, -4.9167w+58.317, 3.9167w+41.683);

if

$$1.2 < w \leq 4.0:$$

E      (-0.0365w+18.26, $0.0623w^2$-4.5381w+31.856, $-0.0623w^2$+3.5746w+49.884),

C      (0.0, $0.1081w^2$-5.169w+58.447, $-0.1081w^2$+4.169w+41.553); or

if

$$4.0 < w \leq 7.0:$$

E      (18.1, $0.0444w^2$-4.3556w+31.411, $-0.0444w^2$+3.3556w+50.489),

C      (0.0, $0.0667w^2$-4.9667w+58.3, $-0.0667w^2$+3.9667w+41.7);

the curve IJ being represented by the coordinates (x, $0.0236x^2$-1.716x+72, $-0.0236x^2$+0.716x+28-w).

When the present refrigerant satisfies the above requirements, it has a refrigerating capacity ratio of 80% or more and a GWP of 125 or less relative to that of R410A, and further ensures a WCF lower flammability.

The present refrigerant is preferably as follows. When the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are if

$$0 < w \leq 0.6:$$

within the range of a figure surrounded by curves GO and OP, and straight lines PB", B"D and DG that connect the points G, O, P, B", and D, or on the above line segments (excluding points on the straight line B"D):

G  $(-5.8333w^2-3.1667w+22.2, 7.0833w^2+1.4167w+26.2, -1.25w^2+0.75w+51.6)$,

O  $(36.8, 0.8333w^2+1.8333w+22.6, -0.8333w^2-2.8333w+40.6)$,

P  $(51.7, 1.1111w^2+20.5, -1.1111w^2-w+27.8)$,

B"  $(-1.5278w^2+2.75w+50.5, 0.0, 1.5278w^2-3.75w+49.5)$,

D  $(-2.9167w+40.317, 0.0, 1.9167w+59.683)$;

the curves GO and OP being represented by the following coordinates:

GO $(x, (0.00487w^2-0.0059w+0.0072)x^2+(-0.279w^2+0.2844w-0.6701)x+3.7639w^2-0.2467w+37.512, 100-w-x-y)$;
OP $(x, (0.0074w^2-0.0133w+0.0064)x^2+(-0.5839w^2+1.0268w-0.7103)x+11.472w^2-17.455w+40.07, 100-w-x-y)$;

if

$$0.6 < w \leq 1.2:$$

within the range of a figure surrounded by curves GN, NO and OP, and straight lines PB", B"D and DG that connect the points G, N, O, P, B" and D, or on the above line segments (excluding points on the straight line B"D):
points G, O, P, B" and D being as defined above, and N being $(18.2, 0.2778w^2+3w+27.7, -0.2778w^2-4w+54.1)$;
the curve OP being as defined above, and the curves GN and NO being represented by the following coordinates:

GN $(x, (0.0122w^2-0.0113w+0.0313)x^2+(-0.3582w^2+0.1624w-1.4551)x+2.7889w^2+3.7417w+43.824 , 100-w-x-y)$;
NO $(x, (0.00487w^2-0.0059w+0.0072)x^2+(-0.279w^2+0.2844w-0.6701)x+3.7639w^2-0.2467w+37.512, 100-w-x-y)$;

if

$$1.2 < w \leq 4.0:$$

within the range of a figure surrounded by curves MW, WN, NO, and OP, and straight lines PB", B"D, DC, and CM that connect the points M, W, N, O, P, B", D and C, or on the above line segments (excluding points on the straight line B"D and CM):

M  $(0.0, -0.3004w^2+2.419w+55.53, 0.3004w^2-3.419w+44.47)$,

W  $(10.0, -0.3645w^2+3.5024w+34.422, 0.3645w^2-4.5024w+55.578)$,

N  $(18.2, -0.3773w^2+3.319w+28.26, 0.3773w^2-4.319w+53.54)$,

O  $(36.8, -0.1392w^2+1.4381w+24.475, 0.1392w^2-2.4381w+38.725)$,

P  $(51.7, -0.2381w^2+1.881w+20.186, 0.2381w^2-2.881w+28.114)$,

B"  $(51.6, 0.0, -w+48.4)$,

D  $(-2.8226w+40.211, 0.0, 1.8226w+59.789)$,

C  $(0.0, 0.1081w^2-5.169w+58.447, -0.1081w^2+4.169w+41.553)$;

the curves MW, WN, NO, and OP being represented by the following coordinates:
MW $(x, (0.0043w^2-0.0359w+0.1509)x^2+(-0.0493w^2+0.4669w-3.6193)x-0.3004w^2+2.419w+55.53, 100-w-x-y)$,
WN $(x, (0.0055w^2-0.0326w+0.0665)x^2+(-0.1571w^2+0.8981w-2.6274)x+0.6555w^2-2.2153w+54.044, 100-w-x-y)$,
NO $(x, (-0.00062w^2+0.0036w+0.0037)x^2+(0.0375w^2-0.239w-0.4977)x-0.8575w^2+6.4941w+36.078, 100-w-x-y)$,
OP $(x, (-0. 000463w^2+0.0024w-0.0011)x^2+(0.0457w^2-0.2581w-0.075)x-1.355w^2+8.749w+27.096, 100-w-x-y)$; and
if

$$4.0 < w \leq 7.0:$$

within the range of a figure surrounded by curves MW, WN, NO, and OP, and straight lines PB", B"D, DC, and CM that connect the points M, W, N, O, P, B", D and C, or on the above line segments (excluding points on the straight line B"D and CM):

| | |
|---|---|
| M | $(0.0, -0.0667w^2+0.8333w+58.133, 0.0667w^2-1.8333w+41.867)$, |
| W | $(10.0, -0.0667w^2+1.1w+39.267, 0.0667w^2-2.1w+50.733)$, |
| N | $(18.2, -0.0889w^2+1.3778w+31.411, 0.0889w^2-2.3778w+50.389)$, |
| O | $(36.8, -0.0444w^2+0.6889w+25.956, 0.0444w^2-1.6889w+37.244)$, |
| P | $(51.7, -0.0667w^2+0.8333w+21.633, 0.0667w^2-1.8333w+26.667)$, |
| B" | $(51.6, 0.0, -w+48.4)$, |
| D | $(-2.8w+40.1, 0.0, 1.8w+59.9)$, |
| C | $(0.0, 0.0667w^2-4.9667w+58.3, -0.0667w^2+3.9667w+41.7)$; |

the curves MW, WN, NO, and OP being represented by the following coordinates:

MW $(x, (0.00357w^2-0.0391w+0.1756)x^2+(-0.0356w^2+0.4178w-3.6422)x-0.0667w^2+0.8333w+58.103, 100-w-x-y)$,
WN $(x, (-0.002061w^2+0.0218w-0.0301)x^2+(0.0556w^2-0.5821w-0.1108)x-0.4158w^2+4.7352w+43.383, 100-w-x-y)$,
NO $(x, 0.0082x^2+(0.0022w^2-0.0345w-0.7521)x-0.1307w^2+2.0247w+42.327, 100-w-x-y)$,
OP $(x, (-0.0006258w^2+0.0066w-0.0153)x^2+(0.0516w^2-0.5478w+0.9894)x-1.074w^2+11.651w+10.992, 100-w-x-y)$.

When the present refrigerant satisfies the above requirements, it has a refrigerating capacity ratio of 80% or more and a GWP of 350 or less relative to that of R410A, and further ensures a ASHRAE lower flammability.

The present refrigerant is preferably as follows. When the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are
if

$$0 < w \leq 0.6:$$

within the range of a figure surrounded by curve GO, and straight lines OF and FG that connect the points G, O and F, or on the above line segments:

G $(-5.8333w^2-3.1667w+22.2, 7.0833w^2+1.4167w+26.2, -1.25w^2+0.75w+51.6)$,
O $(36.8, 0.8333w^2+1.8333w+22.6, -0.8333w^2-2.8333w+40.6)$,
F $(-0.0833w+36.717, -4.0833w+5.1833, 3.1666w+58.0997)$, or the above line segments;

the curve GO being represented by the coordinates $(x, (0.00487w^2-0.0059w+0.0072)x^2+(-0.279w^2+0.2844w-0.6701)x+3.7639w^2-0.2467w+37.512, 100-w-x-y)$;
if

$$0.6 < w \leq 1.2:$$

within the range of a figure surrounded by curves GN and NO, and straight lines OF and FG that connect the points G, N, O and F, or on the above line segments:
points G, O and F being as defined above, and N being $(18.2, 0.2778w^2+3.0w+27.7, -0.2.778w^2-4.0w+54.1)$;
the curves GN and NO being represented by the following coordinates:

GN $(x, (0.0122w^2-0.0113w+0.0313)x^2+(-0.3582w^2+0.1624w-1.4551)x+2.7889w^2+3.7417w+43.824, 100-w-x-y)$;
NO $(x, (0.00487w^2-0.0059w+0.0072)x^2+(-0.279w^2+0.2844w-0.6701)x+3.7639w^2-0.2467w+37.512, 100-w-x-y)$;

if

$$1.2 < w \leq 1.3:$$

within the range of a figure surrounded by curves MW, WN, and NO, and straight lines OF, FC, and CM that connect the points M, W, N, O, F and C, or on the above line segments (excluding points on the straight line CM):

| | |
|---|---|
| M | $(0.0, -0.3004w^2+2.419w+55.53, 0.3004w^2-3.419w+44.47)$, |
| W | $(10.0, -0.3645w^2+3.5024w+34.422, 0.3645w^2-4.5024w+55.578)$, |

(continued)

| | |
|---|---|
| N | (18.2, -0.3773w$^2$+3.319w+28.26, 0.3773w$^2$-4.319w+53.54), |
| O | (36.8, -0.1392w$^2$+1.4381w+24.475, 0.1392w$^2$-2.4381w+38.725), |
| F | (36.6, -3w+3.9, 2w+59.5), |
| C | (0.0, 0.1081w$^2$-5.169w+58.447, -0.1081w$^2$+4.169w+41.553); |

the curves MW, WN and NO being represented by the following coordinates:

MW   (x, (0.0043w$^2$-0.0359w+0.1509)x$^2$+(-0.0493w$^2$+0.4669w-3.6193)x-0.3004w$^2$+2.419w+55.53, 100-w-x-y),

WN   (x, (0.0055w$^2$-0.0326w+0.0665)x$^2$+(-0.1571w$^2$+0.8981w-2.6274)x+0.6555w$^2$-2.2153w+54.044, 100-w-x-y),

NO   (x, (-0.00062w$^2$+0.0036w+0.0037)x$^2$+(0.0375w$^2$-0.239w-0.4977)x-0.8575w$^2$+6.4941w+36.078, 100-w-x-y);

if

$$1.3 < w \leq 4.0:$$

within the range of a figure surrounded by curves MW, WN, and NO, and straight lines OB', B'D, DC, and CM that connect the points M, W, N, O, B', D and C, or on the above line segments (excluding points on the straight line CM): points M, W, N, O and C being defined as in the case of (1.2 < w ≤ 1.3), and

| | |
|---|---|
| B' | ( 36.6, 0.0, -w+63.4), |
| D | (-2.8226w+40.211, 0.0, 1.8226w+59.789), and |

the curves MW, WN and NO being represented by the coordinates as in the case of (1.2 < w ≤ 1.3); and if

$$4.0 < w \leq 7.0:$$

within the range of a figure surrounded by curves MW, WN, and NO, and straight lines OB', B'D, DC, and CM that connect the points M, W, N, O, F and C, or on the above line segments (excluding points on the straight line CM):

| | |
|---|---|
| M | (0.0, -0.0667w$^2$+0.8333w+58.133, 0.0667w$^2$-1.8333w+41.867), |
| W | (10.0, -0.0667w$^2$+1.1w+39.267, 0.0667w$^2$-2.1w+50.733), |
| N | (18. 2, -0.0889w$^2$+1.3778w+31.411, 0.0889w$^2$-2.3778w+50.389), |
| O | (36.8, -0.0444w$^2$+0.6889w+25.956, 0.0444w$^2$-1.6889w+37.244), |
| B' | (36.6, 0.0, -w+63.4), |
| D | (-2.8w+40. 1, 0.0, 1.8w+59.9), |
| C | (0.0, 0.0667w$^2$-4.9667w+58.3, -0.0667w$^2$+3.9667w+41.7); |

the curves MW, WN and NO being represented by the following coordinates:

MW   (x, (0.00357w$^2$-0.0391w+0.1756)x$^2$+(-0.0356w$^2$+0.4178w-3.6422)x-0.0667w$^2$+0.8333w+58.103, 100-w-x-y),

WN   (x, (-0.002061w$^2$+0.0218w-0.0301)x$^2$+(0.0556w$^2$-0.5821w-0.1108)x-0.4158w$^2$+4.7352w+43.383, 100-w-x-y),

NO   (x, (0.0082x$^2$+(0.0022w$^2$-0.0345w-0.7521)x-0.1307w$^2$+2.0247w+42.327, 100-w-x-y).

When the present refrigerant satisfies the above requirements, it has a refrigerating capacity ratio of 80% or more and a GWP of 250 or less relative to that of R410A, and further ensures a ASHRAE lower flammability.

The present refrigerant is preferably as follows. When the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are

if

$$1.2 < w \le 4.0\text{:}$$

within the range of a figure surrounded by curves MW and WN, and straight lines NE, EC, and CM that connect the points M, W, N, E and C, or on the above line segments (excluding points on the straight line CM):

M $\quad$ (0.0, $-0.3004w^2+2.419w+55.53$, $0.3004w^2-3.419w+44.47$),
W $\quad$ (10.0, $-0.3645w^2+3.5024w+34.422$, $0.3645w^2-4.5024w+55.578$),
N $\quad$ (18.2, $-0.3773w^2+3.319w+28.26$, $0.3773w^2-4.319w+53.54$),
E $\quad$ ($-0.0365w+18.26$, $0.0623w^2-4.5381w+31.856$, $-0.0623w^2+3.5746w+49.884$),
C $\quad$ (0.0, $0.1081w^2-5.169w+58.447$, $-0.1081w^2+4.169w+41.553$);

the curves MW and WN being represented by the following coordinates:

MW $\quad$ (x, $(0.0043w^2-0.0359w+0.1509)x^2+(-0.0493w^2+0.4669w-3.6193)x-0.3004w^2+2.419w+55.53$, 100-w-x-y),
WN $\quad$ (x, $(0.0055w^2-0.0326w+0.0665)x^2+(-0.1571w^2+0.8981w-2.6274)x+0.6555w^2-2.2153w+54.044$, 100-w-x-y); or

if

$$4.0<w\le7.0\text{:}$$

within the range of a figure surrounded by curves MW and WN, and straight lines NE, EC, and CM that connect the points M, W, N, E and C, or on the above line segments (excluding points on the straight line CM):

M $\quad$ (0.0, $-0.0667w^2+0.8333w+58.133$, $0.0667w^2-1.8333w+41.867$),
W $\quad$ (10.0, $-0.0667w^2+1.1w+39.267$, $0.0667w^2-2.1w+50.733$),
N $\quad$ 18.2, $-0.0889w^2+1.3778w+31.411$, $0.0889w^2-2.3778w+50.389$),
E $\quad$ (18.1, $0.0444w^2-4.3556w+31.411$, $-0.0444w^2+3.3556w+50.489$),
C $\quad$ (0.0, $0.0667w^2-4.9667w+58.3$, $-0.0667w^2+3.9667w+41.7$);

the curves MW and WN being represented by the following coordinates:

MW $\quad$ (x, $(0.00357w^2-0.0391w+0.1756)x^2+(-0.0356w^2+0.4178w-3.6422)x-0.0667w^2+0.8333w+58.103$, 100-w-x-y), and
WN $\quad$ (x, $(-0.002061w^2+0.0218w-0.0301)x^2+(0.0556w^2-0.5821w-0.1108)x-0.4158w^2+4.7352w+43.383$, 100-w-x-y).

When the present refrigerant satisfies the above requirements, it has a refrigerating capacity ratio of 80% or more and a GWP of 125 or less relative to that of R410A, and further ensures a ASHRAE lower flammability.

The present refrigerant may further comprise other additional refrigerants in addition to $CO_2$, R32, HFO-1132(E), and R1234yf as long as the above properties and effects are not impaired. In this respect, the refrigerant according to the present disclosure preferably comprises $CO_2$, R32, HFO-1132(E), and R1234yf in a total amount of 99.5 mass% or more, more preferably 99.75 mass% or more, and still more preferably 99.9 mass% or more, based on the entire refrigerant.

Additional refrigerants are not particularly limited and can be widely selected. The mixed refrigerant may contain one additional refrigerant, or two or more additional refrigerants.

1.2. Use

The present refrigerant can be preferably used as a working fluid in a refrigerating machine.

The present composition is suitable for use as an alternative refrigerant for R410A.

## 2. Refrigerant Composition

The present refrigerant composition comprises at least the present refrigerant, and can be used for the same use as the present refrigerant. Moreover, the present refrigerant composition can be further mixed with at least a refrigeration oil to thereby obtain a working fluid for a refrigerating machine.

The present refrigerant composition further comprises at least one other component in addition to the present refrigerant. The present refrigerant composition may comprise at least one of the following other components, if necessary. As described above, when the present refrigerant composition is used as a working fluid in a refrigerating machine, it is generally used as a mixture with at least a refrigeration oil. Therefore, it is preferable that the present refrigerant composition does not substantially comprise a refrigeration oil. Specifically, in the present refrigerant composition, the content of the refrigeration oil based on the entire refrigerant composition is preferably 0-1 mass%, and more preferably 0-0.1 mass%.

### 2.1. Water

The present refrigerant composition contains a small amount of water, the water content being 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

### 2.2. Tracer

A tracer is added to the present refrigerant composition at a detectable concentration so that when the refrigerant composition has been diluted, contaminated, or undergone other changes, the tracer can trace the changes.

The present refrigerant composition may comprise a single tracer, or two or more tracers.

The tracer is not limited, and can be suitably selected from commonly used tracers. It is preferable that a compound that cannot be an impurity inevitably mixed into the refrigerant according to the present disclosure is selected as the tracer.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide ($N_2O$). The tracer is particularly preferably a hydrofluorocarbon, a hydrochlorofluorocarbon, a chlorofluorocarbon, a fluorocarbon, a hydrochlorocarbon, a fluorocarbon, or a fluoroether.

Specifically, the following compounds are preferable as the tracer.

FC-14 (tetrafluoromethane, $CF_4$)
HCC-40 (chloromethane, $CH_3Cl$)
HFC-23 (trifluoromethane, $CHF_3$)
HFC-41 (fluoromethane, $CH_3Cl$)
HFC-125 (pentafluoroethane, $CF_3CHF_2$)
HFC-134a (1,1,1,2-tetrafluoroethane, $CF_3CH_2F$)
HFC-134 (1,1,2,2-tetrafluoroethane, $CHF_2CHF_2$)
HFC-143a (1,1,1-trifluoroethane, $CF_3CH_3$)
HFC-143 (1,1,2-trifluoroethane, $CHF_2CH_2F$)
HFC-152a (1,1-difluoroethane, $CHF_2CH_3$)
HFC-152 (1,2-difluoroethane, $CH_2FCH_2F$)
HFC-161 (fluoroethane, $CH_3CH_2F$)
HFC-245fa (1,1,1,3,3-pentafluoropropane, $CF_3CH_2CHF_2$)
HFC-236fa (1,1,1,3,3,3-hexafluoropropane, $CF_3CH_2CF_3$)
HFC-236ea (1,1,1,2,3,3-hexafluoropropane, $CF_3CHFCHF_2$)
HFC-227ea (1,1,1,2,3,3,3-heptafluoropropane, $CF_3CHFCF_3$)
HCFC-22 (chlorodifluoromethane, $CHClF_2$)
HCFC-31 (chlorofluoromethane, $CH_2ClF$)
CFC-1113 (chlorotrifluoroethylene, $CF_2=CClF$)
HFE-125 (trifluoromethyl-difluoromethyl ether, $CF_3OCHF_2$)
HFE-134a (trifluoromethyl-fluoromethyl ether, $CF_3OCH_2F$)
HFE-143a (trifluoromethyl-methyl ether, $CF_3OCH_3$)
HFE-227ea (trifluoromethyl-tetrafluoroethyl ether, $CF_3OCHFCF_3$)

HFE-236fa (trifluoromethyl-trifluoroethyl ether, $CF_3OCH_2CF_3$)

The tracer compound can be present in the refrigerant composition at a total concentration of 10-1000 parts per million by weight (ppm), preferably 30-500 ppm, and most preferably 50-300 ppm.

### 2.3. Ultraviolet Fluorescent Dye

The present refrigerant composition may comprise a single ultraviolet fluorescent dye, or two or more ultraviolet fluorescent dyes.
The ultraviolet fluorescent dye is not limited, and can be suitably selected from commonly used ultraviolet fluorescent dyes.
Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 2.4. Stabilizer

The present refrigerant composition may comprise a single stabilizer, or two or more stabilizers.
The stabilizer is not limited, and can be suitably selected from commonly used stabilizers.
Examples of stabilizers include nitro compounds, ethers, and amines.
Examples of nitro compounds include aliphatic nitro compounds, such as nitromethane and nitroethane; and aromatic nitro compounds, such as nitro benzene and nitro styrene.
Examples of ethers include 1,4-dioxane.
Examples of amines include 2,2,3,3,3-pentafluoropropylamine and diphenylamine.
Examples of stabilizers also include butylhydroxyxylene and benzotriazole.
The content of the stabilizer is not limited. Generally, the content of the stabilizer is preferably 0.01-5 mass%, and more preferably 0.05-2 mass%, based on the entire refrigerant.

### 2.5. Polymerization Inhibitor

The present refrigerant composition - may comprise a single polymerization inhibitor, or two or more polymerization inhibitors.
The polymerization inhibitor is not limited, and can be suitably selected from commonly used polymerization inhibitors.
Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.
The content of the polymerization inhibitor is not limited. Generally, the content of the polymerization inhibitor is preferably 0.01-5 mass%, and more preferably 0.05-2 mass%, based on the entire refrigerant.

## 3. Refrigeration-Oil-Containing Working Fluid

The present refrigeration-oil-containing working fluid - comprises at least the present refrigerant or the present refrigerant composition and a refrigeration oil, for use as a working fluid in a refrigerating machine. Specifically, the present refrigeration-oil-containing working fluid is obtained by mixing a refrigeration oil used in a compressor of a refrigerating machine with the present refrigerant or the present refrigerant composition. The refrigeration-oil-containing working fluid generally comprises 10-50 mass% of refrigeration oil.

### 3.1. Refrigeration Oil

The present composition may comprise a single refrigeration oil, or two or more refrigeration oils.
The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.
The base oil of the refrigeration oil is preferably, for example, at least one member selected from polyalkylene glycols (PAG), polyol esters (POE), and polyvinyl ethers (PVE).
The refrigeration oil may further contain additives in addition to the base oil. The additive may be at least one member selected from antioxidants, extreme-pressure agents, acid scavengers, oxygen scavengers, copper deactivators, rust inhibitors, oil agents, and antifoaming agents.

A refrigeration oil with a kinematic viscosity of (5-400) x $10^{-6}$ m$^2$/s (5-400 cSt) at 40°C is preferable from the standpoint of lubrication.

The present refrigeration-oil-containing working fluid may further optionally contain at least one additive. Examples of additives include compatibilizing agents described below.

### 3.2. Compatibilizing Agent

The present refrigeration-oil-containing working fluid may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

### 4. Method for Operating Refrigerating Machine

The present method for operating a refrigerating machine is a method for operating a refrigerating machine using the present refrigerant.

Specifically, the present method comprises the step of circulating the present refrigerant in a refrigerating machine.

### Examples

The present disclosure is described in more detail below with reference to Examples.

The burning velocity of individual mixed refrigerants of $CO_2$, R32, HFO-1132(E), and R1234yf was measured in accordance with the ANSI/ASHRAE Standard 34-2013. A formulation that shows a burning velocity of 10 cm/s was found by changing the concentration of $CO_2$. Tables 1 and 2 show the formulations found.

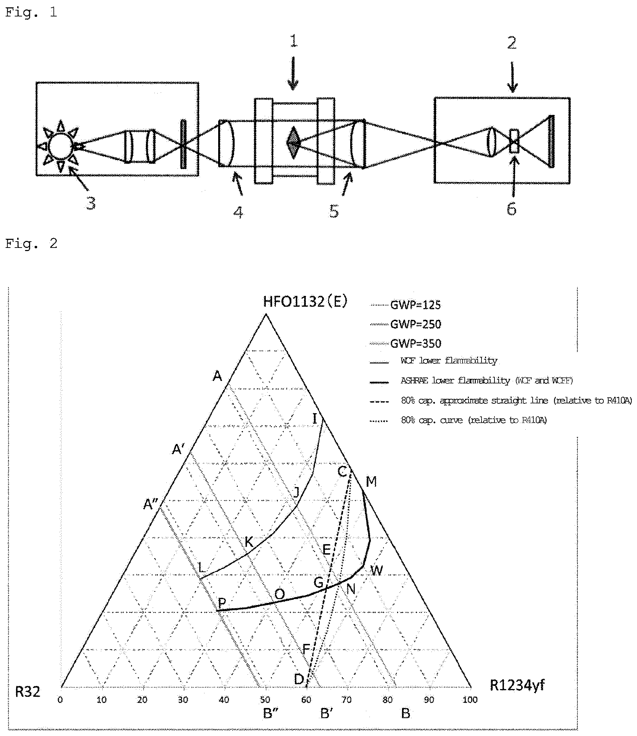

A burning velocity test was performed using the apparatus shown in Fig. 1 in the following manner. First, the mixed refrigerants used had a purity of 99.5% or more, and were degassed by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0-9.9 ms, and the ignition energy was typically about 0.1-1.0 J. The spread of the flame was visualized using a schlieren method. A cylindrical container (inner diameter: 155 mm, length: 198 mm) equipped with two acrylic light-transmission windows was used as the sample cell, and a xenon lamp was used as the light source. Schlieren images of the flame were recorded with a high-speed digital video camera at a frame rate of 600 fps and stored on a PC.

The burning velocity (Su (cm/s)) is the volume of unburned gas in which the flame surface of the unit area is consumed in the unit time, and is calculated according to the following equation.

$$Su = Sb * \rho u / \rho b$$

Sb: Flame propagation velocity (cm/s)

$\rho$u: Adiabatic flame temperature (unburned)

$\rho$b: Adiabatic flame temperature (already burned)

Sb was obtained from schlieren video images, $\rho$u was the measured temperature, and $\rho$b was calculated from the heat of the combustion of the combustion gas and the specific heat of constant pressure.

Each WCFF concentration was obtained by using the WCF concentration as the initial concentration and performing a leak simulation using NIST Standard Reference Database REFLEAK Version 4.0.

Table 1

| 0% CO$_2$ | | | | | | | | |
|---|---|---|---|---|---|---|---|---|
| Item | Unit | Comp. Ex.13 | Comp. Ex.14 | Comp. Ex.15 | Comp. Ex.16 | Comp. Ex.17 | Comp. Ex.18 | Comp. Ex.19 |
| | | I | | J | | K | | L |
| HEO-1132(E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 28.0 | 32.8 | 33.2 | 31.2 | 27.6 | 23.8 | 19.4 |
| CO$_2$ | mass% | 0.0 | 0.0 | 0.0 | 0.0 | 0.0 | 0.0 | 0.0 |
| Burning velocity (WCF) | cm/s | 10 | 10 | 10 | 10 | 10 | 10 | 10 |

| 0.6% CO$_2$ | | | | | | | | |
|---|---|---|---|---|---|---|---|---|
| Item | Unit | Comp. Ex. 37 | Ex.3 | Ex.4 | Ex.5 | Ex.6 | Ex.7 | Ex.8 |
| | | I | | J | | K | | L |
| HEO-1132(E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 27.4 | 32.6 | 32.6 | 30.6 | 27.0 | 23.3 | 10.8 |
| CO$_2$ | mass% | 0.6 | 0.6 | 0.6 | 0.6 | 0.6 | 0.6 | 0.6 |
| Burning velocity (WCF) | cm/s | 10 | 10 | 10 | 10 | 10 | 10 | 10 |

| 1.2% CO$_2$ | | | | | | | | |
|---|---|---|---|---|---|---|---|---|
| Item | Unit | Comp. Ex.49 | Ex.16 | Ex.17 | Ex.18 | Ex.19 | Ex.20 | Ex.21 |
| | | I | | J | | K | | L |
| HEO-1132(E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 26.8 | 31.6 | 32.0 | 30.0 | 26.4 | 22.7 | 18.2 |
| CO$_2$ | mass% | 1.2 | 1.2 | 1.2 | 1.2 | 1.2 | 1.2 | 1.2 |
| Burning velocity (WCF) | cm/s | 10 | 10 | 10 | 10 | 10 | 10 | 10 |

| 1.3% CO$_2$ | | | | | | | | |
|---|---|---|---|---|---|---|---|---|
| Item | Unit | Comp. Ex.59 | Ex.29 | Ex.30 | Ex.31 | Ex.32 | Ex.33 | Ex.34 |
| | | I | | J | | K | | L |
| HEO-1132(E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 26.7 | 31.5 | 31.9 | 29.9 | 26.3 | 22.6 | 18.1 |
| CO$_2$ | mass% | 1.3 | 1.3 | 1.3 | 1.3 | 1.3 | 1.3 | 1.3 |
| Burning velocity (WCF) | cm/s | 10 | 10 | 10 | 10 | 10 | 10 | 10 |

| 2.5% CO$_2$ | | | | | | | | |
|---|---|---|---|---|---|---|---|---|
| Item | Unit | Comp. Ex.69 | Ex. 44 | Ex.45 | Ex.46 | Ex.47 | Ex.48 | Ex.49 |
| | | I | | J | | K | | L |
| HEO-1132(E) | mass% | 72.0 | 57.2 | 48.5 | 41.2 | 35.6 | 32.0 | 28.9 |

(continued)

| 2.5% $CO_2$ | | | | | | | | |
|---|---|---|---|---|---|---|---|---|
| Item | Unit | Comp. Ex.69 | Ex. 44 | Ex.45 | Ex.46 | Ex.47 | Ex.48 | Ex.49 |
| | | I | | J | | K | | L |
| R32 | mass% | 0.0 | 10.0 | 18.3 | 27.6 | 36.8 | 44.2 | 51.7 |
| R1234yf | mass% | 25.5 | 30.3 | 30.7 | 28.7 | 25.1 | 21.3 | 16.9 |
| $CO_2$ | mass% | 2.5 | 2.5 | 2.5 | 2.5 | 2.5 | 2.5 | 2.5 |
| Burning velocity (WCF) | cm/s | 10 | 10 | 10 | 10 | 10 | 10 | 10 |
| 4.0% $CO_2$ | | | | | | | | |
| Item | Unit | Comp. Ex.79 | Ex.59 | Ex.60 | Ex.61 | Ex.62 | Ex.63 | Ex.64 |
| | | I | | J | | K | | L |
| HEO-1132(E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 24.0 | 28.8 | 29.2 | 27.2 | 23.6 | 19.8 | 15.4 |
| $CO_2$ | mass% | 4.0 | 4.0 | 4.0 | 4.0 | 4.0 | 4.0 | 4.0 |
| Burning velocity (WCF) | cm/s | 10 | 10 | 10 | 10 | 10 | 10 | 10 |
| 5.5% $CO_2$ | | | | | | | | |
| Item | Unit | Comp. Ex.89 | Ex.74 | Ex.75 | Ex.76 | Ex.77 | Ex.78 | Ex.79 |
| | | I | | J | | K | | L |
| HEO-1132(E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 22.5 | 27.3 | 27.7 | 25.7 | 22.1 | 18.3 | 13.9 |
| $CO_2$ | mass% | 5.5 | 5.5 | 5.5 | 5.5 | 5.5 | 5.5 | 5.5 |
| Burning velocity (WCF) | cm/s | 10 | 10 | 10 | 10 | 10 | 10 | 10 |
| 7.0% $CO_2$ | | | | | | | | |
| Item | Unit | Comp. Ex. 99 | Ex.89 | Ex.90 | Ex.91 | Ex. 92 | Ex. 93 | Ex. 94 |
| | | I | | J | | K | | L |
| HEO-1132(E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 21.0 | 25.8 | 26.2 | 24.2 | 20.6 | 16.8 | 12.4 |
| $CO_2$ | mass% | 7.0 | 7.0 | 7.0 | 7.0 | 7.0 | 7.0 | 7.0 |
| Burning velocity( WCF) | cm/s | 10 | 10 | 10 | 10 | 10 | 10 | 10 |

Table 2

0% $CO_2$

| Item | | | Comp. Ex.20 M | Comp. Ex.21 | Comp. Ex.22 W | Comp. Ex.23 | Comp. Ex.24 N | Comp. Ex.25 | Comp. Ex.26 O | Comp. Ex.27 | Comp. Ex.28 P |
|---|---|---|---|---|---|---|---|---|---|---|---|
| WCF | HFO-1132(E) | mass% | 52.6 | 39.2 | 32.4 | 29.3 | 27.7 | 24.5 | 22.6 | 21.2 | 20.5 |
| | R32 | mass% | 0.0 | 5.0 | 10.0 | 14.5 | 18.2 | 27.6 | 36.8 | 44.2 | 51.7 |
| | R1234yf | mass% | 47.4 | 55.8 | 57.6 | 56.2 | 54.1 | 47.9 | 40.6 | 34.6 | 27.8 |
| | $CO_2$ | mass% | 0.0 | 0.0 | 0.0 | 0.0 | 0.0 | 0.0 | 0.0 | 0.0 | 0.0 |
| Leak condition that results in WCFF | | | storage, shipping, -40°C,0% release, gas phase side | storage, shipping, -40°C,0% release, gas phase side | storage, shipping, -40°C,0% release, gas phase side | storage, shipping, -40°C,0% release, gas phase side | storage, shipping, -40°C,0% release, gas phase side | storage, shipping, -40°C,0% release, gas phase side | storage, shipping, -40°C,0% release, gas phase side | storage, shipping, -40°C,0% release, gas phase side | storage, shipping, -40°C,0% release, gas phase side |
| WCFF | HFO-1132(E) | mass% | 72.0 | 57.8 | 48.7 | 43.6 | 40.6 | 34.9 | 31.4 | 29.2 | 27.1 |
| | R32 | mass% | 0.0 | 9.5 | 17.9 | 24.2 | 28.7 | 38.1 | 45.7 | 51.1 | 56.4 |
| | R1234yf | mass% | 28.0 | 32.7 | 33.4 | 32.2 | 30.7 | 27.0 | 23.0 | 19.7 | 16.5 |
| | $CO_2$ | mass% | 0.0 | 0.0 | 0.0 | 0.0 | 0.0 | 0.0 | 0.0 | 0.0 | 0.0 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

0.6% CO$_2$

| Item | | | Comp. Ex.35 | Comp. Ex.38 | Comp. Ex.39 | Comp. Ex.40 | Ex.1 | Ex.10 | Ex.11 | Ex.12 | Ex.13 |
|---|---|---|---|---|---|---|---|---|---|---|---|
| | | | C=M | | W | | N(=E=G) | | O | | P |
| WCF | HFO-1132(E) | mass % | 55.4 | 42.4 | 35.1 | 31.6 | 29.6 | 26.3 | 24.0 | 22.4 | 20.9 |
| | R32 | mass % | 0.0 | 5.0 | 10.0 | 14.5 | 18.2 | 27.6 | 36.8 | 44.0 | 51.7 |
| | R1234yf | mass % | 44.0 | 52.0 | 54.3 | 53.3 | 51.6 | 45.5 | 38.6 | 33.0 | 26.8 |
| | CO$_2$ | mass % | 0.6 | 0.6 | 0.6 | 0.6 | 0.6 | 0.6 | 0.6 | 0.6 | 0.6 |
| Leak condition that results in WCFF | | | storage, shipping, -40℃, 0% release, gas phase side | storage, shipping, -40℃, 0% release, gas phase side | storage, shipping, -40℃, 0% release, gas phase side | storage, shipping, -40℃, 0% release, liquid phase side | storage, shipping, -40℃, 0% release, liquid phase side | storage, shipping, -40℃, 0% release, gas phase side | storage, shipping, -40℃, 0% release, liquid phase side | storage, shipping, -40℃, 0% release, liquid phase side | storage, shipping, -40℃, 0% release, liquid phase side |
| WCFF | HFO-1132(E) | mass % | 72.0 | 58.6 | 49.7 | 44.5 | 41.3 | 35.8 | 32.1 | 29.8 | 27.8 |
| | R32 | mass % | 0.0 | 8.9 | 16.9 | 23.0 | 27.4 | 36.6 | 44.1 | 49.4 | 54.7 |
| | R1234yf | mass % | 2.7 | 29.1 | 30.2 | 29.4 | 28.3 | 24.8 | 21.1 | 18.2 | 14.9 |
| | CO$_2$ | mass % | 3.3 | 3.4 | 3.2 | 3.1 | 3.0 | 2.8 | 2.7 | 2.6 | 2.6 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

1.2% CO$_2$

| Item | | | Comp. Ex.50 | Comp. Ex.51 | Ex.15 | Ex.22 | Ex.23 | Ex.24 | Ex.25 | Ex.26 | Ex.27 |
|---|---|---|---|---|---|---|---|---|---|---|---|
| | | | M | | G=W | | N | | O | | P |
| WCF | HFO-1132(E) | mass % | 58.0 | 45.2 | 38.1 | 34.0 | 31.7 | 27.9 | 25.4 | 23.7 | 22.1 |
| | R32 | mass % | 0.0 | 5.0 | 10.0 | 14.4 | 18.2 | 27.6 | 36.8 | 44.0 | 51.7 |
| | R1234yf | mass % | 40.8 | 48.6 | 50.7 | 48.9 | 48.9 | 43.3 | 36.0 | 31.1 | 25.0 |
| | CO$_2$ | mass % | 1.2 | 1.2 | 1.2 | 1.2 | 1.2 | 1.2 | 1.2 | 1.2 | 1.2 |
| Leak condition that results in WCFF | | | storage, shipping, -40℃, 0% release, gas phase side | storage, shipping, -40℃, 6% release, gas phase side | storage, shipping, -40℃, 6% release, liquid phase side | storage, shipping, -40℃, 4% release, liquid phase side | storage, shipping, -40℃, 4% release, liquid phase side | storage, shipping, -40℃, 4% release, liquid phase side | storage, shipping, -40℃, 4% release, liquid phase side | storage, shipping, -40℃, 4% release, liquid phase side | storage, shipping, -40℃, 4% release, liquid phase side |
| WCFF | HFO-1132(E) | mass % | 72.0 | 59.3 | 50.9 | 45.6 | 42.2 | 36.4 | 32.7 | 30.3 | 28.3 |
| | R32 | mass % | 0.0 | 8.3 | 15.8 | 21.7 | 26.2 | 35.3 | 42.8 | 48.1 | 53.4 |
| | R1234yf | mass % | 24.8 | 28.0 | 28.5 | 27.7 | 26.7 | 23.6 | 20.0 | 17.1 | 13.9 |
| | CO$_2$ | mass % | 3.2 | 4.4 | 4.8 | 5.0 | 4.9 | 4.7 | 4.5 | 4.5 | 4.4 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

1.3% $CO_2$

| Item | | | Comp. Ex.60 | Ex.35 | Ex.36 | Ex.37 | Ex.38 | Ex.39 | Ex.40 | Ex.41 | Ex.42 |
|---|---|---|---|---|---|---|---|---|---|---|---|
| | | | M | | W | | N | | O | | P |
| WCF | HFO-1132(E) | mass % | 58.2 | 45.5 | 38.4 | 34.3 | 31.9 | 28.1 | 25.6 | 23.9 | 22.3 |
| | R32 | mass % | 0.0 | 5.0 | 10.0 | 14.4 | 18.2 | 27.6 | 36.8 | 44.0 | 51.7 |
| | R1234yf | mass % | 40.5 | 48.2 | 50.3 | 50.0 | 48.6 | 43.0 | 36.3 | 30.8 | 24.7 |
| | $CO_2$ | mass % | 1.3 | 1.3 | 1.3 | 1.3 | 1.3 | 1.3 | 1.3 | 1.3 | 1.3 |
| Leak condition that results in WCFF | | | storage, shipping, -40℃, 0% release, gas phase side | storage, shipping, -40℃, 8% release, gas phase side | storage, shipping, -40℃, 6% release, liquid phase side | storage, shipping, -40℃, 6% release, liquid phase side | storage, shipping, -40℃, 6% release, liquid phase side | storage, shipping, -40℃, 4% release, liquid phase side | storage, shipping, -40℃, 4% release, liquid phase side | storage, shipping, -40℃, 4% release, liquid phase side | storage, shipping, -40℃, 4% release, liquid phase side |
| WCFF | HFO-1132(E) | mass % | 72.0 | 59.4 | 51.0 | 45.7 | 42.2 | 36.5 | 32.8 | 30.4 | 28.4 |
| | R32 | mass % | 0.0 | 8.2 | 15.8 | 21.5 | 26.0 | 35.1 | 42.6 | 47.9 | 53.2 |
| | R1234yf | mass % | 25.0 | 27.6 | 28.1 | 27.8 | 26.9 | 26.3 | 19.7 | 16.9 | 13.6 |
| | $CO_2$ | mass % | 3.0 | 4.8 | 5.1 | 5.0 | 4.9 | 5.1 | 4.9 | 4.8 | 4.8 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

Table 3

| 2.5% $CO_2$ | | | | | | | | | | | |
|---|---|---|---|---|---|---|---|---|---|---|---|
| Item | | | Comp. Ex.70 | Ex.50 | Ex.51 | Ex.52 | Ex.53 | Ex.54 | Ex.55 | Ex.56 | Ex. 57 |
| | | | M | | W | | N | | O | | P |
| WCF | HFO-1132 (E) | mass% | 59.7 | 48.1 | 40.9 | 36.9 | 34.2 | 29.9 | 27.2 | 25.2 | 23.4 |
| | R32 | mass% | 0.0 | 5.0 | 10.0 | 14.4 | 18.2 | 27.6 | 36.8 | 44.0 | 51.7 |
| | R1234yf | mass% | 37.8 | 44.4 | 46.6 | 46.2 | 45.1 | 40.0 | 33.5 | 28.1 | 22.4 |
| | $CO_2$ | mass% | 2.5 | 2.5 | 2.5 | 2.5 | 2.5 | 2.5 | 2.5 | 2.5 | 2.5 |
| Leak condition that results in WCFF | | | storage, shipping, -40°C, 26% release, gas phase side | storage, shipping, -40°C, 20% release, gas phase side | storage, shipping, -40°C, 20% release, gas phase side | storage, shipping, -40°C, 20% release, gas phase side | storage, shipping, -40°C, 18% release, liquid phase side | storage, shipping, -40°C, 18% release, liquid phase side | storage, shipping, -40°C, 18% release, liquid phase side | storage, shipping, -40°C, 20% release, gas phase side | storage, shipping, -40°C, 22% release, gas phase side |
| WCFF | HFO-1132 (E) | mass% | 72.0 | 60.3 | 52.1 | 46.9 | 43.2 | 37.1 | 33.2 | 30.6 | 28.3 |
| | R32 | mass% | 0.0 | 7.5 | 14.6 | 20.2 | 24.7 | 34.1 | 41.8 | 47.6 | 53.4 |
| | R1234yf | mass% | 24.9 | 27.4 | 28.4 | 28.0 | 26.7 | 23.4 | 19.7 | 16.9 | 13.8 |
| | $CO_2$ | mass% | 3.1 | 4.8 | 4.9 | 4.9 | 5.4 | 5.4 | 5.4 | 4.9 | 4.5 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

EP 4 375 098 B1

**4.0% CO$_2$**

| Item | | | Comp. Ex.80 | Ex.65 | Ex. 66 | Ex.67 | Ex. 68 | Ex.69 | Ex.70 | Ex. 71 | Ex.72 |
|---|---|---|---|---|---|---|---|---|---|---|---|
| | | | M | | W | | N | | O | | P |
| WCF | HFO-1132 (E) | mass% | 60.4 | 49.6 | 42.6 | 38.3 | 35.5 | 31.0 | 28.0 | 25.9 | 23.9 |
| | R32 | mass% | 0.0 | 5.0 | 10.0 | 14.4 | 18.2 | 27.6 | 36.8 | 44.0 | 51.7 |
| | R1234yf | mass% | 35.6 | 41.4 | 43.4 | 43.3 | 42.3 | 37.4 | 31.2 | 26.1 | 20.4 |
| | CO$_2$ | mass% | 4.0 | 4.0 | 4.0 | 4.0 | 4.0 | 4.0 | 4.0 | 4.0 | 4.0 |
| Leak condition that results in WCFF | | | storage, shipping, -40°C, 32% release, gas phase side | storage, shipping, -40°C, 28% release, gas phase side | storage, shipping, -40°C, 28% release, gas phase side | storage, shipping, -40°C, 28% release, gas phase side | storage, shipping, -40°C, 28% release, gas phase side | storage, shipping, -40°C, 28% release, gas phase side | storage, shipping, -40°C, 32% release, gas phase side | storage, shipping, -40°C, 32% release, gas phase side | storage, shipping, -40°C, 32% release, gas phase side |
| WCFF | HFO-1132 (E) | mass% | 72.0 | 60.9 | 52.9 | 47.5 | 43.8 | 37.4 | 33.1 | 30.5 | 28.1 |
| | R32 | mass% | 0.0 | 7.1 | 13.9 | 19.4 | 23.9 | 33.5 | 41.7 | 47.6 | 53.6 |
| | R1234yf | mass% | 24.5 | 27.0 | 28.0 | 27.8 | 26.9 | 23.6 | 20.5 | 17.2 | 13.5 |
| | CO$_2$ | mass% | 3.5 | 5.0 | 5.2 | 5.3 | 5.4 | 5.5 | 4.7 | 4.7 | 4.8 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

EP 4 375 098 B1

| 5.5% CO$_2$ | | | | | | | | | | | |
|---|---|---|---|---|---|---|---|---|---|---|---|
| Item | | | Comp. Ex.90 | Ex.80 | Ex.81 | Ex.82 | Ex.83 | Ex.84 | Ex.85 | Ex.86 | Ex. 87 |
| | | | M | | W | | N | | O | | P |
| WCF | HFO-1132 (E) | mass% | 60.7 | 50.3 | 43.3 | 39.0 | 36.3 | 31.6 | 28.4 | 26.2 | 24.2 |
| | R32 | mass% | 0.0 | 5.0 | 10.0 | 14.4 | 18.2 | 27.6 | 36.8 | 44.0 | 51.7 |
| | R1234yf | mass% | 33.8 | 39.2 | 41.2 | 41.1 | 40.0 | 35.3 | 29.3 | 24.3 | 18.6 |
| | CO$_2$ | mass% | 5.5 | 5.5 | 5.5 | 5.5 | 5.5 | 5.5 | 5.5 | 5.5 | 5.5 |
| Leak condition that results in WCFF | | | storage, shipping, -40°C, 36% release, gas phase side | storage, shipping, -40°C, 34% release, gas phase side | storage, shipping, -40°C, 34% release, gas phase side | storage, shipping, -40°C, 34% release, gas phase side | storage, shipping, -40°C, 34% release, gas phase side | storage, shipping, -40°C, 36% release, gas phase side | storage, shipping, -40°C, 38% release, gas phase side | storage, shipping, -40°C, 40% release, gas phase side | storage, shipping, -40°C, 40% release, gas phase side |
| WCFF | HFO-1132 (E) | mass% | 72.0 | 61.2 | 53.2 | 47.8 | 44.2 | 37.6 | 33.2 | 30.3 | 27.9 |
| | R32 | mass% | 0.0 | 6.8 | 13.5 | 19.0 | 23.4 | 33.2 | 41.7 | 47.9 | 54.2 |
| | R1234yf | mass% | 24.0 | 27.0 | 28.1 | 27.7 | 26.8 | 23.9 | 20.2 | 17.3 | 13.3 |
| | CO$_2$ | mass% | 4.0 | 5.0 | 5.2 | 5.5 | 5.6 | 5.3 | 4.9 | 4.5 | 4.6 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

EP 4 375 098 B1

| 7.0% CO₂ | | | | | | | | | | | |
|---|---|---|---|---|---|---|---|---|---|---|---|
| Item | | | Comp. Ex. 100 | Ex. 95 | Ex. 96 | Ex. 97 | Ex. 98 | Ex. 99 | Ex. 100 | Ex. 101 | Ex. 102 |
| | | | M | | W | | N | | O | | P |
| WCF | HFO-1132 (E) | mass% | 60.7 | 50.3 | 43.7 | 39.5 | 36.7 | 31.9 | 28.6 | 26.4 | 24.2 |
| | R32 | mass% | 0.0 | 5.0 | 10.0 | 14.4 | 18.2 | 27.6 | 36.8 | 44.0 | 51.7 |
| | R1234yf | mass% | 32.3 | 37.7 | 39.3 | 39.1 | 38.1 | 33.5 | 27.6 | 22.6 | 17.1 |
| | CO₂ | mass% | 7.0 | 7.0 | 7.0 | 7.0 | 7.0 | 7.0 | 7.0 | 7.0 | 7.0 |
| Leak condition that results in WCFF | | | storage, shipping, -40°C, 42% release, gas phase side | storage, shipping, -40°C, 34% release, gas phase side | storage, shipping, -40°C, 38% release, gas phase side | storage, shipping, -40°C, 40% release, gas phase side | storage, shipping, -40°C, 40% release, gas phase side | storage, shipping, -40°C, 42% release, gas phase side | storage, shipping, -40°C, 42% release, gas phase side | storage, shipping, -40°C, 42% release, gas phase side | storage, shipping, -40°C, 44% release, gas phase side |
| WCFF | HFO-1132 (E) | mass% | 72.0 | 61.2 | 53.4 | 48.1 | 44.4 | 37.7 | 33.2 | 30.4 | 27.8 |
| | R32 | mass% | 0.0 | 6.8 | 13.3 | 18.7 | 23.2 | 33.1 | 41.7 | 47.9 | 54.6 |
| | R1234yf | mass% | 24.4 | 27.0 | 27.8 | 28.1 | 27.1 | 24.1 | 19.8 | 16.3 | 12.7 |
| | CO₂ | mass% | 3.6 | 5.0 | 5.5 | 5.1 | 5.3 | 5.1 | 5.3 | 5.4 | 4.9 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

EP 4 375 098 B1

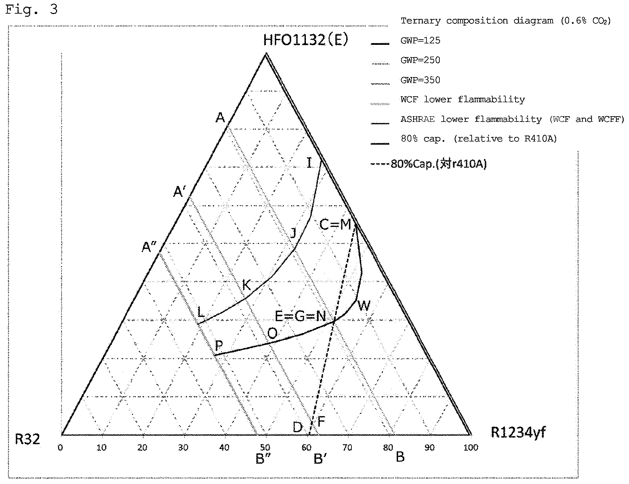

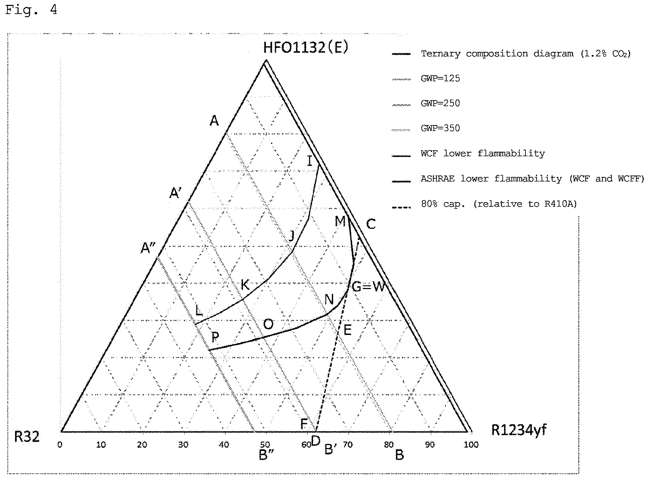

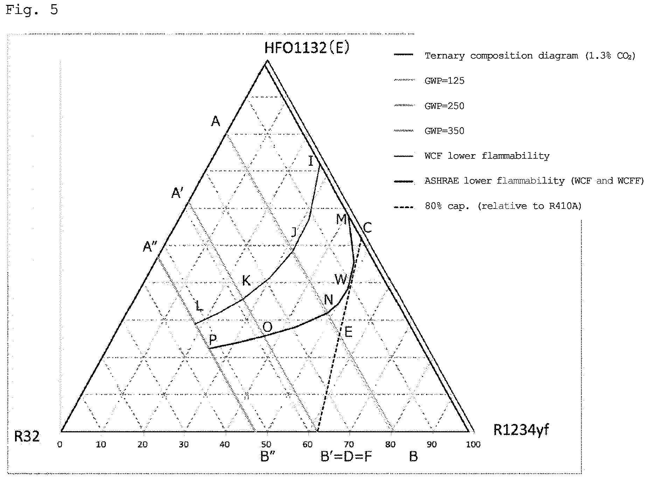

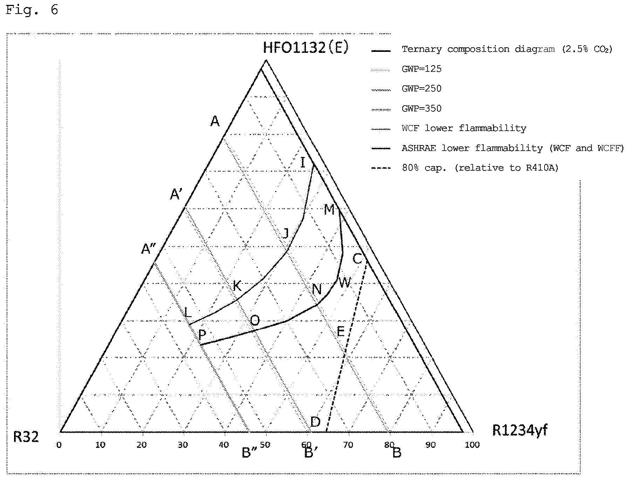

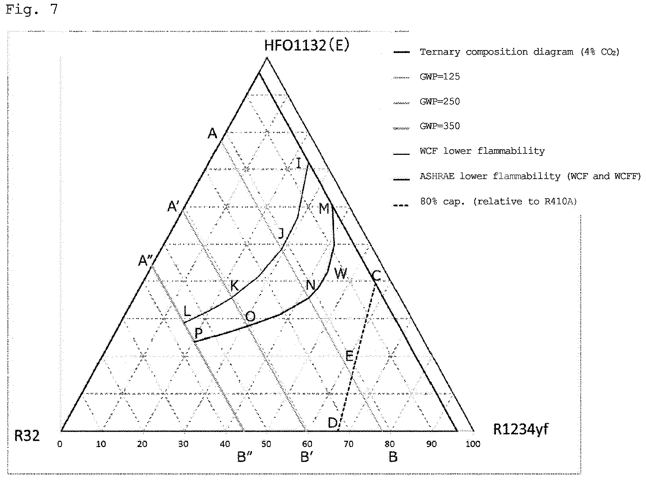

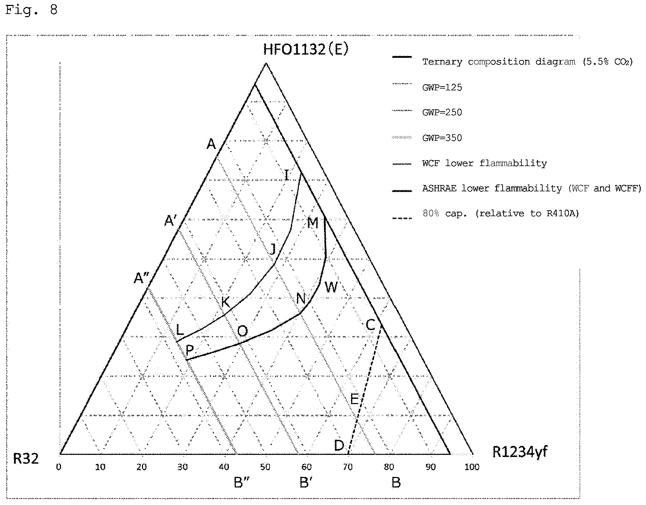

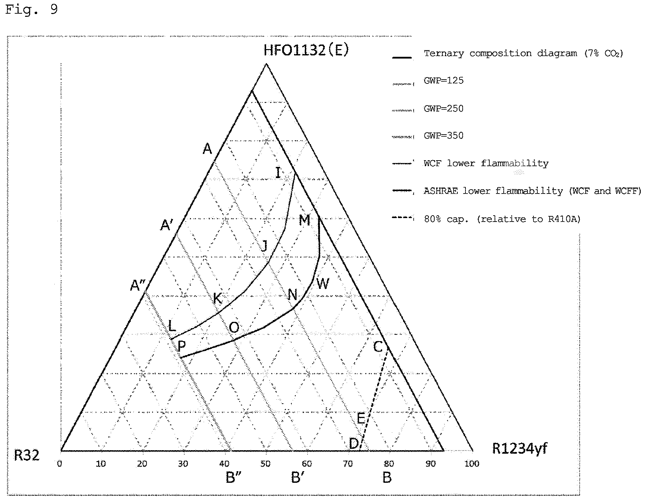

The results indicate that when the mass% of $CO_2$, R32, HFO-1132(E), and R1234yf based on their sum is respectively represented by w, x, y, and z in the ternary composition diagrams of Figs. 2 to 9 in which the sum of R32, HFO-1132(E), and R1234yf is (100-w) mass%, when coordinates (x, y, z) are on or below the straight lines connecting points I, J, K, and L, a WCF lower flammability is achieved.

In the ternary composition diagram of Fig. 2, it is also found that when coordinates (x, y, z) are on or below the straight lines connecting points M, N, O, and P, a ASHRAE lower flammability is achieved.

Mixed refrigerants were prepared by mixing R32, HFO-1132(E), and R1234yf at mass% based on their sum shown in Tables 3 to 10. The coefficient of performance (COP) ratio and the refrigerating capacity ratio of the mixed refrigerants in Tables 3 to 10 relative to those of R410 were determined.

The GWP of compositions each comprising a mixture of R1234yf and R410A (R32 = 50%/R125 = 50%) was evaluated based on the values stated in the Intergovernmental Panel on Climate Change (IPCC), fourth report. The GWP of HFO-1132(E), which was not stated in the report, was assumed to be 1 from HFO-1132a (GWP = 1 or less) and HFO-1123 (GWP = 0.3, described in WO 2015/186557). The refrigerating capacity of compositions each comprising R410A and a mixture of HFO-1132(E), HFO-1123, and R1234yf was determined by performing theoretical refrigeration cycle calculations for the mixed refrigerants using the National Institute of Science and Technology (NIST) and Reference Fluid Thermodynamic and Transport Properties Database (Refprop 9.0) under the following conditions.

Evaporation temperature: 5°C
Condensation temperature: 45°C
Superheating temperature: 5 K
Subcooling temperature: 5 K
$E_{comp}$ (compressive modulus): 0.7 kWh

Tables 3-10 show these values together with the GWP of each mixed refrigerant. Tables 3-10 respectively show the cases in which the $CO_2$ concentrations are 0 mass%, 0.6 mass%, 1.2 mass%, 1.3 mass%, 2.5 mass%, 4 mass%, 5.5 mass%, and 7 mass%.

```
Table 4
```

0% $CO_2$

| Item | Unit | Comp. Ex.1 | Comp. Ex.2 A | Comp. Ex.3 B | Comp. Ex.4 A' | Comp. Ex.5 B' | Comp. Ex.6 A" | Comp. Ex.7 B" | Comp. Ex.8 C | Comp. Ex.9 D |
|---|---|---|---|---|---|---|---|---|---|---|
| HFO-1132(E) | mass% | | 81.6 | 0.0 | 63.1 | 0.0 | 48.2 | 0.0 | 58.3 | 0.0 |
| R32 | mass% | R410A | 18.4 | 18.1 | 36.9 | 36.7 | 51.8 | 51.5 | 0.0 | 40.3 |
| R1234yf | mass% | | 0.0 | 81.9 | 0.0 | 63.3 | 0.0 | 49.5 | 41.7 | 59.7 |
| $CO_2$ | mass% | | 0.0 | 0.0 | 0.0 | 0.0 | 0.0 | 0.0 | 0.0 | 0.0 |
| GWP | – | 2088 | 125 | 125 | 250 | 250 | 350 | 350 | 2 | 274 |
| COP ratio | % (relative to R410A) | 100 | 98.7 | 103.6 | 98.7 | 102.3 | 99.2 | 102.1 | 100.3 | 102.2 |
| Refrigerating capacity ratio | % (relative to R410A) | 100 | 105.3 | 62.5 | 109.9 | 77.5 | 112.1 | 87.0 | 80.0 | 80.0 |
| Condensation glide | °C | 0.1 | 0.3 | 6.8 | 0.1 | 4.5 | 0.0 | 2.7 | 2.9 | 4.0 |

| Item | Unit | Comp. Ex.10 | Comp. Ex.11 | Comp. Ex.12 | Comp. Ex.13 | Comp. Ex.14 | Comp. Ex.15 | Comp. Ex.16 | Comp. Ex.17 | Comp. Ex.18 |
| | | E | F | G | I | | J | | K | |
|---|---|---|---|---|---|---|---|---|---|---|
| HFO-1132(E) | mass% | 31.9 | 5.2 | 26.2 | 72.0 | 57.2 | 48.5 | 41.2 | 35.6 | 32.0 |
| R32 | mass% | 18.2 | 36.7 | 22.2 | 0.0 | 10.0 | 18.3 | 27.6 | 36.8 | 44.2 |
| R1234yf | mass% | 49.9 | 58.1 | 51.6 | 28.0 | 32.8 | 33.2 | 31.2 | 27.6 | 23.8 |
| $CO_2$ | mass% | 0.0 | 0.0 | 0.0 | 0.0 | 0.0 | 0.0 | 0.0 | 0.0 | 0.0 |
| GWP | – | 125 | 250 | 152 | 2 | 69 | 125 | 188 | 250 | 300 |
| COP ratio | % (relative to R410A) | 100.3 | 101.8 | 100.5 | 99.9 | 99.5 | 99.4 | 99.5 | 99.6 | 99.8 |
| Refrigerating capacity ratio | % (relative to R410A) | 82.3 | 80.8 | 82.4 | 86.6 | 88.4 | 90.9 | 94.2 | 97.7 | 100.5 |
| Condensation glide | ℃ | 4.4 | 4.3 | 4.5 | 1.7 | 2.6 | 2.7 | 2.4 | 1.9 | 1.6 |

| Item | Unit | Comp. Ex.19 | Comp. Ex.20 | Comp. Ex.21 | Comp. Ex.22 | Comp. Ex.23 | Comp. Ex.24 | Comp. Ex.25 | Comp. Ex.26 | Comp. Ex.27 | Comp. Ex.28 |
| | | L | M | | W | | N | | O | | P |
|---|---|---|---|---|---|---|---|---|---|---|---|
| HFO-1132(E) | mass% | 28.9 | 52.6 | 39.2 | 32.4 | 29.3 | 27.7 | 24.5 | 22.6 | 21.2 | 20.5 |
| R32 | mass% | 51.7 | 0.0 | 5.0 | 10.0 | 14.5 | 18.2 | 27.6 | 36.8 | 44.2 | 51.7 |
| R1234yf | mass% | 19.4 | 47.4 | 55.8 | 57.6 | 56.2 | 54.1 | 47.9 | 40.6 | 34.6 | 27.8 |
| $CO_2$ | mass% | 0.0 | 0.0 | 0.0 | 0.0 | 0.0 | 0.0 | 0.0 | 0.0 | 0.0 | 0.0 |
| GWP | – | 350 | 2 | 36 | 70 | 100 | 125 | 188 | 250 | 300 | 350 |
| COP ratio | % (relative to R410A) | 100.1 | 100.5 | 100.9 | 100.9 | 100.8 | 100.7 | 100.4 | 100.4 | 100.5 | 100.6 |
| Refrigerating capacity ratio | % (relative to R410A) | 103.3 | 77.1 | 74.8 | 75.6 | 77.8 | 80.0 | 85.5 | 91.0 | 95.0 | 99.1 |
| Condensation glide | ℃ | 1.2 | 3.4 | 4.7 | 5.2 | 5.1 | 4.9 | 4.0 | 3.0 | 2.3 | 1.7 |

## Table 5

0.6% $CO_2$

| Item | Unit | Comp. Ex.29 | Comp. Ex.30 | Comp. Ex.31 | Comp. Ex.32 | Comp. Ex.33 | Comp. Ex.34 | Comp. Ex.35 | Comp. Ex.36 | Ex.1 |
| | | A | B | A' | B' | A" | B" | C=M | D | E=G=N |
|---|---|---|---|---|---|---|---|---|---|---|
| HFO-1132(E) | mass% | 81.0 | 0.0 | 62.5 | 0.0 | 47.6 | 0.0 | 55.4 | 0.0 | 29.6 |
| R32 | mass% | 18.4 | 18.1 | 36.9 | 36.7 | 51.8 | 51.6 | 0.0 | 38.6 | 18.2 |
| R1234yf | mass% | 0.0 | 81.3 | 0.0 | 62.7 | 0.0 | 47.8 | 44.0 | 60.8 | 51.6 |
| $CO_2$ | mass% | 0.6 | 0.6 | 0.6 | 0.6 | 0.6 | 0.6 | 0.6 | 0.6 | 0.6 |
| GWP | – | 125 | 125 | 250 | 250 | 350 | 350 | 2 | 263 | 125 |
| COP ratio | % (relative to R410A) | 98.4 | 103.4 | 98.4 | 102.1 | 99.0 | 102.0 | 100.1 | 102.1 | 100.2 |
| Refrigerating capacity ratio | % (relative to R410A) | 106.5 | 63.7 | 111.1 | 78.7 | 113.1 | 88.6 | 80.0 | 80.0 | 82.4 |
| Condensation glide | ℃ | 0.7 | 7.5 | 0.4 | 4.9 | 0.3 | 3.0 | 3.9 | 4.7 | 5.2 |

| Item | Unit | Ex.2 | Comp. Ex.37 | Ex.3 | Ex.4 | Ex.5 | Ex.6 | Ex.7 | Ex.8 | Comp. Ex.38 |
|---|---|---|---|---|---|---|---|---|---|---|
| | | F | I | | J | | K | | L | |
| HFO-1132(E) | mass% | 2.7 | 72.0 | 57.2 | 48.5 | 41.2 | 35.6 | 32.0 | 28.9 | 42.4 |
| R32 | mass% | 36.7 | 0.0 | 10.0 | 18.3 | 27.6 | 36.8 | 44.2 | 51.7 | 5.0 |
| R1234yf | mass% | 60.0 | 27.4 | 32.6 | 32.6 | 30.6 | 27.0 | 23.3 | 10.8 | 52.0 |
| $CO_2$ | mass% | 0.6 | 0.6 | 0.6 | 0.6 | 0.6 | 0.6 | 0.6 | 0.6 | 0.6 |
| GWP | – | 250 | 2 | 69 | 125 | 188 | 250 | 300 | 350 | 36 |
| COP ratio | % (relative to R410A) | 101.8 | 99.5 | 99.2 | 99.1 | 99.2 | 99.4 | 99.6 | 99.7 | 100.3 |
| Refrigerating capacity ratio | % (relative to R410A) | 80.4 | 88.1 | 89.7 | 92.3 | 95.5 | 99.0 | 101.7 | 108.2 | 77.9 |
| Condensation glide | ℃ | 4.8 | 5.2 | 2.4 | 3.2 | 3.1 | 2.8 | 2.3 | 1.9 | 3.9 |

| Item | Unit | Comp. Ex.39 | Comp. Ex.40 | Ex.9 | Ex.10 | Ex.11 | Ex.12 |
|---|---|---|---|---|---|---|---|
| | | W | | | O | | P |
| HFO-1132(E) | mass% | 35.1 | 31.6 | 26.3 | 24.0 | 22.4 | 20.9 |
| R32 | mass% | 10.0 | 14.5 | 27.6 | 36.8 | 44.0 | 51.7 |
| R1234yf | mass% | 54.3 | 53.3 | 45.5 | 38.6 | 33.0 | 26.8 |
| $CO_2$ | mass% | 0.6 | 0.6 | 0.6 | 0.6 | 0.6 | 0.6 |
| GWP | – | 70 | 100 | 188 | 250 | 299 | 350 |
| COP ratio | % (relative to R410A) | 100.4 | 100.3 | 100.1 | 100.1 | 100.2 | 100.4 |
| Refrigerating capacity ratio | % (relative to R410A) | 78.5 | 80.4 | 87.8 | 93.0 | 96.8 | 100.5 |
| Condensation glide | ℃ | 5.1 | 5.5 | 5.4 | 5.1 | 4.2 | 3.2 |

## Table 6

1.2% $CO_2$

| Item | Unit | Comp. Ex.41 | Comp. Ex.42 | Comp. Ex.43 | Comp. Ex.44 | Comp. Ex.45 | Comp. Ex.46 | Comp. Ex.47 | Comp. Ex.48 | Ex.13 |
|---|---|---|---|---|---|---|---|---|---|---|
| | | A | B | A' | B' | A" | B" | C | D | E |
| HFO-1132(E) | mass% | 80.4 | 0.0 | 61.9 | 0.0 | 47.0 | 0.0 | 52.4 | 0.0 | 26.5 |
| R32 | mass% | 18.4 | 18.1 | 36.9 | 36.6 | 51.8 | 51.6 | 0.0 | 36.8 | 18.2 |
| R1234yf | mass% | 0.0 | 80.7 | 0.0 | 62.2 | 0.0 | 46.9 | 46.4 | 62.0 | 54.1 |
| $CO_2$ | mass% | 1.2 | 1.2 | 1.2 | 1.2 | 1.2 | 1.2 | 1.2 | 1.2 | 1.2 |
| GWP | – | 125 | 125 | 250 | 250 | 350 | 350 | 2 | 251 | 125 |
| COP ratio | % (relative to R410A) | 98.1 | 103.2 | 98.2 | 101.9 | 98.7 | 101.7 | 99.9 | 101.9 | 100.2 |
| Refrigerating capacity ratio | % (relative to R410A) | 107.7 | 65.0 | 112.2 | 79.8 | 114.2 | 89.9 | 80.0 | 80.0 | 82.0 |
| Condensation glide | ℃ | 1.2 | 8.1 | 0.8 | 5.4 | 0.6 | 3.4 | 4.9 | 5.3 | 6.0 |

| Item | Unit | Ex.14 | Ex.15 | Comp. Ex.49 | Ex.16 | Ex.17 | Ex.18 | Ex.19 | Ex.20 | Ex.21 |
| | | F | G=W | I | | J | | K | | L |
|---|---|---|---|---|---|---|---|---|---|---|
| HFO-1132(E) | mass% | 0.3 | 38.1 | 72.0 | 57.2 | 48.5 | 41.2 | 35.6 | 32.0 | 28.9 |
| R32 | mass% | 36.6 | 10.0 | 0.0 | 10.0 | 18.3 | 27.6 | 36.8 | 44.2 | 51.7 |
| R1234yf | mass% | 61.9 | 50.7 | 26.8 | 31.6 | 32.0 | 30.0 | 26.4 | 22.7 | 18.2 |
| $CO_2$ | mass% | 1.2 | 1.2 | 1.2 | 1.2 | 1.2 | 1.2 | 1.2 | 1.2 | 1.2 |
| GWP | – | 250 | 70 | 2 | 69 | 125 | 188 | 250 | 300 | 350 |
| COP ratio | % (relative to R410A) | 101.9 | 99.9 | 99.2 | 98.9 | 98.8 | 98.9 | 99.1 | 99.4 | 99.6 |
| Refrigerating capacity ratio | % (relative to R410A) | 80.0 | 81.6 | 89.7 | 91.3 | 93.7 | 96.9 | 100.3 | 103.0 | 105.8 |
| Condensation glide | ℃ | 5.4 | 5.7 | 3.1 | 3.6 | 3.6 | 3.2 | 2.6 | 2.2 | 1.8 |

| Item | Unit | Comp. Ex.50 | Comp. Ex.51 | Ex.22 | Ex.23 | Ex.24 | Ex.25 | Ex.26 | Ex.27 |
| | | M | | | N | | O | | P |
|---|---|---|---|---|---|---|---|---|---|
| HFO-1132(E) | mass% | 58.0 | 45.2 | 34.0 | 31.7 | 27.9 | 25.4 | 23.7 | 22.1 |
| R32 | mass% | 0.0 | 5.0 | 14.4 | 18.2 | 27.6 | 36.8 | 44.0 | 51.7 |
| R1234yf | mass% | 40.8 | 48.6 | 48.9 | 48.9 | 43.3 | 36.0 | 31.1 | 25.0 |
| $CO_2$ | mass% | 1.2 | 1.2 | 1.2 | 1.2 | 1.2 | 1.2 | 1.2 | 1.2 |
| GWP | – | 2 | 36 | 100 | 125 | 188 | 250 | 298 | 350 |
| COP ratio | % (relative to R410A) | 99.6 | 99.8 | 99.8 | 99.8 | 99.7 | 99.7 | 99.9 | 100.0 |
| Refrigerating capacity ratio | % (relative to R410A) | 82.9 | 80.9 | 83.6 | 84.9 | 90.0 | 95.3 | 98.7 | 102.4 |
| Condensation glide | ℃ | 4.3 | 5.4 | 5.6 | 5.4 | 4.4 | 3.4 | 2.8 | 2.2 |

## Table 7

1.3% $CO_2$

| Item | Unit | Comp. Ex.52 | Comp. Ex.53 | Comp. Ex.54 | Comp. Ex.55 | Comp. Ex.56 | Comp. Ex.57 | Comp. Ex.58 | Ex.28 | Comp. Ex.59 |
| | | A | B | A' | B'=D=F | A" | B" | C | E | I |
|---|---|---|---|---|---|---|---|---|---|---|
| HFO-1132(E) | mass% | 00.3 | 0.0 | 61.8 | 0.0 | 46.9 | 0.0 | 51.9 | 26.1 | 72.0 |
| R32 | mass% | 18.4 | 18.1 | 36.9 | 36.6 | 51.8 | 51.6 | 0.0 | 18.2 | 0.0 |
| R1234yf | mass% | 0.0 | 80.6 | 0.0 | 62.1 | 0.0 | 47.1 | 46.8 | 54.4 | 26.7 |
| $CO_2$ | mass% | 1.3 | 1.3 | 1.3 | 1.3 | 1.3 | 1.3 | 1.3 | 1.3 | 1.3 |
| GWP | – | 125 | 125 | 250 | 250 | 350 | 350 | 2 | 125 | 2 |
| COP ratio | % (relative to R410A) | 98.0 | 103.2 | 98.1 | 101.9 | 98.7 | 101.7 | 99.8 | 100.2 | 99.1 |
| Refrigerating capacity ratio | % (relative to R410A) | 107.9 | 65.2 | 112.3 | 80.0 | 114.3 | 90.0 | 80.0 | 82.0 | 89.9 |
| Condensation glide | ℃ | 1.2 | 8.2 | 0.8 | 5.4 | 0.7 | 3.4 | 5.1 | 6.1 | 3.2 |

| Item | Unit | Ex.29 | Ex.30 | Ex.31 | Ex.32 | Ex.33 | Ex.34 | Comp. Ex.60 | Ex.35 | Ex.36 |
|---|---|---|---|---|---|---|---|---|---|---|
|  |  |  | J |  | K |  | L | M |  | W |
| HFO-1132(E) | mass% | 57.2 | 48.5 | 41.2 | 35.6 | 32.0 | 28.9 | 58.2 | 45.5 | 38.4 |
| R32 | mass% | 10.0 | 18.3 | 27.6 | 36.8 | 44.2 | 51.7 | 0.0 | 5.0 | 10.0 |
| R1234yf | mass% | 31.5 | 31.9 | 29.9 | 26.3 | 22.6 | 18.1 | 40.5 | 48.2 | 50.3 |
| $CO_2$ | mass% | 1.3 | 1.3 | 1.3 | 1.3 | 1.3 | 1.3 | 1.3 | 1.3 | 1.3 |
| GWP | – | 69 | 125 | 188 | 250 | 300 | 350 | 2 | 36 | 70 |
| COP ratio | % (relative to R410A) | 98.9 | 98.8 | 98.9 | 99.1 | 99.3 | 99.6 | 99.5 | 99.8 | 99.8 |
| Refrigerating capacity ratio | % (relative to R410A) | 91.5 | 93.9 | 97.1 | 100.5 | 103.2 | 106.0 | 83.3 | 81.3 | 82.0 |
| Condensation glide | ℃ | 3.7 | 3.6 | 3.2 | 2.7 | 2.3 | 1.8 | 4.4 | 5.4 | 5.8 |

| Item | Unit | Ex.37 | Ex.38 | Ex.39 | Ex.40 | Ex.41 | Ex.42 |
|---|---|---|---|---|---|---|---|
|  |  |  | N |  | O |  | P |
| HFO-1132(E) | mass% | 34.3 | 31.9 | 28.1 | 25.6 | 23.9 | 22.3 |
| R32 | mass% | 14.4 | 18.2 | 27.6 | 36.8 | 44.0 | 51.7 |
| R1234yf | mass% | 50.0 | 48.6 | 43.0 | 36.3 | 30.8 | 24.7 |
| $CO_2$ | mass% | 1.3 | 1.3 | 1.3 | 1.3 | 1.3 | 1.3 |
| GWP | – | 100 | 125 | 188 | 250 | 298 | 350 |
| COP ratio | % (relative to R410A) | 99.8 | 99.8 | 99.6 | 99.7 | 99.8 | 100.0 |
| Refrigerating capacity ratio | % (relative to R410A) | 83.5 | 85.2 | 90.3 | 95.4 | 99.0 | 102.7 |
| Condensation glide | ℃ | 6 | 5.4 | 4.5 | 3.5 | 2.9 | 2.3 |

## Table 8

2.5% $CO_2$

| Item | Unit | Comp. Ex.61 | Comp. Ex.62 | Comp. Ex.63 | Comp. Ex.64 | Comp. Ex.65 | Comp. Ex.66 | Comp. Ex.67 | Comp. Ex.68 | Ex.43 |
|---|---|---|---|---|---|---|---|---|---|---|
|  |  | A | B | A' | B' | A" | B" | C | D | E |
| HFO-1132(E) | mass% | 79.1 | 0.0 | 60.6 | 0.0 | 45.7 | 0.0 | 46.2 | 0.0 | 20.9 |
| R32 | mass% | 18.4 | 18.1 | 36.9 | 36.6 | 51.8 | 51.6 | 0.0 | 33.2 | 18.2 |
| R1234yf | mass% | 0.0 | 79.4 | 0.0 | 60.9 | 0.0 | 45.9 | 51.3 | 64.3 | 58.4 |
| $CO_2$ | mass% | 2.5 | 2.5 | 2.5 | 2.5 | 2.5 | 2.5 | 2.5 | 2.5 | 2.5 |
| GWP | – | 125 | 125 | 250 | 250 | 350 | 350 | 3 | 227 | 125 |
| COP ratio | % (relative to R410A) | 97.4 | 102.7 | 97.6 | 101.5 | 98.3 | 101.3 | 99.6 | 101.6 | 100.2 |
| Refrigerating capacity ratio | % (relative to R410A) | 110.3 | 67.8 | 114.5 | 82.5 | 116.4 | 92.5 | 80.0 | 80.0 | 81.7 |
| Condensation glide | ℃ | 2.0 | 9.5 | 1.5 | 6.3 | 1.3 | 4.1 | 7.1 | 6.9 | 7.6 |

| Item | Unit | Comp. Ex.69 I | Ex.44 | Ex.45 J | Ex.46 | Ex.47 K | Ex.48 | Ex.49 L | Comp. Ex.70 M | Ex.50 |
|---|---|---|---|---|---|---|---|---|---|---|
| HFO-1132(E) | mass% | 72.0 | 57.2 | 48.5 | 41.2 | 35.6 | 32.0 | 28.9 | 59.7 | 48.1 |
| R32 | mass% | 0.0 | 10.0 | 18.3 | 27.6 | 36.8 | 44.2 | 51.7 | 0.0 | 5.0 |
| R1234yf | mass% | 25.5 | 30.3 | 30.7 | 28.7 | 25.1 | 21.3 | 16.9 | 37.8 | 44.4 |
| $CO_2$ | mass% | 2.5 | 2.5 | 2.5 | 2.5 | 2.5 | 2.5 | 2.5 | 2.5 | 2.5 |
| GWP | – | 2 | 69 | 125 | 188 | 250 | 300 | 350 | 2 | 36 |
| COP ratio | % (relative to R410A) | 98.4 | 98.2 | 98.2 | 98.4 | 98.6 | 98.9 | 99.1 | 98.8 | 99.0 |
| Refrigerating capacity ratio | % (relative to R410A) | 93.1 | 94.5 | 96.7 | 99.8 | 103.1 | 105.9 | 108.6 | 87.1 | 85.7 |
| Condensation glide | ℃ | 4.4 | 4.7 | 4.5 | 3.9 | 3.3 | 2.8 | 2.4 | 5.6 | 6.3 |

| Item | Unit | Ex.51 W | Ex.52 | Ex.53 N | Ex.54 | Ex.55 O | Ex.56 | Ex.57 P |
|---|---|---|---|---|---|---|---|---|
| HFO-1132(E) | mass% | 40.9 | 36.9 | 34.2 | 29.9 | 27.2 | 25.2 | 23.4 |
| R32 | mass% | 10.0 | 14.4 | 18.2 | 27.6 | 36.8 | 44.0 | 51.7 |
| R1234yf | mass% | 46.6 | 46.2 | 45.1 | 40.0 | 33.5 | 28.1 | 22.4 |
| CO2 | mass% | 2.5 | 2.5 | 2.5 | 2.5 | 2.5 | 2.5 | 2.5 |
| GWP | – | 70 | 99 | 125 | 188 | 250 | 298 | 350 |
| COP ratio | % (relative to R410A) | 99.1 | 99.1 | 99.1 | 99.0 | 99.1 | 99.3 | 99.5 |
| Refrigerating capacity ratio | % (relative to R410A) | 86.2 | 87.7 | 89.2 | 94.0 | 98.8 | 102.4 | 105.8 |
| Condensation glide | ℃ | 6 | 6.3 | 6.0 | 5.0 | 4.0 | 3.4 | 2.8 |

## Table 9

4% $CO_2$

| Item | Unit | Comp. Ex.71 A | Comp. Ex.72 B | Comp. Ex.73 A' | Comp. Ex.74 B' | Comp. Ex.75 A" | Comp. Ex.76 B" | Comp. Ex.77 C | Comp. Ex.78 D | Ex.58 E |
|---|---|---|---|---|---|---|---|---|---|---|
| HFO-1132(E) | mass% | 77.6 | 0.0 | 59.1 | 0.0 | 44.2 | 0.0 | 39.5 | 0.0 | 14.7 |
| R32 | mass% | 18.4 | 18.1 | 36.9 | 36.6 | 51.8 | 51.6 | 0.0 | 28.9 | 18.1 |
| R1234yf | mass% | 0.0 | 77.9 | 0.0 | 59.4 | 0.0 | 44.4 | 56.5 | 67.1 | 63.2 |
| $CO_2$ | mass% | 4.0 | 4.0 | 4.0 | 4.0 | 4.0 | 4.0 | 4.0 | 4.0 | 4.0 |
| GWP | – | 125 | 125 | 250 | 250 | 350 | 350 | 3 | 198 | 125 |
| COP ratio | % (relative to R410A) | 96.7 | 102.2 | 97.0 | 101.0 | 97.7 | 100.8 | 99.4 | 101.3 | 100.4 |
| Refrigerating capacity ratio | % (relative to R410A) | 113.3 | 71.2 | 117.3 | 85.7 | 118.9 | 95.6 | 80.0 | 80.0 | 81.2 |
| Condensation glide | ℃ | 3.0 | 10.9 | 2.2 | 7.2 | 2.0 | 5.0 | 9.6 | 8.7 | 9.6 |

| Item | Unit | Comp. Ex.79 (I) | Ex.59 | Ex.60 (J) | Ex.61 | Ex.62 (K) | Ex.63 | Ex.64 (L) | Comp. Ex.80 (M) | Ex.65 |
|---|---|---|---|---|---|---|---|---|---|---|
| HFO-1132(E) | mass% | 72.0 | 57.2 | 48.5 | 41.2 | 35.6 | 32.0 | 28.9 | 60.4 | 49.6 |
| R32 | mass% | 0.0 | 10.0 | 18.3 | 27.6 | 36.8 | 44.2 | 51.7 | 0.0 | 5.0 |
| R1234yf | mass% | 24.0 | 28.8 | 29.2 | 27.2 | 23.6 | 19.8 | 15.4 | 35.6 | 41.4 |
| $CO_2$ | mass% | 4.0 | 4.0 | 4.0 | 4.0 | 4.0 | 4.0 | 4.0 | 4.0 | 4.0 |
| GWP | - | 2 | 69 | 125 | 188 | 250 | 300 | 350 | 2 | 36 |
| COP ratio | % (relative to R410A) | 97.6 | 97.5 | 97.5 | 97.7 | 98.0 | 98.3 | 98.6 | 98.0 | 98.2 |
| Refrigerating capacity ratio | % (relative to R410A) | 97.0 | 98.1 | 100.2 | 103.2 | 106.5 | 109.1 | 111.8 | 91.3 | 90.2 |
| Condensation glide | ℃ | 5.8 | 5.8 | 5.4 | 4.7 | 4.0 | 3.5 | 3.1 | 6.9 | 7.4 |

| Item | Unit | Ex.66 (W) | Ex.67 | Ex.68 (N) | Ex.69 | Ex.70 (O) | Ex.71 | Ex.72 (P) |
|---|---|---|---|---|---|---|---|---|
| HFO-1132(E) | mass% | 42.6 | 38.3 | 35.5 | 31.0 | 28.0 | 25.9 | 23.9 |
| R32 | mass% | 10.0 | 14.4 | 18.2 | 27.6 | 36.8 | 44.0 | 51.7 |
| R1234yf | mass% | 43.4 | 43.3 | 42.3 | 37.4 | 31.2 | 26.1 | 20.4 |
| $CO_2$ | mass% | 4.0 | 4.0 | 4.0 | 4.0 | 4.0 | 4.0 | 4.0 |
| GWP | - | 70 | 99 | 125 | 188 | 250 | 298 | 350 |
| COP ratio | % (relative to R410A) | 98.3 | 98.3 | 98.3 | 98.3 | 98.5 | 98.7 | 98.9 |
| Refrigerating capacity ratio | % (relative to R410A) | 90.7 | 92.0 | 93.4 | 97.9 | 102.5 | 105.9 | 109.3 |
| Condensation glide | ℃ | 7 | 7.2 | 6.9 | 5.8 | 4.7 | 4.0 | 3.4 |

## Table 10

5.5% $CO_2$

| Item | Unit | Comp. Ex.81 (A) | Comp. Ex.82 (B) | Comp. Ex.83 (A') | Comp. Ex.84 (B') | Comp. Ex.85 (A") | Comp. Ex.86 (B") | Comp. Ex.87 (C) | Comp. Ex.88 (D) | Ex.73 (E) |
|---|---|---|---|---|---|---|---|---|---|---|
| HFO-1132(E) | mass% | 76.1 | 0.0 | 57.6 | 0.0 | 42.7 | 0.0 | 33.0 | 0.0 | 8.8 |
| R32 | mass% | 18.4 | 18.1 | 36.9 | 36.6 | 51.8 | 51.6 | 0.0 | 24.7 | 18.1 |
| R1234yf | mass% | 0.0 | 76.4 | 0.0 | 57.9 | 0.0 | 42.9 | 61.5 | 69.8 | 67.6 |
| $CO_2$ | mass% | 5.5 | 5.5 | 5.5 | 5.5 | 5.5 | 5.5 | 5.5 | 5.5 | 5.5 |
| GWP | - | 125 | 125 | 250 | 250 | 350 | 350 | 3 | 170 | 125 |
| COP ratio | % (relative to R410A) | 96.0 | 101.8 | 96.4 | 100.5 | 97.2 | 100.3 | 99.4 | 101.2 | 100.6 |
| Refrigerating capacity ratio | % (relative to R410A) | 116.2 | 74.6 | 119.9 | 88.9 | 121.5 | 98.7 | 80.0 | 80.0 | 80.8 |
| Condensation glide | ℃ | 3.7 | 12.3 | 2.9 | 8.2 | 2.6 | 5.8 | 12.1 | 10.8 | 11.5 |

| Item | Unit | Comp.Ex.89<br>I | Ex.74 | Ex.75<br>J | Ex.76 | Ex.77<br>K | Ex.78 | Ex.79<br>L | Comp.Ex.90<br>M | Ex.80 |
|---|---|---|---|---|---|---|---|---|---|---|
| HFO-1132(E) | mass% | 72.0 | 57.2 | 48.5 | 41.2 | 35.6 | 32.0 | 28.9 | 60.7 | 50.3 |
| R32 | mass% | 0.0 | 10.0 | 18.3 | 27.6 | 36.8 | 44.2 | 51.7 | 0.0 | 5.0 |
| R1234yf | mass% | 22.5 | 27.3 | 27.7 | 25.7 | 22.1 | 18.3 | 13.9 | 33.8 | 39.2 |
| $CO_2$ | mass% | 5.5 | 5.5 | 5.5 | 5.5 | 5.5 | 5.5 | 5.5 | 5.5 | 5.5 |
| GWP | – | 2 | 69 | 125 | 188 | 250 | 299 | 350 | 2 | 36 |
| COP ratio | % (relative to R410A) | 96.8 | 96.8 | 96.9 | 97.1 | 97.4 | 97.7 | 98.0 | 97.2 | 97.4 |
| Refrigerating capacity ratio | % (relative to R410A) | 100.9 | 101.8 | 103.8 | 106.6 | 109.8 | 112.4 | 115.0 | 95.4 | 94.3 |
| Condensation glide | ℃ | 6.9 | 6.7 | 6.2 | 5.4 | 4.7 | 4.1 | 3.7 | 8.1 | 8.5 |

| Item | Unit | Ex.81<br>W | Ex.82 | Ex.83<br>N | Ex.84 | Ex.85<br>O | Ex.86 | Ex.87<br>P |
|---|---|---|---|---|---|---|---|---|
| HFO-1132(E) | mass% | 43.3 | 39.0 | 36.3 | 31.6 | 28.4 | 26.2 | 24.2 |
| R32 | mass% | 10.0 | 14.4 | 18.2 | 27.6 | 36.8 | 44.0 | 51.7 |
| R1234yf | mass% | 41.2 | 41.1 | 40.0 | 35.3 | 29.3 | 24.3 | 18.6 |
| $CO_2$ | mass% | 5.5 | 5.5 | 5.5 | 5.5 | 5.5 | 5.5 | 5.5 |
| GWP | – | 70 | 99 | 125 | 188 | 250 | 298 | 350 |
| COP ratio | % (relative to R410A) | 97.5 | 97.6 | 97.6 | 97.7 | 97.9 | 98.1 | 98.3 |
| Refrigerating capacity ratio | % (relative to R410A) | 94.7 | 95.9 | 97.4 | 101.6 | 106.1 | 109.3 | 112.6 |
| Condensation glide | ℃ | 8 | 8.1 | 7.6 | 6.5 | 5.4 | 4.7 | 4.0 |

## Table 11

7% $CO_2$

| Item | Unit | Comp.Ex.91<br>A | Comp.Ex.92<br>B | Comp.Ex.93<br>A' | Comp.Ex.94<br>B' | Comp.Ex.95<br>A" | Comp.Ex.96<br>B" | Comp.Ex.97<br>C | Comp.Ex.98<br>D | Ex.88<br>E |
|---|---|---|---|---|---|---|---|---|---|---|
| HFO-1132(E) | mass% | 74.6 | 0.0 | 56.1 | 0.0 | 41.2 | 0.0 | 26.8 | 0.0 | 3.1 |
| R32 | mass% | 18.4 | 18.1 | 36.9 | 36.6 | 51.8 | 51.6 | 0.0 | 20.5 | 18.1 |
| R1234yf | mass% | 0.0 | 74.9 | 0.0 | 56.4 | 0.0 | 41.4 | 66.2 | 72.5 | 71.8 |
| $CO_2$ | mass% | 7.0 | 7.0 | 7.0 | 7.0 | 7.0 | 7.0 | 7.0 | 7.0 | 7.0 |
| GWP | – | 125 | 125 | 250 | 250 | 350 | 350 | 3 | 141 | 125 |
| COP ratio | % (relative to R410A) | 95.3 | 101.3 | 95.8 | 100.0 | 96.7 | 99.8 | 99.5 | 101.1 | 100.9 |
| Refrigerating capacity ratio | % (relative to R410A) | 119.0 | 78.0 | 122.6 | 92.2 | 124.0 | 101.9 | 80.0 | 80.0 | 80.3 |
| Condensation glide | ℃ | 4.4 | 13.6 | 3.4 | 9.0 | 3.1 | 6.5 | 14.6 | 13.0 | 13.3 |

| Item | Unit | Comp. Ex.99 | Ex.89 | Ex.90 | Ex.91 | Ex.92 | Ex.93 | Ex.94 | Comp. Ex.100 | Ex.95 |
| | | I | | J | | K | | L | M | |
|---|---|---|---|---|---|---|---|---|---|---|
| HFO-1132(E) | mass% | 72.0 | 57.2 | 48.5 | 41.2 | 35.6 | 32.0 | 28.9 | 60.7 | 50.3 |
| R32 | mass% | 0.0 | 10.0 | 18.3 | 27.6 | 36.8 | 44.2 | 51.7 | 0.0 | 5.0 |
| R1234yf | mass% | 21.0 | 25.8 | 26.2 | 24.2 | 20.6 | 16.8 | 12.4 | 32.3 | 37.7 |
| $CO_2$ | mass% | 7.0 | 7.0 | 7.0 | 7.0 | 7.0 | 7.0 | 7.0 | 7.0 | 7.0 |
| GWP | - | 2 | 69 | 125 | 188 | 250 | 299 | 350 | 2 | 36 |
| COP ratio | % (relative to R410A) | 96.0 | 96.1 | 96.2 | 96.5 | 96.8 | 97.1 | 97.5 | 96.5 | 96.7 |
| Refrigerating capacity ratio | % (relative to R410A) | 104.7 | 105.5 | 107.3 | 110.0 | 113.1 | 115.6 | 118.2 | 99.2 | 98.0 |
| Condensation glide | ℃ | 7.9 | 7.5 | 6.9 | 6.0 | 5.3 | 4.7 | 4.2 | 9.2 | 9.4 |

| Item | Unit | Ex.96 | Ex.97 | Ex.98 | Ex.99 | Ex.100 | Ex.101 | Ex.102 |
| | | W | | N | | O | | P |
|---|---|---|---|---|---|---|---|---|
| HFO-1132(E) | mass% | 43.7 | 39.5 | 36.7 | 31.9 | 28.6 | 26.4 | 24.2 |
| R32 | mass% | 10.0 | 14.4 | 18.2 | 27.6 | 36.8 | 44.0 | 51.7 |
| R1234yf | mass% | 39.3 | 39.1 | 38.1 | 33.5 | 27.6 | 22.6 | 17.1 |
| $CO_2$ | mass% | 7.0 | 7.0 | 7.0 | 7.0 | 7.0 | 7.0 | 7.0 |
| GWP | - | 70 | 99 | 125 | 188 | 250 | 298 | 350 |
| COP ratio | % (relative to R410A) | 96.9 | 96.9 | 97.0 | 97.1 | 97.3 | 97.5 | 97.8 |
| Refrigerating capacity ratio | % (relative to R410A) | 98.6 | 99.7 | 101.1 | 105.2 | 109.5 | 112.7 | 115.8 |
| Condensation glide | ℃ | 9 | 8.8 | 8.4 | 7.1 | 6.0 | 5.2 | 4.6 |

Table 12

| Item | Unit | Comp. Ex.101 | Comp. Ex.102 | Comp. Ex.103 | Ex.103 | Ex.104 | Comp. Ex.104 | Comp. Ex.105 | Comp. Ex.106 |
|---|---|---|---|---|---|---|---|---|---|
| HFO-1132(E) | mass% | 10.0 | 10.0 | 10.0 | 10.0 | 10.0 | 10.0 | 10.0 | 10.0 |
| R32 | mass% | 78.8 | 68.8 | 58.8 | 48.8 | 38.8 | 28.8 | 18.8 | 8.8 |
| R1234yf | mass% | 10.0 | 20.0 | 30.0 | 40.0 | 50.0 | 60.0 | 70.0 | 80.0 |
| $CO_2$ | mass% | 1.2 | 1.2 | 1.2 | 1.2 | 1.2 | 1.2 | 1.2 | 1.2 |
| GWP | - | 532 | 465 | 398 | 331 | 264 | 197 | 130 | 63 |
| COP ratio | % (relative to R410A) | 101.3 | 101.2 | 101.1 | 101.0 | 101.0 | 101.3 | 102.0 | 102.8 |
| Refrigerating capacity ratio | % (relative to R410A) | 108.5 | 104.1 | 99.2 | 93.6 | 87.2 | 80.1 | 72.2 | 63.1 |
| Condensation glide | °C | 1.1 | 1.6 | 2.2 | 3.1 | 4.3 | 5.8 | 7.4 | 8.4 |

(continued)

| Item | Unit | Comp. Ex.107 | Comp. Ex.108 | Ex.105 | Ex.106 | Ex.107 | Comp. Ex.109 | Comp. Ex.110 | Comp. Ex.111 |
|---|---|---|---|---|---|---|---|---|---|
| HFO-1132(E) | mass% | 20.0 | 20.0 | 20.0 | 20.0 | 20.0 | 20.0 | 20.0 | 30.0 |
| R32 | mass% | 68.8 | 58.8 | 48.8 | 38.8 | 28.8 | 18.8 | 8.8 | 58.8 |
| R1234yf | mass% | 10.0 | 20.0 | 30.0 | 40.0 | 50.0 | 60.0 | 70.0 | 10.0 |
| $CO_2$ | mass% | 1.2 | 1.2 | 1.2 | 1.2 | 1.2 | 1.2 | 1.2 | 1.2 |
| GWP | - | 465 | 398 | 331 | 264 | 197 | 130 | 62 | 398 |
| COP ratio | % (relative to R410A) | 100.6 | 100.5 | 100.4 | 100.3 | 100.4 | 100.9 | 101.8 | 100.0 |
| Refrigerating capacity ratio | % (relative to R410A) | 108.6 | 103.9 | 98.6 | 92.6 | 85.8 | 78.2 | 69.6 | 108.3 |
| Condensation glide | °C | 1.1 | 1.7 | 2.5 | 3.5 | 4.8 | 6.4 | 7.7 | 1.2 |

| Item | Unit | Ex.108 | Ex.109 | Ex.110 | Ex.111 | Comp. Ex. 112 | Comp. Ex. 113 | Comp. Ex. 114 | Ex.112 |
|---|---|---|---|---|---|---|---|---|---|
| HPC-1132(E) | mass% | 30.0 | 30.0 | 30.0 | 30.0 | 30.0 | 40.0 | 40.0 | 40.0 |
| R32 | mass% | 48.8 | 38.8 | 28.8 | 18.8 | 8.8 | 48.8 | 38.8 | 28.8 |
| R1234yf | mass% | 20.0 | 30.0 | 40.0 | 50.0 | 60.0 | 10.0 | 20.0 | 30.0 |
| $CO_2$ | mass% | 1.2 | 1.2 | 1.2 | 1.2 | 1.2 | 1.2 | 1.2 | 1.2 |
| GWP | - | 331 | 263 | 196 | 129 | 62 | 330 | 263 | 196 |
| COP ratio | % (relative to R410A) | 99.9 | 99.8 | 99.8 | 100.1 | 100.8 | 99.4 | 99.3 | 99.3 |
| Refrigerating capacity ratio | % (relative to R410A) | 103.2 | 97.5 | 91.0 | 93.7 | 75.6 | 107.5 | 102.0 | 95.8 |
| Condensation glide | °C | 1.8 | 2.7 | 3.8 | 5.2 | 6.6 | 1.3 | 2.0 | 2.9 |

| Item | Unit | Ex.113 | Ex.114 | Comp. Ex. 115 | Comp. Ex. 116 | Comp. Ex.117 | Ex.115 | Comp. Ex.118 | Comp. Ex. 119 |
|---|---|---|---|---|---|---|---|---|---|
| HFO-1132(E) | mass% | 40.0 | 40.0 | 50.0 | 50.0 | 50.0 | 50.0 | 60.0 | 60.0 |
| R32 | mass% | 18.8 | 8.8 | 38.8 | 28.8 | 18.8 | 8.8 | 28.8 | 18.8 |
| R1234yf | mass% | 40.0 | 50.0 | 10.0 | 20.0 | 30.0 | 40.0 | 10.0 | 20.0 |
| $CO_2$ | mass% | 1.2 | 1.2 | 1.2 | 1.2 | 1.2 | 1.2 | 1.2 | 1.2 |
| GWP | - | 129 | 62 | 263 | 196 | 129 | 62 | 195 | 128 |
| COP ratio | % (relative to R410A) | 99.5 | 100.0 | 99.0 | 98.9 | 99.0 | 99.4 | 98.7 | 98.7 |
| Refrigerating capacity ratio | % (relative to R410A) | 88.9 | 81.1 | 106.2 | 100.3 | 93.7 | 86.2 | 104.5 | 98.2 |

(continued)

| Item | Unit | Ex.113 | Ex.114 | Comp. Ex. 115 | Comp. Ex. 116 | Comp. Ex.117 | Ex.115 | Comp. Ex.118 | Comp. Ex. 119 |
|---|---|---|---|---|---|---|---|---|---|
| Condensation glide | °C | 4.1 | 5.4 | 1.4 | 2.2 | 3.2 | 4.3 | 1.5 | 2.4 |

| Item | Unit | Comp. Ex.120 | Comp. Ex. 121 | Comp. Ex.122 | Comp. Ex.123 | Ex.116 | Ex.117 | Ex.118 | Ex.119 |
|---|---|---|---|---|---|---|---|---|---|
| HPC-1132(E) | mass% | 60.0 | 70.0 | 70.0 | 80.0 | 15.0 | 15.0 | 15.0 | 15.0 |
| R32 | mass% | 8.8 | 18.8 | 8.8 | 8.8 | 48.8 | 46.3 | 43.8 | 41.3 |
| R1234yf | mass% | 30.0 | 10.0 | 20.0 | 10.0 | 35.0 | 37.5 | 40.0 | 42.5 |
| $CO_2$ | mass% | 1.2 | 1.2 | 1.2 | 1.2 | 1.2 | 1.2 | 1.2 | 1.2 |
| GWP | - | 61 | 128 | 61 | 61 | 331 | 314 | 297 | 281 |
| COP ratio | % (relative to R410A) | 99.0 | 98.5 | 98.8 | 98.6 | 100.7 | 100.7 | 100.6 | 100.6 |
| Refrigerating capacity ratio | % (relative to R410A) | 91.0 | 102.4 | 95.5 | 99.7 | 96.1 | 94.7 | 93.1 | 91.6 |
| Condensation glide | °C | 3.3 | 1.7 | 2.5 | 1.9 | 2.8 | 3.0 | 3.3 | 3.6 |

| Item | Unit | Ex.120 | Ex. 121 | Ex.122 | Ex.123 | Ex.124 | Ex.125 | Ex.126 | Ex.127 |
|---|---|---|---|---|---|---|---|---|---|
| HPC-1132(E) | mass% | 15.0 | 15.0 | 15.0 | 15.0 | 15.0 | 17.5 | 17.5 | 17.5 |
| R32 | mass% | 38.8 | 36.3 | 33.8 | 31.3 | 28.8 | 48.8 | 46.3 | 43.8 |
| R1234yf | mass% | 45.0 | 47.5 | 50.0 | 52.5 | 55.0 | 32.5 | 35.0 | 37.5 |
| $CO_2$ | mass% | 1.2 | 1.2 | 1.2 | 1.2 | 1.2 | 1.2 | 1.2 | 1.2 |
| GWP | - | 264 | 247 | 230 | 214 | 197 | 331 | 314 | 297 |
| COP ratio | % (relative to R410A) | 100.6 | 100.7 | 100.7 | 100.7 | 100.8 | 100.5 | 100.5 | 100.5 |
| Refrigerating capacity ratio | % (relative to R410A) | 89.9 | 88.3 | 86.6 | 84.8 | 83.0 | 97.4 | 95.9 | 94.4 |
| Condensation glide | °C | 3.9 | 4.2 | 4.6 | 4.9 | 5.3 | 2.6 | 2.9 | 3.1 |

Table 13

| Item | Unit | Ex.128 | Ex.129 | Ex.130 | Ex.131 | Ex.132 | Ex.133 | Ex. 134 | Ex.135 |
|---|---|---|---|---|---|---|---|---|---|
| HFO-1132(E) | mass% | 17.5 | 17.5 | 17.5 | 17.5 | 17.5 | 17.5 | 17.5 | 20.0 |
| R32 | mass% | 41.3 | 38.8 | 36.3 | 33.8 | 31.3 | 28.8 | 26.3 | 46.3 |
| R1234yf | mass% | 40.0 | 42.5 | 45.0 | 47.5 | 50.0 | 52.5 | 55.0 | 32.5 |
| $CO_2$ | mass% | 1.2 | 1.2 | 1.2 | 1.2 | 1.2 | 1.2 | 1.2 | 1.2 |
| GWP | - | 281 | 264 | 247 | 230 | 213 | 197 | 180 | 314 |

(continued)

| Item | Unit | Ex.128 | Ex.129 | Ex.130 | Ex.131 | Ex.132 | Ex.133 | Ex. 134 | Ex.135 |
|---|---|---|---|---|---|---|---|---|---|
| COP ratio | % (relative to R410A) | 100.5 | 100.5 | 100.5 | 100.5 | 100.6 | 100.6 | 100.7 | 100.4 |
| Refrigerating capacity ratio | % (relative to R410A) | 92.9 | 91.3 | 89.6 | 87.9 | 86.2 | 84.4 | 82.6 | 97.1 |
| Condensation glide | °C | 3.4 | 3.7 | 4.0 | 4.3 | 4.7 | 5.1 | 5.4 | 2.7 |

| Item | Unit | Ex.136 | Ex.137 | Ex.138 | Ex.139 | Ex.140 | Ex.141 | Ex.142 | Ex.143 |
|---|---|---|---|---|---|---|---|---|---|
| HFO-1132(E) | mass% | 20.0 | 20.0 | 20.0 | 20.0 | 20.0 | 20.0 | 22.5 | 22.5 |
| R32 | mass% | 43.8 | 41.3 | 36.3 | 33.8 | 31.3 | 26.3 | 46.3 | 43.8 |
| R1234yf | mass%% | 35.0 | 37.5 | 42.5 | 45.0 | 47.5 | 52.5 | 30.0 | 32.5 |
| $CO_2$ | mass%% | 1.2 | 1.2 | 1.2 | 1.2 | 1.2 | 1.2 | 1.2 | 1.2 |
| GWP | - | 297 | 280 | 247 | 230 | 213 | 180 | 314 | 297 |
| COP比 | % (relative to R410A) | 100.3 | 100.3 | 100.3 | 100.3 | 100.4 | 100.5 | 100.2 | 100.2 |
| Refrigerating capacity ratio | % (relative to R410A) | 95.7 | 94.1 | 90.9 | 89.3 | 87.5 | 84.0 | 98.4 | 96.9 |
| Condensation glide | °C | 2.9 | 3.2 | 3.8 | 4.1 | 4.4 | 5.2 | 2.5 | 2.7 |

| Item | Unit | Ex.144 | Ex.145 | Ex.146 | Ex.147 | Ex.148 | Ex.149 | Ex.150 | Ex.151 |
|---|---|---|---|---|---|---|---|---|---|
| HFO-1132(E) | mass% | 22.5 | 22.5 | 22.5 | 22.5 | 22.5 | 22.5 | 22.5 | 22.5 |
| R32 | mass% | 41.3 | 38.8 | 36.3 | 33.8 | 31.3 | 28.8 | 26.3 | 23.8 |
| R1234yf | mass% | 35.0 | 37.5 | 40.0 | 42.5 | 45.0 | 47.5 | 50.0 | 52.5 |
| $CO_2$ | mass% | 1.2 | 1.2 | 1.2 | 1.2 | 1.2 | 1.2 | 1.2 | 1.2 |
| GWP | - | 280 | 264 | 247 | 230 | 213 | 197 | 180 | 163 |
| COP ratio | % (relative to R410A) | 100.2 | 100.2 | 100.2 | 100.2 | 100.2 | 100.3 | 100.3 | 100.4 |
| Refrigerating capacity ratio | % (relative to R410A) | 95.4 | 93.8 | 92.2 | 90.6 | 88.9 | 87.1 | 85.3 | 83.5 |
| Condensation glide | °C | 3.0 | 3.3 | 3.6 | 3.9 | 4.2 | 4.5 | 4.9 | 5.3 |

| Item | Unit | Ex.152 | Ex.153 | Ex.154 | Ex.155 | Ex.156 | Ex.157 | Ex.158 | Ex.159 |
|---|---|---|---|---|---|---|---|---|---|
| HFO-1132(E) | mass% | 25.0 | 25.0 | 25.0 | 25.0 | 25.0 | 25.0 | 27.5 | 27.5 |
| R32 | mass% | 33.8 | 31.3 | 28.8 | 26.3 | 23.8 | 21.3 | 21.9 | 21.9 |
| R1234yf | mass% | 40.0 | 42.5 | 45.0 | 47.5 | 50.0 | 52.5 | 45.0 | 47.5 |

(continued)

| Item | Unit | Ex.152 | Ex.153 | Ex.154 | Ex.155 | Ex.156 | Ex.157 | Ex.158 | Ex.159 |
|---|---|---|---|---|---|---|---|---|---|
| $CO_2$ | mass% | 1.2 | 1.2 | 1.2 | 1.2 | 1.2 | 1.2 | 1.2 | 1.2 |
| GWP | - | 230 | 213 | 196 | 180 | 163 | 146 | 150 | 150 |
| COP ratio | % (relative to R410A) | 100.0 | 100.0 | 100.1 | 100.1 | 100.2 | 100.3 | 100.0 | 100.1 |
| Refrigerating capacity ratio | % (relative to R410A) | 91.8 | 90.2 | 88.4 | 86.7 | 84. 8 | 83.0 | 86.3 | 85.4 |
| Condensation glide | °C | 3.6 | 4.0 | 4.3 | 4.7 | 5.0 | 5.4 | 4.8 | 4.9 |

| Item | | Unit | Ex.160 | Ex.161 | Ex. 162 | Ex. 163 | Ex.164 |
|---|---|---|---|---|---|---|---|
| HFO-1132(E) | | mass% | 27.5 | 27.5 | 30.0 | 32.0 | 34.0 |
| R32 | | mass% | 21.9 | 21.9 | 21.9 | 21.9 | 13.8 |
| R1234yf | | mass% | 50.0 | 52.5 | 52.5 | 51.0 | 51.0 |
| $CO_2$ | | mass% | 1.2 | 1.2 | 1.2 | 1.2 | 1.2 |
| GWP | | - | 150 | 150 | 150 | 150 | 96 |
| COP ratio | | % (relative to R410A) | 100.1 | 100.2 | 100.1 | 100.0 | 100.1 |
| Refrigerating capacity ratio | | % (relative to R410A) | 84.5 | 83.7 | 84.2 | 85.1 | 82.0 |
| Condensation glide | | °C | 5.1 | 5.2 | 5.0 | 4.9 | 5.5 |

Table 14

| Item | Unit | Comp. Ex.125 | Comp. Ex.126 | Comp. Ex. 127 | Ex.166 | Ex.167 | Ex.168 | Comp. Ex. 128 | Comp. Ex.129 |
|---|---|---|---|---|---|---|---|---|---|
| HFO-1132(E) | mass% | 10.0 | 10.0 | 10.0 | 10.0 | 10.0 | 10.0 | 10.0 | 10.0 |
| R32 | mass% | 77.5 | 67.5 | 57.5 | 47.5 | 37.5 | 27.5 | 17.5 | 7.5 |
| R1234yf | mass% | 10.0 | 20.0 | 30.0 | 40.0 | 50.0 | 60.0 | 70.0 | 80.0 |
| $CO_2$ | mass% | 2.5 | 2.5 | 2.5 | 2.5 | 2.5 | 2.5 | 2.5 | 2.5 |
| GWP | - | 524 | 457 | 389 | 322 | 255 | 188 | 121 | 54 |
| COP ratio | % (relative to R410A) | 100.9 | 100.8 | 100.6 | 100.5 | 100.5 | 100.9 | 101.6 | 102.4 |
| Refrigerating capacity ratio | % (relative to R410A) | 110.6 | 106.2 | 101.2 | 95.5 | 89.1 | 81.9 | 74.0 | 64.8 |
| Condensation glide | °C | 1.8 | 2.3 | 3.0 | 4.0 | 5.3 | 7.0 | 8.8 | 10.1 |

(continued)

| Item | Unit | Comp. Ex.130 | Comp. Ex. 131 | Ex.169 | Ex.170 | Ex.171 | Comp. Ex. 132 | Comp. Ex. 133 | Comp. Ex. 134 |
|---|---|---|---|---|---|---|---|---|---|
| HFO-1132(E) | mass% | 20.0 | 20.0 | 20.0 | 20.0 | 20.0 | 20.0 | 20.0 | 30.0 |
| R32 | mass% | 67.5 | 57.5 | 47.5 | 37.5 | 27.5 | 17.5 | 7.5 | 57.5 |
| R1234yf | mass% | 10.0 | 20.0 | 30.0 | 40.0 | 50.0 | 60.0 | 70.0 | 10.0 |
| $CO_2$ | mass% | 2.5 | 2.5 | 2.5 | 2.5 | 2.5 | 2.5 | 2.5 | 2.5 |
| GWP | - | 456 | 389 | 322 | 255 | 188 | 121 | 54 | 389 |
| COP ratio | % (relative to R410A) | 100.1 | 100.0 | 99.9 | 99.8 | 100.0 | 100.5 | 101.3 | 99.5 |
| Refrigerating capacity ratio | % (relative to R410A) | 110.7 | 106.0 | 100.6 | 94.5 | 87.7 | 80.1 | 71.5 | 110.4 |
| Condensation glide | °C | 1.8 | 2.5 | 3.3 | 4.4 | 5.9 | 7.7 | 9.3 | 1.9 |

| Item | Unit | Ex.172 | Ex.173 | Ex. 174 | Ex.175 | Comp. Ex. 135 | Comp. Ex. 136 | Comp. Ex.137 | Ex. 176 |
|---|---|---|---|---|---|---|---|---|---|
| HFO-1132(E) | mass% | 30.0 | 30.0 | 30.0 | 30.0 | 30.0 | 40.0 | 40.0 | 40.0 |
| R32 | mass% | 47.5 | 37.5 | 27.5 | 17.5 | 7.5 | 47.5 | 37.5 | 27.5 |
| R1234yf | mass% | 20.0 | 30.0 | 40.0 | 50.0 | 60.0 | 10.0 | 20.0 | 30.0 |
| $CO_2$ | mass% | 2.5 | 2.5 | 2.5 | 2.5 | 2.5 | 2.5 | 2.5 | 2.5 |
| GWP | - | 322 | 255 | 188 | 120 | 53 | 321 | 254 | 187 |
| COP ratio | % (relative to R410A) | 99.3 | 99.2 | 99.3 | 99.6 | 100.3 | 98.9 | 98.8 | 98.7 |
| Refrigerating capacity ratio | % (relative to R410A) | 105.3 | 99.5 | 93.0 | 85.7 | 77.5 | 109.6 | 104.1 | 97.9 |
| Condensation glide | °C | 2.6 | 3.6 | 4.8 | 6.4 | 8.1 | 2.0 | 2.8 | 3.9 |

| Item | Unit | Ex.177 | Ex.178 | Comp. Ex. 138 | Comp. Ex. 139 | Comp. Ex.140 | Ex.179 | Comp. Ex.141 | Comp. Ex.142 |
|---|---|---|---|---|---|---|---|---|---|
| HFO-1132(E) | mass% | 40.0 | 40.0 | 50.0 | 50.0 | 50.0 | 50.0 | 60.0 | 60.0 |
| R32 | mass% | 17.5 | 7.5 | 37.5 | 27.5 | 17.5 | 7.5 | 27.5 | 17.5 |
| R1234yf | mass% | 40.0 | 50.0 | 10.0 | 20.0 | 30.0 | 40.0 | 10.0 | 20.0 |
| $CO_2$ | mass% | 2.5 | 2.5 | 2.5 | 2.5 | 2.5 | 2.5 | 2.5 | 2.5 |
| GWP | - | 120 | 53 | 254 | 187 | 120 | 53 | 187 | 120 |
| COP ratio | % (relative to R410A) | 98.9 | 99.4 | 98.4 | 98.3 | 98.4 | 98.8 | 98.0 | 98.1 |
| Refrigerating capacity ratio | % (relative to R410A) | 91.0 | 83.1 | 108.4 | 102.5 | 95.9 | 88.4 | 106.8 | 100.4 |

(continued)

| Item | Unit | Ex.177 | Ex.178 | Comp. Ex. 138 | Comp. Ex. 139 | Comp. Ex.140 | Ex.179 | Comp. Ex.141 | Comp. Ex.142 |
|------|------|--------|--------|---------------|---------------|--------------|--------|--------------|--------------|
| Condensation glide | °C | 5.3 | 6.8 | 2.2 | 3.1 | 4.3 | 5.6 | 2.4 | 3.4 |

| Item | Unit | Ex.180 | Comp. Ex.143 | Comp. Ex.144 | Comp. Ex.145 | Ex.181 | Ex.182 | Ex.183 | Ex.184 |
|------|------|--------|--------------|--------------|--------------|--------|--------|--------|--------|
| HFO-1132(E) | mass% | 60.0 | 70.0 | 70.0 | 80.0 | 15.0 | 15.0 | 15.0 | 15.0 |
| R32 | mass% | 7.5 | 17.5 | 7.5 | 7.5 | 50.0 | 47.5 | 45.0 | 42.5 |
| R1234yf | mass% | 30.0 | 10.0 | 20.0 | 10.0 | 32.5 | 35.0 | 37.5 | 40.0 |
| $CO_2$ | mass% | 2.5 | 2.5 | 2.5 | 2.5 | 2.5 | 2.5 | 2.5 | 2.5 |
| GWP | - | 52 | 119 | 52 | 52 | 339 | 322 | 305 | 289 |
| COP ratio | % (relative to R410A) | 98.4 | 97.9 | 98.1 | 98.0 | 100.2 | 100.2 | 100.2 | 100.2 |
| Refrigerating capacity ratio | % (relative to R410A) | 93.3 | 104.7 | 97.8 | 102.1 | 99.6 | 98.1 | 96.6 | 95.1 |
| Condensation glide | °C | 4.6 | 2.7 | 3.8 | 3.0 | 3.4 | 3.6 | 3.9 | 4.2 |

| Item | Unit | Ex. 185 | Ex.186 | Ex.187 | Ex.188 | Ex.189 | Ex. 190 | Ex.191 | Ex.192 |
|------|------|---------|--------|--------|--------|--------|---------|--------|--------|
| HFO-1132(E) | mass% | 15.0 | 15.0 | 15.0 | 15.0 | 15.0 | 15.0 | 15.0 | 17.5 |
| R32 | mass% | 40.0 | 37.5 | 35.0 | 32.5 | 30.0 | 27.5 | 25.0 | 50.0 |
| R1234yf | mass% | 42.5 | 45.0 | 47.5 | 50.0 | 52.5 | 55.0 | 57.5 | 30.0 |
| $CO_2$ | mass% | 2.5 | 2.5 | 2.5 | 2.5 | 2.5 | 2.5 | 2.5 | 2.5 |
| GWP | - | 272 | 255 | 238 | 222 | 205 | 188 | 171 | 339 |
| COP ratio | % (relative to R410A) | 100.2 | 100.2 | 100.2 | 100.2 | 100.3 | 100.4 | 100.5 | 100.1 |
| Refrigerating capacity ratio | % (relative to R410A) | 93.5 | 91.9 | 90.2 | 88.5 | 86.7 | 84.9 | 83.0 | 100.8 |
| Condensation glide | °C | 4.5 | 4.8 | 5.2 | 5.6 | 6.0 | 6.4 | 6.9 | 3.2 |

Table 15

| Item | Unit | Ex.193 | Ex.194 | Ex.195 | Ex.196 | Ex.197 | Ex.198 | Ex.199 | Ex. 200 |
|------|------|--------|--------|--------|--------|--------|--------|--------|---------|
| HFO-1132(E) | mass% | 17.5 | 17.5 | 17.5 | 17.5 | 17.5 | 17.5 | 17.5 | 17.5 |
| R32 | mass% | 47.5 | 45.0 | 42.5 | 40.0 | 37.5 | 35.0 | 32.5 | 30.0 |
| R1234yf | mass% | 32.5 | 35.0 | 37.5 | 40.0 | 42.5 | 45.0 | 47.5 | 50.0 |
| $CO_2$ | mass% | 2.5 | 2.5 | 2.5 | 2.5 | 2.5 | 2.5 | 2.5 | 2.5 |
| GWP | - | 322 | 305 | 289 | 272 | 255 | 238 | 221 | 205 |

(continued)

| Item | Unit | Ex.193 | Ex.194 | Ex.195 | Ex.196 | Ex.197 | Ex.198 | Ex.199 | Ex. 200 |
|---|---|---|---|---|---|---|---|---|---|
| COP ratio | % (relative to R410A) | 100.0 | 100.0 | 100.0 | 100.0 | 100.0 | 100.0 | 100.0 | 100.1 |
| Refrigerating capacity ratio | % (relative to R410A) | 99.4 | 97.9 | 96.4 | 94.8 | 93.2 | 91.5 | 89.8 | 88.1 |
| Condensation glide | °C | 3.5 | 3.7 | 4.0 | 4.3 | 4.6 | 5.0 | 5.3 | 5.7 |

| Item | Unit | Ex. 201 | Ex. 202 | Ex. 203 | Ex. 204 | Ex. 205 | Ex. 206 | Ex. 207 | Ex. 208 |
|---|---|---|---|---|---|---|---|---|---|
| HFO-1132(E) | mass% | 17.5 | 17.5 | 17.5 | 20.0 | 20.0 | 20.0 | 20.0 | 20.0 |
| R32 | mass% | 27.5 | 25.0 | 22.5 | 50.0 | 45.0 | 42.5 | 40.0 | 35.0 |
| R1234yf | mass% | 52.5 | 55.0 | 57.5 | 27.5 | 32.5 | 35.0 | 37.5 | 42.5 |
| $CO_2$ | mass% | 2.5 | 2.5 | 2.5 | 2.5 | 2.5 | 2.5 | 2.5 | 2.5 |
| GWP | - | 188 | 171 | 154 | 339 | 305 | 289 | 272 | 238 |
| COP ratio | % (relative to R410A) | 100.2 | 100.3 | 100.4 | 99.9 | 99.9 | 99.8 | 99.8 | 99.8 |
| Refrigerating capacity ratio | % (relative to R410A) | 86.3 | 84.4 | 82.6 | 102.0 | 99.2 | 97.7 | 96.1 | 92.9 |
| Condensation glide | °C | 6.2 | 6.6 | 7.0 | 3.1 | 3.5 | 3.8 | 4.1 | 4.7 |

| Item | Unit | Ex. 209 | Ex. 210 | Ex. 211 | Ex. 212 | Ex. 213 | Ex. 214 | Ex. 215 | Ex. 216 |
|---|---|---|---|---|---|---|---|---|---|
| HFO-1132(E) | mass% | 20.0 | 20.0 | 20.0 | 20.0 | 20.0 | 22.5 | 22.5 | 22.5 |
| R32 | mass% | 32.5 | 30.0 | 25.0 | 22.5 | 20.0 | 50.0 | 47.5 | 45.0 |
| R1234yf | mass% | 45.0 | 47.5 | 52.5 | 55.0 | 57.5 | 25.0 | 27.5 | 30.0 |
| $CO_2$ | mass% | 2.5 | 2.5 | 2.5 | 2.5 | 2.5 | 2.5 | 2.5 | 2.5 |
| GWP | - | 221 | 205 | 171 | 154 | 138 | 339 | 322 | 305 |
| COP ratio | % (relative to R410A) | 99.8 | 99.9 | 100.0 | 100.2 | 100.3 | 99.8 | 99.7 | 99.7 |
| Refrigerating capacity ratio | % (relative to R410A) | 91.2 | 89.5 | 85.9 | 84.0 | 82.1 | 103.2 | 101.8 | 100.4 |
| Condensation glide | °C | 5.1 | 5.5 | 6.3 | 6.7 | 7.2 | 2.9 | 3.1 | 3.4 |

| Item | Unit | Ex. 217 | Ex. 218 | Ex. 219 | Ex. 220 | Ex. 221 | Ex. 222 | Ex. 223 | Ex. 224 |
|---|---|---|---|---|---|---|---|---|---|
| HFO-1132(E) | mass% | 22.5 | 22.5 | 22.5 | 22.5 | 22.5 | 22.5 | 22.5 | 22.5 |
| R32 | mass% | 42.5 | 40.0 | 37.5 | 35.0 | 32.5 | 30.0 | 27.5 | 25.0 |
| R1234yf | mass% | 32.5 | 35.0 | 37.5 | 40.0 | 42.5 | 45.0 | 47.5 | 50.0 |

(continued)

| Item | Unit | Ex. 217 | Ex. 218 | Ex. 219 | Ex. 220 | Ex. 221 | Ex. 222 | Ex. 223 | Ex. 224 |
|---|---|---|---|---|---|---|---|---|---|
| $CO_2$ | mass% | 2.5 | 2.5 | 2.5 | 2.5 | 2.5 | 2.5 | 2.5 | 2.5 |
| GWP | - | 288 | 272 | 255 | 238 | 221 | 205 | 188 | 171 |
| COP ratio | % (relative to R410A) | 99.7 | 99.7 | 99.7 | 99.7 | 99.7 | 99.7 | 99.8 | 99.8 |
| Refrigerating capacity ratio | % (relative to R410A) | 98.9 | 97.4 | 95.8 | 94.2 | 92.5 | 90.8 | 89.0 | 87.2 |
| Condensation glide | °C | 3.6 | 3.9 | 4.2 | 4.5 | 4.9 | 5.2 | 5.6 | 6.0 |

| Item | Unit | Ex. 225 | Ex. 226 | Ex. 227 | Ex. 228 | Ex. 229 | Ex. 230 | Ex. 231 | Ex. 232 |
|---|---|---|---|---|---|---|---|---|---|
| HFO-1132(E) | mass% | 22.5 | 22.5 | 22.5 | 25.0 | 25.0 | 25.0 | 25.0 | 25.0 |
| R32 | mass% | 22.5 | 20.0 | 17.5 | 40.0 | 37.5 | 35.0 | 32.5 | 30.0 |
| R1234yf | mass% | 52.5 | 55.0 | 57.5 | 32.5 | 35.0 | 37.5 | 40.0 | 42.5 |
| $CO_2$ | mass% | 2.5 | 2.5 | 2.5 | 2.5 | 2.5 | 2.5 | 2.5 | 2.5 |
| GWP | - | 154 | 137 | 121 | 272 | 255 | 238 | 221 | 204 |
| COP ratio | % (relative to R410A) | 99.9 | 100.1 | 100.2 | 99.5 | 99.5 | 99.5 | 99.5 | 99.5 |
| Refrigerating capacity ratio | % (relative to R410A) | 85.4 | 83.5 | 81.5 | 98.6 | 97.1 | 95.5 | 93.8 | 92.1 |
| Condensation glide | °C | 6.5 | 6.9 | 7.3 | 3.7 | 4.0 | 4.3 | 4.6 | 5.0 |

| Item | Unit | Ex. 233 | Ex. 234 | Ex. 235 | Ex. 236 | Ex. 237 | Ex. 238 | Ex. 239 | Ex. 240 |
|---|---|---|---|---|---|---|---|---|---|
| HFO-1132(E) | mass% | 25.0 | 25.0 | 25.0 | 25.0 | 25.0 | 27.5 | 27.5 | 27.5 |
| R32 | mass% | 27.5 | 25.0 | 22.5 | 20.0 | 17.5 | 32.5 | 30.0 | 27.5 |
| R1234yf | mass% | 45.0 | 47.5 | 50.0 | 52.5 | 55.0 | 37.5 | 40.0 | 42.5 |
| $CO_2$ | mass% | 2.5 | 2.5 | 2.5 | 2.5 | 2.5 | 2.5 | 2.5 | 2.5 |
| GWP | - | 188 | 171 | 154 | 137 | 121 | 221 | 204 | 188 |
| COP ratio | % (relative to R410A) | 99.6 | 99.6 | 99.7 | 99.9 | 100.0 | 99.4 | 99.4 | 99.4 |
| Refrigerating capacity ratio | % (relative to R410A) | 90.4 | 88.6 | 86.8 | 84.9 | 83.0 | 95.1 | 93.4 | 91.7 |
| Condensation glide | °C | 5.4 | 5.7 | 6.2 | 6.6 | 7.0 | 4.4 | 4.7 | 5.1 |

Table 16

| Item | Unit | Ex. 241 | Ex. 242 | Ex. 243 | Ex. 244 | Ex. 245 | Ex. 246 | Ex. 247 | Ex. 248 |
|---|---|---|---|---|---|---|---|---|---|
| HFO-1132(E) | mass% | 27.5 | 27.5 | 27.5 | 27.5 | 27.5 | 30.0 | 30.0 | 30.0 |
| R32 | mass% | 25.0 | 22.5 | 20.0 | 17.5 | 15.0 | 25.0 | 22.5 | 20.0 |
| R1234yf | mass% | 45.0 | 47.5 | 50.0 | 52.5 | 55.0 | 42.5 | 45.0 | 47.5 |
| $CO_2$ | mass% | 2.5 | 2.5 | 2.5 | 2.5 | 2.5 | 2.5 | 2.5 | 2.5 |
| GWP | – | 171 | 154 | 137 | 121 | 104 | 171 | 154 | 137 |
| COP ratio | % (relative to R410A) | 99.5 | 99.5 | 99.6 | 99.8 | 99.9 | 99.3 | 99.4 | 99.5 |
| Refrigerating capacity ratio | % (relative to R410A) | 89.9 | 88.1 | 86.3 | 84.3 | 82.4 | 91.3 | 89.5 | 87.6 |
| Condensation glide | ℃ | 5.5 | 5.9 | 6.3 | 6.7 | 7.2 | 5.2 | 5.6 | 6.0 |

| Item | Unit | Ex. 249 | Ex. 250 | Ex. 251 | Ex. 252 | Ex. 253 | Ex. 254 | Ex. 255 | Ex. 256 |
|---|---|---|---|---|---|---|---|---|---|
| HFO-1132(E) | mass% | 30.0 | 30.0 | 32.5 | 32.5 | 32.5 | 32.5 | 35.0 | 35.0 |
| R32 | mass% | 15.0 | 12.5 | 20.0 | 17.5 | 15.0 | 12.5 | 15.0 | 12.5 |
| R1234yf | mass% | 52.5 | 55.0 | 45.0 | 47.5 | 50.0 | 52.5 | 47.5 | 50.0 |
| $CO_2$ | mass% | 2.5 | 2.5 | 2.5 | 2.5 | 2.5 | 2.5 | 2.5 | 2.5 |
| GWP | – | 104 | 87 | 137 | 120 | 104 | 87 | 104 | 87 |
| COP ratio | % (relative to R410A) | 99.7 | 99.9 | 99.3 | 99.4 | 99.5 | 99.7 | 99.3 | 99.5 |
| Refrigerating capacity ratio | % (relative to R410A) | 83.8 | 81.8 | 88.9 | 87.1 | 85.1 | 83.1 | 86.5 | 84.5 |
| Condensation glide | ℃ | 6.8 | 7.3 | 5.7 | 6.1 | 6.5 | 7.0 | 6.2 | 6.6 |

| Item | Unit | Ex. 257 | Ex. 258 | Ex. 259 | Ex. 260 | Ex. 261 | Ex. 262 | Ex. 263 | Ex. 264 |
|---|---|---|---|---|---|---|---|---|---|
| HFO-1132(E) | mass% | 35.0 | 37.5 | 37.5 | 37.5 | 40.0 | 40.0 | 42.5 | 42.5 |
| R32 | mass% | 10.0 | 12.5 | 10.0 | 7.5 | 10.0 | 5.0 | 7.5 | 5.0 |
| R1234yf | mass% | 52.5 | 47.5 | 50.0 | 52.5 | 47.5 | 52.5 | 47.5 | 50.0 |
| $CO_2$ | mass% | 2.5 | 2.5 | 2.5 | 2.5 | 2.5 | 2.5 | 2.5 | 2.5 |
| GWP | - | 70 | 87 | 70 | 53 | 70 | 36 | 53 | 36 |
| COP ratio | % (relative to R410A) | 99.6 | 99.3 | 99.4 | 99.6 | 99.3 | 99.6 | 99.3 | 99.4 |
| Refrigerating capacity ratio | % (relative to R410A) | 82.5 | 85.8 | 83.8 | 81.8 | 85.2 | 81.0 | 84.5 | 02.4 |
| Condensation glide | ℃ | 7.1 | 6.3 | 6.7 | 7.1 | 6.4 | 7.2 | 6.5 | 6.9 |

| Item | Unit | Ex. 265 | Ex. 266 | Ex. 267 | Ex. 268 | Ex. 269 | Ex. 270 | Ex. 271 |
|---|---|---|---|---|---|---|---|---|
| HFO-1132(E) | mass% | 45.0 | 45.0 | 47.5 | 47.5 | 50.0 | 52.5 | 55.0 |
| R32 | mass% | 5.0 | 2.5 | 4.0 | 1.5 | 2.5 | 1.5 | 1.0 |
| R1234yf | mass% | 47.5 | 50.0 | 46.0 | 48.5 | 45.0 | 43.5 | 41.5 |
| $CO_2$ | mass% | 2.5 | 2.5 | 2.5 | 2.5 | 2.5 | 2.5 | 2.5 |
| GWP | - | 36 | 19 | 29 | 13 | 19 | 12 | 9 |
| COP ratio | % (relative to R410A) | 99.3 | 99.4 | 99.2 | 99.3 | 99.1 | 99.1 | 99.0 |
| Refrigerating capacity ratio | % (relative to R410A) | 83.7 | 81.6 | 84.2 | 82.0 | 84.2 | 84.7 | 85.6 |
| Condensation glide | ℃ | 6.6 | 6.9 | 6.4 | 6.7 | 6.3 | 6.2 | 5.9 |

Table 17

| Item | Unit | Comp. Ex.146 | Comp. Ex.147 | Comp. Ex.148 | Ex. 272 | Ex. 273 | Ex. 274 | Comp. Ex.149 | Comp. Ex. 150 |
|---|---|---|---|---|---|---|---|---|---|
| HFO-1132(E) | mass% | 10.0 | 10.0 | 10.0 | 10.0 | 10.0 | 10.0 | 10.0 | 10.0 |
| R32 | mass% | 76.0 | 66.0 | 56.0 | 46.0 | 36.0 | 26.0 | 16.0 | 6.0 |
| R1234yf | mass% | 10.0 | 20.0 | 30.0 | 40.0 | 50.0 | 60.0 | 70.0 | 80.0 |
| $CO_2$ | mass% | 4.0 | 4.0 | 4.0 | 4.0 | 4.0 | 4.0 | 4.0 | 4.0 |
| GWP | - | 514 | 446 | 379 | 312 | 245 | 178 | 111 | 44 |
| COP ratio | % (relative to R410A) | 100.3 | 100.2 | 100.1 | 100.0 | 100.0 | 100.4 | 101.2 | 102.0 |
| Refrigerating capacity ratio | % (relative to R410A) | 113.0 | 108.6 | 103.5 | 97.8 | 91.3 | 84.1 | 76.1 | 66.8 |
| Condensation glide | °C | 2.5 | 3.1 | 3.9 | 5.0 | 6.4 | 8.3 | 10.4 | 12.2 |

| Item | Unit | Comp. Ex.146 | Comp. Ex. 147 | Ex. 275 | Ex. 276 | Ex. 277 | Ex. 278 | Comp. Ex.153 | Comp. Ex.154 |
|---|---|---|---|---|---|---|---|---|---|
| HFO-1132(E) | mass% | 20.0 | 20.0 | 20.0 | 20.0 | 20.0 | 20.0 | 20.0 | 30.0 |
| R32 | mass% | 66.0 | 56.0 | 46.0 | 36.0 | 26.0 | 16.0 | 6.0 | 56.0 |

(continued)

| Item | Unit | Comp. Ex.146 | Comp. Ex. 147 | Ex. 275 | Ex. 276 | Ex. 277 | Ex. 278 | Comp. Ex.153 | Comp. Ex.154 |
|---|---|---|---|---|---|---|---|---|---|
| R1234yf | mass% | 10.0 | 20.0 | 30.0 | 40.0 | 50.0 | 60.0 | 70.0 | 10.0 |
| $CO_2$ | mass% | 4.0 | 4.0 | 4.0 | 4.0 | 4.0 | 4.0 | 4.0 | 4.0 |
| GWP | - | 446 | 379 | 312 | 245 | 178 | 111 | 44 | 379 |
| COP ratio | % (relative to R410A) | 99.6 | 99.5 | 99.3 | 99.2 | 99.4 | 100.0 | 100.9 | 98.9 |
| Refrigerating capacity ratio | % (relative to R410A) | 113.1 | 108.4 | 103.0 | 96.8 | 89.9 | 82.3 | 73.7 | 112.9 |
| Condensation glide | °C | 2.6 | 3.3 | 4.2 | 5.5 | 7.1 | 9.2 | 11.2 | 2.7 |

| Item | Unit | Ex. 279 | Ex. 280 | Ex. 281 | Ex. 282 | Comp. Ex.155 | Comp. Ex. 156 | Comp. Ex. 157 | Ex. 283 |
|---|---|---|---|---|---|---|---|---|---|
| HFO-1132(E) | mass% | 30.0 | 30.0 | 30.0 | 30.0 | 30.0 | 40.0 | 40.0 | 40.0 |
| R32 | mass% | 46.0 | 36.0 | 26.0 | 16.0 | 6.0 | 46.0 | 36.0 | 26.0 |
| R1234yf | mass% | 20.0 | 30.0 | 40.0 | 50.0 | 60.0 | 10.0 | 20.0 | 30.0 |
| $CO_2$ | mass% | 4.0 | 4.0 | 4.0 | 4.0 | 4.0 | 4.0 | 4.0 | 4.0 |
| GWP | - | 312 | 245 | 177 | 110 | 43 | 311 | 244 | 177 |
| COP ratio | % (relative to R410A) | 98.7 | 98.6 | 98.7 | 99.0 | 99.8 | 98.3 | 98.1 | 98.1 |
| Refrigerating capacity ratio | % (relative to R410A) | 107.7 | 101.9 | 95.4 | 88.0 | 79.9 | 112.1 | 106.6 | 100.4 |
| Condensation glide | °C | 3.5 | 4.6 | 6.0 | 7.8 | 9.8 | 2.8 | 3.8 | 5.0 |

| Item | Unit | Ex. 284 | Ex. 285 | Comp. Ex.158 | Comp. Ex.159 | Ex. 286 | Ex. 287 | Comp. Ex. 160 | Comp. Ex.161 |
|---|---|---|---|---|---|---|---|---|---|
| HFO-1132(E) | mass% | 40.0 | 40.0 | 50.0 | 50.0 | 50.0 | 50.0 | 60.0 | 60.0 |
| R32 | mass% | 16.0 | 6.0 | 36.0 | 26.0 | 16.0 | 6.0 | 26.0 | 16.0 |
| R1234yf | mass% | 40.0 | 50.0 | 10.0 | 20.0 | 30.0 | 40.0 | 10.0 | 20.0 |
| $CO_2$ | mass% | 4.0 | 4.0 | 4.0 | 4.0 | 4.0 | 4.0 | 4.0 | 4.0 |
| GWP | - | 110 | 43 | 244 | 177 | 110 | 43 | 177 | 109 |
| COP ratio | % (relative to R410A) | 98.3 | 98.8 | 97.7 | 97.7 | 97.8 | 99.2 | 97.3 | 97.4 |
| Refrigerating capacity ratio | % (relative to R410A) | 93.4 | 85.6 | 110.9 | 105.0 | 98.4 | 90.9 | 109.3 | 103.0 |
| Condensation glide | °C | 6.6 | 8.4 | 3.1 | 4.1 | 5.5 | 7.1 | 3.4 | 4.6 |

(continued)

| Item | Unit | Ex. 284 | Ex. 285 | Comp. Ex.158 | Comp. Ex.159 | Ex. 286 | Ex. 287 | Comp. Ex. 160 | Comp. Ex.161 |
|---|---|---|---|---|---|---|---|---|---|

| Item | Unit | Ex. 288 | Comp. Ex.162 | Comp. Ex.163 | Comp. Ex.164 | Ex. 289 | Ex. 290 | Ex. 291 | Ex. 292 |
|---|---|---|---|---|---|---|---|---|---|
| HFO-1132(E) | mass% | 60.0 | 70.0 | 70.0 | 80.0 | 15.0 | 15.0 | 15.0 | 15.0 |
| R32 | mass% | 6.0 | 16.0 | 6.0 | 6.0 | 48.5 | 46.0 | 43.5 | 41.0 |
| R1234yf | mass% | 30.0 | 10.0 | 20.0 | 10.0 | 32.5 | 35.0 | 37.5 | 40.0 |
| $CO_2$ | mass% | 4.0 | 4.0 | 4.0 | 4.0 | 4.0 | 4.0 | 4.0 | 4.0 |
| GWP | - | 42 | 109 | 42 | 42 | 329 | 312 | 295 | 279 |
| COP ratio | % (relative to R410A) | 97.7 | 97.2 | 97.4 | 97.2 | 99.7 | 99.6 | 99.6 | 99.6 |
| Refrigerating capacity ratio | % (relative to R410A) | 95.9 | 107.3 | 100.5 | 104.9 | 101.9 | 100.4 | 98.9 | 97.4 |
| Condensation glide | °C | 6.0 | 3.8 | 5.1 | 4.3 | 4.3 | 4.6 | 4.9 | 5.2 |

| Item | Unit | Ex. 293 | Ex. 294 | Ex. 295 | Ex. 296 | Ex. 297 | Ex. 298 | Ex.299 | Ex.300 |
|---|---|---|---|---|---|---|---|---|---|
| HFO-1132(E) | mass% | 15.0 | 15.0 | 15.0 | 15.0 | 15.0 | 15.0 | 15.0 | 15.0 |
| R32 | mass% | 38.5 | 36.0 | 33.5 | 31.0 | 28.5 | 26.0 | 23.5 | 21.0 |
| R1234yf | mass% | 42.5 | 45.0 | 47.5 | 50.0 | 52.5 | 55.0 | 57.5 | 60.0 |
| $CO_2$ | mass% | 4.0 | 4.0 | 4.0 | 4.0 | 4.0 | 4.0 | 4.0 | 4.0 |
| GWP | - | 262 | 245 | 228 | 211 | 195 | 178 | 161 | 144 |
| COP ratio | % (relative to R410A) | 99.6 | 99.6 | 99.6 | 99.7 | 99.8 | 99.9 | 100.0 | 100.2 |
| Refrigerating capacity ratio | % (relative to R410A) | 95.8 | 94.1 | 92.4 | 90.7 | 88.9 | 87.1 | 85.2 | 83.3 |
| Condensation glide | °C | 5.6 | 5.9 | 6.3 | 6.8 | 7.2 | 7.7 | 8.2 | 8.7 |

Table 18

| Item | Unit | Ex.301 | Ex.302 | Ex. 303 | Ex.304 | Ex.305 | Ex.306 | Ex.307 | Ex.308 |
|---|---|---|---|---|---|---|---|---|---|
| HFO-1132(E) | mass% | 15.0 | 17.5 | 17.5 | 17.5 | 17.5 | 17.5 | 17.5 | 17.5 |
| R32 | mass% | 18.5 | 48.5 | 46.0 | 43.5 | 41.0 | 38.5 | 36.0 | 33.5 |
| R1234yf | mass% | 62.5 | 30.0 | 32.5 | 35.0 | 37.5 | 40.0 | 42.5 | 45.0 |
| $CO_2$ | mass% | 4.0 | 4.0 | 4.0 | 4.0 | 4.0 | 4.0 | 4.0 | 4.0 |
| GWP | - | 128 | 329 | 312 | 295 | 278 | 262 | 245 | 228 |
| COP ratio | % (relative to R410A) | 100.4 | 99.5 | 99.5 | 99.4 | 99.4 | 99.4 | 99.4 | 99.4 |

(continued)

| Item | Unit | Ex.301 | E$_X$.302 | Ex. 303 | Ex.304 | Ex.305 | Ex.306 | Ex.307 | Ex.308 |
|---|---|---|---|---|---|---|---|---|---|
| Refrigerating capacity ratio | % (relative to R410A) | 81.3 | 103.1 | 101.7 | 100.2 | 98.7 | 97.1 | 95.5 | 93.8 |
| Condensation glide | °C | 9.3 | 4.1 | 4.4 | 4.7 | 5.0 | 5.3 | 5.7 | 6.1 |

| Item | Unit | Ex.309 | Ex.310 | Ex. 311 | Ex. 312 | Ex. 313 | Ex. 314 | Ex. 315 | Ex. 316 |
|---|---|---|---|---|---|---|---|---|---|
| HFO-1132(E) | mass% | 17.5 | 17.5 | 17.5 | 17.5 | 17.5 | 17.5 | 20.0 | 20.0 |
| R32 | mass% | 31.0 | 28.5 | 26.0 | 23.5 | 21.0 | 18.5 | 48.5 | 43.5 |
| R1234yf | mass% | 47.5 | 50.0 | 52.5 | 55.0 | 57.5 | 60.0 | 27.5 | 32.5 |
| $CO_2$ | mass% | 4.0 | 4.0 | 4.0 | 4.0 | 4.0 | 4.0 | 4.0 | 4.0 |
| GWP | - | 211 | 195 | 178 | 161 | 144 | 127 | 329 | 295 |
| COP ratio | % (relative to R410A) | 99.5 | 99.5 | 99.6 | 99.8 | 99.9 | 100.1 | 99.3 | 99.3 |
| Refrigerating capacity ratio | % (relative to R410A) | 92.1 | 90.3 | 88.5 | 86.7 | 84.8 | 82.8 | 104.4 | 101.5 |
| Condensation glide | °C | 6.5 | 7.0 | 7.4 | 7.9 | 8.4 | 9.0 | 4.0 | 4.5 |

| Item | Unit | Ex.317 | Ex.318 | Ex. 319 | Ex.320 | Ex. 321 | Ex. 322 | Ex. 323 | Ex. 324 |
|---|---|---|---|---|---|---|---|---|---|
| HFO-1132(E) | mass% | 20.0 | 20.0 | 20.0 | 20.0 | 20.0 | 20.0 | 20.0 | 20.0 |
| R32 | mass% | 41.0 | 38.5 | 33.5 | 31.0 | 28.5 | 23.5 | 21.0 | 18.5 |
| R1234yf | mass% | 35.0 | 37.5 | 42.5 | 45.0 | 47.5 | 52.5 | 55.0 | 57.5 |
| $CO_2$ | mass% | 4.0 | 4.0 | 4.0 | 4.0 | 4.0 | 4.0 | 4.0 | 4.0 |
| GWP | - | 278 | 262 | 228 | 211 | 195 | 161 | 144 | 127 |
| COP ratio | % (relative to R410A) | 99.3 | 99.2 | 99.3 | 99.3 | 99.3 | 99.5 | 99.6 | 99.8 |
| Refrigerating capacity ratio | % (relative to R410A) | 100.0 | 98.4 | 95.2 | 93.5 | 91.7 | 88.1 | 86.2 | 84.3 |
| Condensation glide | °C | 4.8 | 5.1 | 5.8 | 6.2 | 6.7 | 7.6 | 8.1 | 8.6 |

| Item | Unit | Ex.325 | Ex.326 | Ex.327 | Ex. 328 | Ex. 329 | Ex.330 | Ex. 331 | Ex. 332 |
|---|---|---|---|---|---|---|---|---|---|
| HFO-1132(E) | mass% | 22.5 | 22.5 | 22.5 | 22.5 | 22.5 | 22.5 | 22.5 | 22.5 |
| R32 | mass% | 48.5 | 46.0 | 43.5 | 41.0 | 38.5 | 36.0 | 33.5 | 31.0 |
| R1234yf | mass% | 25.0 | 27.5 | 30.0 | 32.5 | 35.0 | 37.5 | 40.0 | 42.5 |
| $CO_2$ | mass% | 4.0 | 4.0 | 4.0 | 4.0 | 4.0 | 4.0 | 4.0 | 4.0 |
| GWP | - | 329 | 312 | 295 | 278 | 262 | 245 | 228 | 211 |

(continued)

| Item | Unit | Ex.325 | Ex.326 | Ex.327 | Ex. 328 | Ex. 329 | Ex.330 | Ex. 331 | Ex. 332 |
|---|---|---|---|---|---|---|---|---|---|
| COP ratio | % (relative to R410A) | 99.2 | 99.2 | 99.1 | 99.1 | 99.1 | 99.1 | 99.1 | 99.1 |
| Refrigerating capacity ratio | % (relative to R410A) | 105.6 | 104.2 | 102.7 | 101.3 | 99.7 | 98.1 | 96.5 | 94.8 |
| Condensation glide | °C | 3.8 | 4.0 | 4.3 | 4.6 | 4.9 | 5.2 | 5.6 | 6.0 |

| Item | Unit | Ex.333 | Ex.334 | Ex.335 | Ex.336 | Ex. 337 | Ex.338 | Ex.339 | Ex.340 |
|---|---|---|---|---|---|---|---|---|---|
| HFO-1132(E) | mass% | 22.5 | 22.5 | 22.5 | 22.5 | 22.5 | 22.5 | 22.5 | 25.0 |
| R32 | mass% | 28.5 | 26.0 | 23.5 | 21.0 | 18.5 | 16.0 | 13.5 | 43.5 |
| R1234yf | mass% | 45.0 | 47.5 | 50.0 | 52.5 | 55.0 | 57.5 | 60.0 | 27.5 |
| $CO_2$ | mass% | 4.0 | 4.0 | 4.0 | 4.0 | 4.0 | 4.0 | 4.0 | 4.0 |
| GWP | - | 194 | 178 | 161 | 144 | 127 | 111 | 94 | 295 |
| COP ratio | % (relative to R410A) | 99.1 | 99.2 | 99.3 | 99.4 | 99.5 | 99.7 | 99.9 | 99.0 |
| Refrigerating capacity ratio | % (relative to R410A) | 93.1 | 91.3 | 89.5 | 87.7 | 85.8 | 83.8 | 81.8 | 104.0 |
| Condensation glide | °C | 6.4 | 6.8 | 7.3 | 7.8 | 8.3 | 8.8 | 9.3 | 4.1 |

| Item | Unit | Ex.341 | Ex.342 | Ex.343 | Ex.344 | Ex.345 | Ex.346 | Ex.347 | Ex. 348 |
|---|---|---|---|---|---|---|---|---|---|
| HFO-1132(E) | mass% | 25.0 | 25.0 | 25.0 | 25.0 | 25.0 | 25.0 | 25.0 | 25.0 |
| R32 | mass% | 41.0 | 38.5 | 36.0 | 33.5 | 31.0 | 28.5 | 26.0 | 23.5 |
| R1234yf | mass% | 30.0 | 32.5 | 35.0 | 37.5 | 40.0 | 42.5 | 45.0 | 47.5 |
| $CO_2$ | mass% | 4.0 | 4.0 | 4.0 | 4.0 | 4.0 | 4.0 | 4.0 | 4.0 |
| GWP | - | 278 | 261 | 245 | 228 | 211 | 194 | 178 | 161 |
| COP ratio | % (relative to R410A) | 98.9 | 98.9 | 98.9 | 98.9 | 98.9 | 99.0 | 99.0 | 99.1 |
| Refrigerating capacity ratio | % (relative to R410A) | 102.5 | 101.0 | 99.4 | 97.8 | 96.1 | 94.4 | 92.7 | 90.9 |
| Condensation glide | °C | 4.4 | 4.7 | 5.0 | 5.4 | 5.7 | 6.1 | 6.5 | 7.0 |

Table 19

| Item | Unit | Ex.349 | Ex.350 | Ex. 351 | Ex. 352 | Ex.353 | Ex.354 | Ex. 355 | Ex.356 |
|---|---|---|---|---|---|---|---|---|---|
| HFO-1132(E) | mass% | 25.0 | 25.0 | 25.0 | 25.0 | 27.5 | 27.5 | 27.5 | 27.5 |
| R32 | mass% | 21.0 | 18.5 | 16.0 | 13.5 | 35.0 | 31.0 | 28.5 | 26.0 |
| R1234yf | mass% | 50.0 | 52.5 | 55.0 | 57.5 | 35.0 | 37.5 | 40.0 | 42.5 |

(continued)

| Item | Unit | Ex.349 | Ex.350 | Ex. 351 | Ex. 352 | Ex.353 | Ex.354 | Ex. 355 | Ex.356 |
|---|---|---|---|---|---|---|---|---|---|
| $CO_2$ | mass% | 4.0 | 4.0 | 4.0 | 4.0 | 4.0 | 4.0 | 4.0 | 4.0 |
| GWP | - | 144 | 127 | 110 | 94 | 238 | 211 | 194 | 178 |
| COP ratio | % (relative to R410A) | 99.2 | 99.3 | 99.5 | 99.7 | 98.8 | 98.8 | 98.8 | 98.8 |
| Refrigerating capacity ratio | % (relative to R410A) | 89.1 | 87.2 | 85.2 | 83.2 | 99.4 | 97.4 | 95. 8 | 94.0 |
| Condensation glide | °C | 7.5 | 8.0 | 8.5 | 9.0 | 5.0 | 5.5 | 5.9 | 6.3 |

| Item | Unit | Ex. 357 | Ex. 358 | Ex.359 | Ex.360 | Ex.361 | Ex. 362 | Ex. 363 | Ex.364 |
|---|---|---|---|---|---|---|---|---|---|
| HFO-1132(E) | mass% | 27.5 | 27.5 | 27.5 | 27.5 | 27.5 | 27.5 | 30.0 | 30.0 |
| R32 | mass% | 23.5 | 21.0 | 18.5 | 16.0 | 13.5 | 11.0 | 23.5 | 21.0 |
| R1234yf | mass% | 45.0 | 47.5 | 50.0 | 52.5 | 55.0 | 57.5 | 42.5 | 45.0 |
| $CO_2$ | mass% | 4.0 | 4.0 | 4.0 | 4.0 | 4.0 | 4.0 | 4.0 | 4.0 |
| GWP | - | 161 | 144 | 127 | 110 | 94 | 77 | 161 | 144 |
| COP ratio | % (relative to R410A) | 98.9 | 99.0 | 99.1 | 99.2 | 99.4 | 99.6 | 98.7 | 98.8 |
| Refrigerating capacity ratio | % (relative to R410A) | 92.3 | 90.4 | 88.6 | 86.7 | 84. 7 | 82.6 | 93.6 | 91.8 |
| Condensation glide | °C | 6.7 | 7.2 | 7.6 | 8.1 | 8.7 | 9.2 | 6.4 | 6.9 |

| Item | Unit | Ex.365 | Ex.366 | Ex.367 | Ex.368 | Ex.369 | Ex.400 | Ex. 401 | Ex. 402 |
|---|---|---|---|---|---|---|---|---|---|
| HFO-1132(E) | mass% | 30.0 | 30.0 | 30.0 | 30.0 | 32.5 | 32.5 | 32.5 | 32.5 |
| R32 | mass% | 18.5 | 13.5 | 11.0 | 8.5 | 21.0 | 10.5 | 16.0 | 35.0 |
| R1234yf | mass% | 47.5 | 52.5 | 55.0 | 57.5 | 42.5 | 45.0 | 47.5 | 50.0 |
| $CO_2$ | mass% | 4.0 | 4.0 | 4.0 | 4.0 | 4.0 | 4.0 | 4.0 | 4.0 |
| GWP | - | 127 | 94 | 77 | 60 | 144 | 127 | 110 | 239 |
| COP ratio | % (relative to R410A) | 98.9 | 99.2 | 99.3 | 99.5 | 98.6 | 98.7 | 98.8 | 99.1 |
| Refrigerating capacity ratio | % (relative to R410A) | 89.9 | 86.1 | 84.1 | 82.0 | 93.1 | 91.3 | 89.4 | 94.0 |
| Condensation glide | °C | 7.3 | 8.3 | 8.8 | 9.3 | 6.6 | 7.0 | 7.5 | 5.5 |

| Item | Unit | Ex.403 | Ex.404 | Ex.405 | Ex.406 | Ex.407 | Ex. 408 | Ex. 409 | Ex. 410 |
|---|---|---|---|---|---|---|---|---|---|
| HFO-1132(E) | mass% | 32.5 | 32.5 | 32.5 | 35.0 | 35.0 | 35.0 | 35.0 | 35.0 |

(continued)

| Item | Unit | Ex.403 | Ex.404 | Ex.405 | Ex.406 | Ex.407 | Ex. 408 | Ex. 409 | Ex. 410 |
|------|------|--------|--------|--------|--------|--------|---------|---------|---------|
| R32 | mass% | 11.0 | 8.5 | 6.0 | 16.0 | 13.5 | 11.0 | 8.5 | 6.0 |
| R1234yf | mass% | 52.5 | 55.0 | 57.5 | 45.0 | 47.5 | 50.0 | 52.5 | 55.0 |
| $CO_2$ | mass% | 4.0 | 4.0 | 4.0 | 4.0 | 4.0 | 4.0 | 4.0 | 4.0 |
| GWP | - | 77 | 60 | 43 | 110 | 93 | 77 | 60 | 43 |
| COP ratio | % (relative to R410A) | 99.1 | 99.3 | 99.5 | 98.6 | 98.7 | 98.9 | 99.1 | 99.3 |
| Refrigerating capacity ratio | % (relative to R410A) | 85.5 | 83.4 | 81.3 | 90.8 | 88.8 | 86.9 | 84.8 | 82.8 |
| Condensation glide | °C | 8.5 | 9.0 | 9.5 | 7.2 | 7.6 | 8.1 | 8.6 | 9.1 |

| Item | Unit | Ex. 411 | Ex. 412 | Ex. 413 | Ex. 414 | Ex. 415 | Ex. 416 | Ex. 417 | Ex. 418 |
|------|------|---------|---------|---------|---------|---------|---------|---------|---------|
| HFO-1132 (E) | mass% | 37.5 | 37.5 | 37.5 | 37.5 | 37.5 | 40.0 | 40.0 | 40.0 |
| R32 | mass% | 13.5 | 11.0 | 8.5 | 6.0 | 3.5 | 11.0 | 8.5 | 3.5 |
| R1234yf | mass% | 45.0 | 47.5 | 50.0 | 52.5 | 55.0 | 45.0 | 47.5 | 52.5 |
| $CO_2$ | mass% | 4.0 | 4.0 | 4.0 | 4.0 | 4.0 | 4.0 | 4.0 | 4.0 |
| GWP | - | 93 | 77 | 60 | 43 | 26 | 76 | 60 | 26 |
| COP ratio | % (relative to R410A) | 98.6 | 98.7 | 98.9 | 99.0 | 99.2 | 98.5 | 98.7 | 99.0 |
| Refrigerating capacity ratio | % (relative to R410A) | 90.2 | 88.2 | 86.2 | 84.2 | 82.0 | 89.6 | 87.6 | 83.4 |
| Condensation glide | °C | 7.3 | 7.8 | 8.3 | 8.8 | 9.2 | 7.5 | 7.9 | 8.9 |

| Item | Unit | Ex. 419 | Ex. 420 | Ex. 421 | Ex. 422 | Ex. 423 | Ex. 424 | Ex. 425 | Ex. 426 |
|------|------|---------|---------|---------|---------|---------|---------|---------|---------|
| HFO-1132 (E) | mass% | 40.0 | 42.5 | 42.5 | 42.5 | 42.5 | 45.0 | 45.0 | 45.0 |
| R32 | mass% | 1.0 | 8.5 | 35.0 | 3.5 | 1.0 | 6.0 | 3.5 | 1.0 |
| R1234yf | mass% | 55.0 | 45.0 | 47.5 | 50.0 | 52.5 | 45.0 | 47.5 | 50.0 |
| $CO_2$ | mass% | 4.0 | 4.0 | 4.0 | 4.0 | 4.0 | 4.0 | 4.0 | 4.0 |
| GWP | - | 9 | 60 | 239 | 26 | 9 | 43 | 26 | 9 |
| COP ratio | % (relative to R410A) | 99.2 | 98.5 | 98.8 | 98.8 | 99.0 | 98.5 | 98.6 | 98.8 |
| Refrigerating capacity ratio | % (relative to R410A) | 81.2 | 88.9 | 95.6 | 84.8 | 82.6 | 88.3 | 86.2 | 84.0 |
| Condensation glide | °C | 9.3 | 7.6 | 5.0 | 8.5 | 9.0 | 7.8 | 8.2 | 8.7 |

Table 20

| Item | Unit | Ex. 427 | Ex. 428 | Ex. 429 | Ex. 430 | Ex. 431 | Ex. 432 |
|---|---|---|---|---|---|---|---|
| HFO-1132 (E) | mass% | 47.5 | 47.5 | 50.0 | 50.0 | 52.5 | 55.0 |
| R32 | mass% | 4.5 | 2.0 | 3.5 | 1.0 | 2.0 | 1.0 |
| R1234yf | mass% | 44.0 | 46.5 | 42.5 | 45.0 | 41.5 | 40.0 |
| $CO_2$ | mass% | 4.0 | 4.0 | 4.0 | 4.0 | 4.0 | 4.0 |
| GWP | - | 33 | 16 | 26 | 9 | 16 | 9 |
| COP ratio | % (relative to R410A) | 98.4 | 98.6 | 98.3 | 98.5 | 98.3 | 98.2 |
| Refrigerating capacity ratio | % (relative to R410A) | 88.4 | 86.3 | 88.9 | 86.8 | 88.9 | 89.4 |
| Condensation glide | °C | 7.7 | 8.1 | 7.6 | 8.0 | 7.5 | 7.4 |

The results indicate that when the mass% of $CO_2$, R32, HFO-1132(E), and R1234yf based on their sum is respectively represented by w, x, y, and z, in the ternary composition diagrams of Figs. 2-9 in which the sum of R32, HFO-1132(E), and R1234yf is (100-w) mass%, when coordinates (x, y, z) are on the straight line A"B", the GWP of the mixed refrigerant is 350, and when the coordinates are on the right side of the straight line, the GWP of the mixed refrigerant is less than 350. The results also indicate that in the ternary composition diagrams of Figs. 2-9, when coordinates (x, y, z) are on the straight line A'B', the GWP of the mixed refrigerant is 250, and when the coordinates are on the right side of the straight line, the GWP of the mixed refrigerant is less than 250. The results further indicate that in the ternary composition diagrams of Figs. 2-9, when coordinates (x, y, z) are on the straight line AB, the GWP of the mixed refrigerant is 125, and when the coordinates are on the right side of the straight line, the GWP of the mixed refrigerant is less than 125.

It is found that the straight line connecting points D and C is positioned at the slightly left side of the curve connecting points at which the refrigerating capacity ratio relative to R410A is 80%. Accordingly, it is indicated that when the coordinates (x, y, z) are on the left side of the straight line connecting points D and C, the refrigerating capacity of the mixed refrigerant is 80% or more relative to R410A.

Coordinates of points A and B, A' and B', and A" and B" were determined by obtaining the approximate expression based on each of the points shown in the tables. Specifically, calculation was performed according to Table 11 (points A and B), Table 12 (points A' and B'), and Table 13 (points A" and B").

Table 21

| Point A | | | | | | | | | |
|---|---|---|---|---|---|---|---|---|---|
| Item | $1.2 \geq CO_2 > O$ | | | $4.0 \geq CO_2 \geq 1.2$ | | | $7.0 \geq CO_2 \geq 4.0$ | | |
| $CO_2$ | 0.0 | 0.6 | 1.2 | 1.2 | 2.5 | 4.0 | 4.0 | 5.5 | 7.0 |
| E-HFO-1132 | 81.6 | 81.0 | 80.4 | 80.4 | 79.1 | 77.6 | 77.6 | 76.1 | 74.6 |
| R32 | 18.4 | 18.4 | 18.4 | 18.4 | 18.4 | 18.4 | 18.4 | 18.4 | 18.4 |
| R1234yf | 0.0 | 0.0 | 0.0 | 0.0 | 0.0 | 0.0 | 0.0 | 0.0 | 0.0 |
| $CO_2$ | w | | | w | | | w | | |
| HFO-1132(E) approximate expression | -w+81.6 | | | -w+81.6 | | | -w+81.6 | | |
| R32 approximate expression | 18.4 | | | 18.4 | | | 18.4 | | |
| R1234yf approximate expression | 0.0 | | | 0.0 | | | 0.0 | | |
| Point B | | | | | | | | | |
| Item | $1.2 \geq CO_2 > O$ | | | $4.0 \geq CO_2 \geq 1.2$ | | | $7.0 \geq CO_2 \geq 4.0$ | | |
| $CO_2$ | 0.0 | 0.6 | 1.2 | 1.2 | 2.5 | 4.0 | 4.0 | 5.5 | 7.0 |
| E-HFO-1132 | 0.0 | 0.0 | 0.0 | 0.0 | 0.0 | 0.0 | 0.0 | 0.0 | 0.0 |
| R32 | 18.1 | 18.1 | 18.1 | 18.1 | 18.1 | 18.1 | 18.1 | 18.1 | 18.1 |
| R1234yf | 81.9 | 81.3 | 80.7 | 80.7 | 79.4 | 77.9 | 77.9 | 76.4 | 74.9 |
| $CO_2$ | w | | | w | | | w | | |

(continued)

| Point B | | | |
|---|---|---|---|
| Item | $1.2 \geq CO_2 > O$ | $4.0 \geq CO_2 \geq 1.2$ | $7.0 \geq CO_2 \geq 4.0$ |
| HFO-1132(E) approximate expression | 0.0 | 0.0 | 0.0 |
| R32 approximate expression | 18.1 | 18.1 | 18.1 |
| R1234yf approximate expression | -w+81.9 | -w+81.9 | -w+81.9 |

Table 22

| Point A' | | | | | | | | | |
|---|---|---|---|---|---|---|---|---|---|
| Item | $1.2 \geq CO_2 > O$ | | | $4.0 \geq CO_2 \geq 1.2$ | | | $7.0 \geq CO_2 \geq 4.0$ | | |
| $CO_2$ | 0.0 | 0.6 | 1.2 | 1.2 | 2.5 | 4.0 | 4.0 | 5.5 | 7.0 |
| E-HFO-1132 | 63.1 | 62.5 | 61.9 | 61.9 | 60.6 | 59.1 | 59.1 | 57.6 | 56.1 |
| R32 | 36.9 | 36.9 | 36.9 | 36.9 | 36.9 | 36.9 | 36.9 | 36.9 | 36.9 |
| R1234yf | 0.0 | 0.0 | 0.0 | 0.0 | 0.0 | 0.0 | 0.0 | 0.0 | 0.0 |
| $CO_2$ | w | | | w | | | w | | |
| HFO-1132(E) approximate expression | -w+63.1 | | | -w+63.1 | | | -w+63.1 | | |
| R32 approximate expression | 36.9 | | | 36.9 | | | 36.9 | | |
| R1234yf approximate expression | 0.0 | | | 0.0 | | | 0.0 | | |
| Point B' | | | | | | | | | |
| Item | $1.2 \geq CO_2 > O$ | | | $4.0 \geq CO_2 \geq 1.2$ | | | $7.0 \geq CO_2 \geq 4.0$ | | |
| $CO_2$ | 0.0 | 0.6 | 1.2 | 1.2 | 2.5 | 4.0 | 4.0 | 5.5 | 7.0 |
| E-HFO-1132 | 0.0 | 0.0 | 0.0 | 0.0 | 0.0 | 0.0 | 0.0 | 0.0 | 0.0 |
| R32 | 36.7 | 36.7 | 36.6 | 36.6 | 36.6 | 36.6 | 36.6 | 36.6 | 36.6 |
| R1234yf | 63.3 | 62.7 | 62.2 | 62.2 | 60.9 | 59.4 | 59.4 | 57.9 | 56.4 |
| $CO_2$ | w | | | w | | | w | | |
| HFO-1132(E) approximate expression | 0 | | | 0.0 | | | 0.0 | | |
| R32 approximate expression | -0.0833w+36.717 | | | 36.6 | | | 36.6 | | |
| R1234yf approximate expression | -0.9167w+63.283 | | | -w+63.4 | | | -w+63.4 | | |

Table 23

| Point A" | | | | | | | | | |
|---|---|---|---|---|---|---|---|---|---|
| Item | $1.2 \geq CO_2 > O$ | | | $4.0 \geq CO_2 \geq 1.2$ | | | $7.0 \geq CO_2 \geq 4.0$ | | |
| $CO_2$ | 0.0 | 0.6 | 1.2 | 1.2 | 2.5 | 4.0 | 4.0 | 5.5 | 7.0 |
| E-HFO-1132 | 48.2 | 47.6 | 47.0 | 47.0 | 45.7 | 44.2 | 44.2 | 42.7 | 41.2 |
| R32 | 51.8 | 51.8 | 51.8 | 51.8 | 51.8 | 51.8 | 51.8 | 51.8 | 51.8 |
| R1234yf | 0.0 | 0.0 | 0.0 | 0.0 | 0.0 | 0.0 | 0.0 | 0.0 | 0.0 |
| $CO_2$ | w | | | w | | | w | | |
| HFO-1132(E) approximate expression | -w+48.2 | | | -w+48.2 | | | -w+48.2 | | |
| R32 approximate expression | 51.8 | | | 51.8 | | | 51.8 | | |
| R1234yf approximate expression | 0.0 | | | 0.0 | | | 0.0 | | |
| Point B" | | | | | | | | | |

(continued)

| Item | $1.2 \geq CO_2 > O$ | | | $4.0 \geq CO_2 \geq 1.2$ | | | $7.0 \geq CO_2 \geq 4.0$ | | |
|---|---|---|---|---|---|---|---|---|---|
| $CO_2$ | 0.0 | 0.6 | 1.2 | 1.2 | 2.5 | 4.0 | 4.0 | 5.5 | 7.0 |
| E-HFO-1132 | 0.0 | 0.0 | 0.0 | 0.0 | 0.0 | 0.0 | 0.0 | 0.0 | 0.0 |
| R32 | 51.5 | 51.6 | 51.6 | 51.6 | 51.6 | 51.6 | 51.6 | 51.6 | 51.6 |
| R1234yf | 49.5 | 47.8 | 47.2 | 47.2 | 45.9 | 44.4 | 44.4 | 42.9 | 41.4 |
| $CO_2$ | w | | | w | | | w | | |
| HFO-1132(E) approximate expression | 0.0 | | | 0.0 | | | 0.0 | | |
| R32 approximate expression | $-1.5278w^2+2.75w+50.5$ | | | 51.6 | | | 51.6 | | |
| R1234yf approximate expression | $1.5278w^2-3.75w+49.5$ | | | $-w+48.4$ | | | $-w+48.4$ | | |

Coordinates of points C-G were determined by obtaining the approximate expression based on each of the points shown in the above tables. Specifically, calculation was performed as shown in Table 14.

Table 24

Point C

| Item | $1.2 \geq CO_2 > O$ | | | $4.0 \geq CO_2 \geq 1.2$ | | | $7.0 \geq CO_2 \geq 4.0$ | | |
|---|---|---|---|---|---|---|---|---|---|
| $CO_2$ | 0.0 | 0.6 | 1.2 | 1.2 | 2.5 | 4.0 | 4.0 | 5.5 | 7.0 |
| E-HFO-1132 | 58.3 | 55.4 | 52.4 | 52.4 | 46.2 | 39.5 | 39.5 | 33.0 | 26.8 |
| R32 | 0.0 | 0.0 | 0.0 | 0.0 | 0.0 | 0.0 | 0.0 | 0.0 | 0.0 |
| R1234yf | 41.7 | 44.0 | 46.4 | 46.4 | 51.3 | 56.5 | 56.5 | 61.5 | 66.2 |
| $CO_2$ | w | | | w | | | w | | |
| HFO-1132(E) approximate expression | $-4.9167w+58.317$ | | | $0.1081w^2-5.169w+58.447$ | | | $0.0667w^2-4.9667w+58.3$ | | |
| R32 approximate expression | 0.0 | | | 0.0 | | | 0.0 | | |
| R1234yf approximate expression | $3.9167w+41.683$ | | | $-0.1081w^2+4.169w+41.553$ | | | $-0.0667w^2+3.9667w+41.7$ | | |

Point D

| Item | $1.2 \geq CO_2 > O$ | | | $4.0 \geq CO_2 \geq 1.2$ | | | $7.0 \geq CO_2 \geq 4.0$ | | |
|---|---|---|---|---|---|---|---|---|---|
| $CO_2$ | 0.0 | 0.6 | 1.2 | 1.2 | 2.5 | 4.0 | 4.0 | 5.5 | 7.0 |
| E-HFO-1132 | 0.0 | 0.0 | 0.0 | 0.0 | 0.0 | 0.0 | 0.0 | 0.0 | 0.0 |
| R32 | 40.3 | 38.6 | 36.8 | 36.8 | 33.2 | 28.9 | 28.9 | 24.7 | 20.5 |
| R1234yf | 59.7 | 60.8 | 62.0 | 62.0 | 64.3 | 67.1 | 67.1 | 69.8 | 72.5 |
| $CO_2$ | w | | | w | | | w | | |
| HFO-1132(E) approximate expression | 0.0 | | | 0.0 | | | 0.0 | | |
| R32 approximate expression | $-2.9167w+40.317$ | | | $-2.8226w+40.211$ | | | $-2.8w+40.1$ | | |
| R1234yf approximate expression | $1.9167w+59.683$ | | | $1.8226w+59.789$ | | | $1.8w+59.9$ | | |

Point E

| Item | $1.2 \geq CO_2 > 0$ | | | $4.0 \geq CO_2 \geq 1.2$ | | | $7.0 \geq CO_2 \geq 4.0$ | | |
|---|---|---|---|---|---|---|---|---|---|
| $CO_2$ | 0.0 | 0.6 | 1.2 | 1.2 | 2.5 | 4.0 | 4.0 | 5.5 | 7.0 |
| E-HFO-1132 | 31.9 | 29.6 | 26.5 | 26.5 | 20.9 | 14.7 | 14.7 | 8.8 | 3.1 |
| R32 | 18.2 | 18.2 | 18.2 | 18.2 | 18.2 | 18.1 | 18.1 | 18.1 | 18.1 |
| R1234yf | 49.9 | 51.6 | 54.1 | 54.1 | 58.4 | 63.2 | 63.2 | 67.6 | 71.8 |
| $CO_2$ | w | | | w | | | w | | |
| HFO-1132(E) approximate expression | $-1.1111w^2-3.1667w+31.9$ | | | $0.0623w^2-4.5381w+31.856$ | | | $0.0444w^2-4.3556w+31.411$ | | |
| R32 approximate expression | 18.2 | | | $-0.0365w+18.26$ | | | 18.1 | | |
| R1234yf approximate expression | $1.1111w^2+2.1667w+49.9$ | | | $-0.0623w^2+3.5746w+49.884$ | | | $-0.0444w^2+3.3556w+50.489$ | | |

Point F

| Item | $1.2 \geq CO_2 > 0$ | | | $1.3 \geq CO_2 > 1.2$ | |
|---|---|---|---|---|---|
| $CO_2$ | 0.0 | 0.6 | 1.2 | 1.2 | 1.3 |
| E-HFO-1132 | 5.2 | 2.7 | 0.3 | 0.3 | 0 |
| R32 | 36.7 | 36.7 | 36.6 | 36.6 | 36.6 |
| R1234yf | 58.1 | 60.0 | 61.9 | 61.9 | 62.1 |
| $CO_2$ | w | | | w | |
| HFO-1132(E) approximate expression | $-4.0833w+5.1833$ | | | $-3.0w+3.9$ | |
| R32 approximate expression | $-0.0833w+36.717$ | | | 36.6 | |
| R1234yf approximate expression | $3.1666w+58.0997$ | | | $2.0w+59.5$ | |

Point G

| Item | $1.2 \geq CO_2 > 0$ | | |
|---|---|---|---|
| $CO_2$ | 0.0 | 0.6 | 1.2 |
| E-HFO-1132 | 26.2 | 29.6 | 38.1 |
| R32 | 22.2 | 18.2 | 10.0 |
| R1234yf | 51.6 | 51.6 | 50.7 |
| $CO_2$ | w | | |
| HFO-1132(E) approximate expression | $7.0833w^2+1.4167w+26.2$ | | |
| R32 approximate expression | $-5.8333w^2-3.1667w+22.2$ | | |
| R1234yf approximate expression | $-1.25w^2+0.75w+51.6$ | | |

Table 25

EP 4 375 098 B1

**Point M**

| Item | 1.2≥CO₂>O | | | 4.0≥CO₂≥1.2 | | | 7.0≥CO₂≥4.0 | | |
|---|---|---|---|---|---|---|---|---|---|
| $CO_2$ | 0.0 | 0.6 | 1.2 | 1.2 | 2.5 | 4.0 | 4.0 | 5.5 | 7.0 |
| E-HFO-1132 | 52.6 | 55.4 | 58.0 | 58.0 | 59.7 | 60.4 | 0.0 | 33.0 | 26.8 |
| R32 | 0.0 | 0.0 | 0.0 | 0.0 | 0.0 | 0.0 | 0.0 | 0.0 | 0.0 |
| R1234yf | 47.4 | 44.0 | 40.8 | 40.8 | 37.8 | 35.6 | 56.5 | 61.5 | 66.2 |
| $CO_2$ | w | | | w | | | w | | |
| HFO-1132(E) approximate expression | $-0.2778w^2+4.8333w+52.6$ | | | $-0.3004w^2+2.419w+55.53$ | | | $-0.0667w^2+0.8333w+58.133$ | | |
| R32 approximate expression | 0.0 | | | 0.0 | | | 0.0 | | |
| R1234yf approximate expression | $0.2778w^2-5.8333w+47.4$ | | | $0.3004w^2-3.419w+44.47$ | | | $0.0667w^2-1.8333w+41.867$ | | |

**Point W**

| Item | 1.2≥CO₂>O | | | 4.0≥CO₂≥1.2 | | | 7.0≥CO₂≥4.0 | | |
|---|---|---|---|---|---|---|---|---|---|
| $CO_2$ | 0.0 | 0.6 | 1.2 | 1.2 | 2.5 | 4.0 | 4.0 | 5.5 | 7.0 |
| E-HFO-1132 | 32.4 | 35.1 | 38.1 | 38.1 | 40.9 | 42.6 | 42.6 | 43.3 | 43.7 |
| R32 | 10.0 | 10.0 | 10.0 | 10.0 | 10.0 | 10.0 | 10.0 | 10.0 | 10.0 |
| R1234yf | 57.6 | 54.3 | 50.7 | 50.7 | 46.6 | 43.4 | 43.4 | 41.2 | 39.3 |
| $CO_2$ | w | | | w | | | w | | |
| HFO-1132(E) approximate expression | $0.4167w^2+4.25w+32.4$ | | | $-0.3645w^2+3.5024w+34.422$ | | | $-0.0667w^2+1.1w+39.267$ | | |
| R32 approximate expression | 10.0 | | | 10.0 | | | 10.0 | | |
| R1234yf approximate expression | $-0.4167w^2-5.25w+57.6$ | | | $0.3645w^2-4.5024w+55.578$ | | | $0.0667w^2-2.1w+50.733$ | | |

**Point N**

| Item | 1.2≥CO₂>O | | | 4.0≥CO₂≥1.2 | | | 7.0≥CO₂≥4.0 | | |
|---|---|---|---|---|---|---|---|---|---|
| $CO_2$ | 0.0 | 0.6 | 1.2 | 1.2 | 2.5 | 4.0 | 4.0 | 5.5 | 7.0 |
| E-HFO-1132 | 27.7 | 29.6 | 31.7 | 31.7 | 34.2 | 35.5 | 35.5 | 36.3 | 36.7 |
| R32 | 18.2 | 18.2 | 18.2 | 18.2 | 18.2 | 18.2 | 18.2 | 18.2 | 18.2 |
| R1234yf | 54.1 | 51.6 | 48.9 | 48.9 | 45.1 | 42.3 | 42.3 | 40.0 | 38.1 |
| $CO_2$ | w | | | w | | | w | | |

58

**Point N**

| Item | 1.2≥CO₂>O | 4.0≥CO₂≥1.2 | 7.0≥CO₂≥4.0 |
|---|---|---|---|
| HFO-1132(E) approximate expression | $0.2778w^2+3.0w+27.7$ | $-0.3773w^2+3.319w+28.26$ | $-0.0889w^2+1.3778w+31.411$ |
| R32 approximate expression | 18.2 | 18.2 | 18.2 |
| R1234yf approximate expression | $-0.2778w^2-4.0w+54.1$ | $0.3773w^2-4.319w+53.54$ | $0.0889w^2-2.3778w+50.389$ |

**Point O**

| Item | 1.2≥CO₂>O | | | 4.0≥CO₂≥1.2 | | | 7.0≥CO₂≥4.0 | | |
|---|---|---|---|---|---|---|---|---|---|
| $CO_2$ | 0.0 | 0.6 | 1.2 | 1.2 | 2.5 | 4.0 | 4.0 | 5.5 | 7.0 |
| E-HFO-1132 | 22.6 | 24.0 | 25.4 | 25.4 | 27.2 | 28.0 | 28.0 | 28.4 | 28.6 |
| R32 | 36.8 | 36.8 | 36.8 | 36.8 | 36.8 | 36.8 | 36.8 | 36.8 | 36.8 |
| R1234yf | 40.6 | 38.6 | 36.0 | 36.0 | 33.5 | 31.2 | 31.2 | 29.3 | 27.6 |
| $CO_2$ | w | | | w | | | w | | |
| HFO-1132(E) approximate expression | $0.8333w^2+1.8333w+22.6$ | | | $-0.1392w^2+1 4381w+24.475$ | | | $-0.0444w^2+0.6889w+25.956$ | | |
| R32 approximate expression | 36.8 | | | 36.8 | | | 36.8 | | |
| R1234yf approximate expression | $-0.8333w^2-2.8333w+40.6$ | | | $0.1392w^2-2.4381w+38.725$ | | | $0.0444w^2-1.6889w+37.244$ | | |

**Point P**

| Item | 1.2≥CO₂>O | | | 4.0≥CO₂≥1.2 | | | 7.0≥CO₂≥4.0 | | |
|---|---|---|---|---|---|---|---|---|---|
| $CO_2$ | 0.0 | 0.6 | 1.2 | 1.2 | 2.5 | 4.0 | 4.0 | 5.5 | 7.0 |
| E-HFO-1132 | 20.5 | 20.9 | 22.1 | 22.1 | 23.4 | 23.9 | 23.9 | 24.2 | 24.2 |
| R32 | 51.7 | 51.7 | 51.7 | 51.7 | 51.7 | 51.7 | 51.7 | 51.7 | 51.7 |
| R1234yf | 27.8 | 26.8 | 25.0 | 25.0 | 22.4 | 20.4 | 20.4 | 18.6 | 17.1 |
| $CO_2$ | w | | | w | | | w | | |
| HFO-1132(E) approximate expression | $1.1111w^2+20.5$ | | | $-0.2381w^2+1.881w+20.186$ | | | $-0.0667w^2+0.8333w+21.633$ | | |
| R32 approximate expression | 51.7 | | | 51.7 | | | 51.7 | | |
| R1234yf approximate expression | $-1.1111w^2-w+27.8$ | | | $0.2381w^2-2.881w+28.114$ | | | $0.0667w^2-1.8333w+26.667$ | | |

EP 4 375 098 B1

Coordinates of points on the curves IJ, JK, and KL were determined by obtaining the approximate expression based on each of the points shown in the above tables. Specifically, calculation was performed as shown in Table 15.

Table 26

| Kind of refrigerant | | I | Example | J | J | Example | K | K | Example | L |
|---|---|---|---|---|---|---|---|---|---|---|
| $CO_2$ | R32 | 0.0 | 10.0 | 18.3 | 18.3 | 27.6 | 36.8 | 36.8 | 44.2 | 51.7 |
| 0.0 | E-HFO-1132 | 72.0 | 57.2 | 48.5 | 48.5 | 41.2 | 35.6 | 35.6 | 32.0 | 28.9 |
| | R1234yf | 28.0 | 32.8 | 33.2 | 33.2 | 31.2 | 27.6 | 27.6 | 23.8 | 19.4 |
| 0.6 | E-HFO-1132 | 72.0 | 57.2 | 48.5 | 48.5 | 41.2 | 35.6 | 35.6 | 32.0 | 28.9 |
| | R1234yf | 27.4 | 32.2 | 32.6 | 32.6 | 30.6 | 27.0 | 27.0 | 23.2 | 18.8 |
| 1.2 | E-HFO-1132 | 72.0 | 57.2 | 48.5 | 48.5 | 41.2 | 35.6 | 35.6 | 32.0 | 28.9 |
| | R1234yf | 26.8 | 31.6 | 32.0 | 32.0 | 30.0 | 26.4 | 26.4 | 22.6 | 18.2 |
| 2.5 | E-HFO-1132 | 72.0 | 57.2 | 48.5 | 48.5 | 41.2 | 35.6 | 35.6 | 32.0 | 28.9 |
| | R1234yf | 25.5 | 30.3 | 30.7 | 30.7 | 28.7 | 25.1 | 25.1 | 21.3 | 16.9 |
| 4.0 | E-HFO-1132 | 72.0 | 57.2 | 48.5 | 48.5 | 41.2 | 35.6 | 35.6 | 32.0 | 28.9 |
| | R1234yf | 24.0 | 28.8 | 29.2 | 29.2 | 27.2 | 23.6 | 23.6 | 19.8 | 15.4 |
| 5.5 | E-HFO-1132 | 72.0 | 57.2 | 48.5 | 48.5 | 41.2 | 35.6 | 35.6 | 32.0 | 28.9 |
| | R1234yf | 22.5 | 27.3 | 27.7 | 27.7 | 25.7 | 22.1 | 22.1 | 18.3 | 13.9 |
| 7.0 | E-HFO-1132 | 72.0 | 57.2 | 48.5 | 48.5 | 41.2 | 35.6 | 35.6 | 32.0 | 28.9 |
| | R1234yf | 21.0 | 25.8 | 26.2 | 26.2 | 24.2 | 20.6 | 20.6 | 16.8 | 12.4 |
| $w=CO_2$ | E-HFO-1132 approximate expression When x=R32, | $0.0236x^2-1.716x+72.0$ | | | $0.0095x^2-1.2222x+67.676$ | | | $0.0049x^2-0.8842x+61.488$ | | |
| | R1234yf | $-0.0236x^2+0.716x+28.0-w$ | | | $-0.0095x^2+0.2222x+32.324-w$ | | | $-0.0049x^2-0.1158x+38.512-w$ | | |

Coordinates of points on the curves MW and WM were determined by obtaining the approximate expression based on each of the points shown in the above tables. Specifically, calculation was performed as shown in Table 16 (when 0 mass% < $CO_2$ concentration ≤ 1.2 mass%), Table 17 (when 1.2 mass% < $CO_2$ concentration ≤ 4.0 mass%), and Table 18 (4.0 mass% < $CO_2$ concentration ≤ 7.0 mass%).

Table 27

| 1.2≥$CO_2$>0 | | | | | | |
|---|---|---|---|---|---|---|
| Item | M | Ex. | W | W | Ex. | N |
| | 0.0 | 5.0 | 10.0 | 10.0 | 14.5 | 18.2 |
| $CO_2$=0 mass% | 52.6 | 39.2 | 32.4 | 32.4 | 29.3 | 27.7 |
| When x=R32, E-HFO-1132 approximate expression | $0.132x^2-3.34x+52.6$ | | | $0.0313x^2-1.4551x+43.824$ | | |
| $CO_2$=0.6 mass% | 55.4 | 42.4 | 35.1 | 35.1 | 31.6 | 29.6 |
| When x=R32, E-HFO-1132 approximate expression | $0.114x^2-3.17x+55.4$ | | | $0.0289x^2-1.4866x+47.073$ | | |
| $CO_2$=1.2 mass% | 58.0 | 45.2 | 38.1 | 38.1 | 34.0 | 31.7 |
| When x=R32, E-HFO-1132 approximate expression | $0.114x^2-3.13x+58.0$ | | | $0.0353x^2-1.776x+52.330$ | | |
| Approximate expression of coefficients a, b, and c when w=$CO_2$ concentration in E-HFO-1132 approximate expression $ax^2+bx+c$ | | | | | | |
| Coefficient a approximate expression | $0.025w^2-0.045w+0.132$ | | | $0.0122w^2-0.0113w+0.0313$ | | |
| Coefficient b approximate expression | $-0.1806w^2+0.3917w-3.34$ | | | $-0.3582w^2+0.1624w-1.4551$ | | |
| Coefficient c approximate expression | $-0.2778w^2+4.8333w+52.6$ | | | $2.7889w^2+3.7417w+43.824$ | | |
| x=R32, w=$CO_2$ 1.2≥w>0 E-HFO-1132 approximate expression | $(0.025w^2-0.045w+0.132)x^2$ $+(-0.1806w^2+0.3917w-3.34)x$ $+(-0.2778w^2+4.8333w+52.6)$ | | | $(0.0122w^2-0.0113w+0.0313)x^2$ $+(-0.3582w^2+0.1624w-1.4551)x$ $+(2.7889w^2+3.7417w+43.824)$ | | |
| R1234yf | | 100-w-x-y | | 100-w-x-y | | |

Table 28

| 4.0≥$CO_2$≥1.2 | | | | | | |
|---|---|---|---|---|---|---|
| Item | M | Ex. | W | W | Ex. | N |
| | 0.0 | 5.0 | 10.0 | 10.0 | 14.5 | 18.2 |
| $CO_2$=1.2 mass% | 58 | 45.2 | 38.1 | 38.1 | 34 | 31.7 |
| When x=R32, E-HFO-1132 approximate expression | $0.114x^2-3.13x+58.0$ | | | $0.0353x^2-1.776x+52.330$ | | |
| $CO_2$=2.5 mass% | 59.7 | 48.1 | 40.9 | 40.9 | 36.9 | 34.2 |
| When x=R32, E-HFO-1132 approximate expression | $0.088x^2-2.76x+59.7$ | | | $0.0194x^2-1.3644x+52.603$ | | |
| $CO_2$=4.0 mass% | 60.4 | 49.6 | 42.6 | 42.6 | 38.3 | 35.5 |
| When x=R32, E-HFO-1132 approximate expression | $0.076x^2-2.54x+60.4$ | | | $0.0242x^2-1.5495x+55.671$ | | |

(continued)

| Approximate expression of coefficients a, b, and c when w=$CO_2$ concentration in E-HFO-1132 approximate expression $ax^2+bx+c$ | | |
|---|---|---|
| Coefficient a approximate expression | $0.0043w^2-0.0359w+0.1509$ | $0.0055w^2-0.0326w+0.0665$ |
| Coefficient b approximate expression | $-0.0493w^2+0.4669w-3.6193$ | $-0.1571w^2+0.8981w-2.6274$ |
| Coefficient c approximate expression | $-0.3004w^2+2.419w+55.53$ | $0.6555w^2-2.2153w+54.044$ |
| x=R32, w=$CO_2$ 4.0≥w≥1.2 E-HFO-1132 approximate expression | $(0.0043w^2-0.0359w+0.1509)x^2$ $+(-0.0493w^2+0.4669w-3.6193)x$ $+(-0.3004w^2+2.419w+55.53)$ | $(0.0055w^2-0.0326w+0.0665)x^2$ $+(-0.1571w^2+0.8981w-2.6274)x$ $+(0.6555w^2-2.2153w+54.044)$ |
| R1234yf | 100-w-x-y | 100-w-x-y |

Table 29

| 7.0≥$CO_2$≥4.0 | | | | | | |
|---|---|---|---|---|---|---|
| Item | M | Example | W | W | Example | N |
| | 0.0 | 5.0 | 10.0 | 10.0 | 14.5 | 18.2 |
| $CO_2$=4.0 mass% | 60.4 | 49.6 | 42.6 | 42.6 | 38.3 | 35.5 |
| When x=R32, E-HFO-1132 approximate expression | $0.076x^2-2.54x+60.4$ | | | $0.0242x^2-1.5495x+55.671$ | | |
| $CO_2$=5.5 mass% | 60.7 | 50.3 | 43.3 | 43.3 | 39 | 36.3 |
| When x=R32, E-HFO-1132 approximate expression | $0.068x^2-2.42x+60.7$ | | | $0.0275x^2-1.6303x+56.849$ | | |
| $CO_2$=7.0 mass% | 60.7 | 50.3 | 43.7 | 43.7 | 39.5 | 36.7 |
| When x=R32, E-HFO-1132 approximate expression | $0.076x^2-2.46x+60.7$ | | | $0.0215x^2-1.4609x+56.156$ | | |
| Approximate expression of coefficients a, b, and c when w-$CO_2$ concentration in E-HFO-1132 approximate expression $ax^2+bx+c$ | | | | | | |
| Coefficient a approximate expression | $0.00357w^2-0.0391w+0.1756$ | | | $-0.002061w^2+0.0218w-0.0301$ | | |
| Coefficient b approximate expression | $-0.0356w^2+0.4178w-3.6422$ | | | $0.0556w^2-0.5821w-0.1108$ | | |
| Coefficient c approximate expression | $-0.0667w^2+0.8333w+58.103$ | | | $-0.4158w^2+4.7352w+43.383$ | | |
| x=R32, w=$CO_2$ 7.0≥w≥4.0 E-HFO-1132 approximate expression | $(0.00357w^2-0.0391w+0.1756)x^2$ $+(-0.0356w^2+0.4178w-3.6422)x$ $+(-0.0667w^2+0.8333w+58.103)$ | | | $(-0.002061w^2+0.0218w-0.0301)x^2$ $+(0.0556w^2-0.5821w-0.1108)x$ $+(-0.4158w^2+4.7352w+43.383)$ | | |
| R1234yf | 100-w-x-y | | | 100-w-x-y | | |

Coordinates of points on the curves NO and OP were determined by obtaining the approximate expression based on each of the points shown in the above tables. Specifically, calculation was performed as shown in Table 19 (when 0 mass% < $CO_2$ concentration ≤ 1.2 mass%), Table 20 (when 1.2 mass% < $CO_2$ concentration ≤ 4.0 mass%), and Table 21 (4.0 mass% < $CO_2$ concentration ≤ 7.0 mass%).

Table 30

| 1.2≥$CO_2$>0 | | | | | | |
|---|---|---|---|---|---|---|
| Item | N | Example | O | O | Example | P |
| | 18.2 | 27.6 | 36.8 | 36.8 | 44.2 | 51.7 |
| $CO_2$=0 mass% | 27.7 | 24.5 | 22.6 | 22.6 | 21.2 | 20.5 |
| When x=R32, E-HFO-1132 approximate expression | $0.0072x^2-0.6701x+37.512$ | | | $0.0064x^2-0.7103x+40.07$ | | |
| $CO_2$=0.6 mass% | 29.6 | 26.3 | 24 | 24 | 22.4 | 20.9 |
| When x=R32, E-HFO-1132 approximate expression | $0.0054x^2-0.5999x+38.719$ | | | $0.0011x^2-0.3044x+33.727$ | | |
| $CO_2$=1.2 mass% | 31.7 | 27.9 | 25.4 | 25.4 | 23.7 | 22.1 |
| When x=R32, E-HFO-1132 approximate expression | $0.0071x^2-0.7306x+42.636$ | | | $0.0011x^2-0.3189x+35.644$ | | |
| Approximate expression of coefficients a, b, and c when w=$CO_2$ concentration in E-HFO-1132 approximate expression $ax^2+bx+c$ | | | | | | |
| Coefficient a approximate expression | $0.00487w^2-0.0059w+0.0072$ | | | $0.0074w^2-0.0133w+0.0064$ | | |
| Coefficient b approximate expression | $-0.279w^2+0.2844w-0.6701$ | | | $-0.5839w^2+1.0268w-0.7103$ | | |
| Coefficient c approximate expression | $3.7639w^2-0.2467w+37.512$ | | | $11.472w^2-17.455w+40.07$ | | |
| x=R32, w=$CO_2$ 1.2≥w>0 E-HFO-1132 approximate expression | $(0.00487w^2-0.0059w+0.0072)x^2$ $+(-0.279w^2+0.2844w-0.6701)x$ $+(3.7639w^2-0.2467w+37.512)$ | | | $(0.0074w^2-0.0133w+0.0064)x^2$ $+(-0.5839w^2+1.0268w-0.7103)x$ $+(11.472w^2-17.455w+40.07)$ | | |
| R1234yf | 100-w-x-y | | | 100-w-x-y | | |

Table 31

| 4.0≥$CO_2$≥1.2 | | | | | | |
|---|---|---|---|---|---|---|
| Item | N | Ex. | O | O | Ex. | P |
| | 18.2 | 27.6 | 36.8 | 36.8 | 44.2 | 51.7 |
| $CO_2$=1.2 mass% | 31.7 | 27.9 | 25.4 | 25.4 | 23.7 | 22.1 |
| When x=R32, E-HFO-1132 approximate expression | $0.0071x^2-0.7306x+42.636$ | | | $0.0011x^2-0.3189x+35.644$ | | |
| $CO_2$=2.5 mass% | 34.2 | 29.9 | 27.2 | 27.2 | 25.2 | 23.4 |
| When x=R32, E-HFO-1132 approximate expression | $0.0088x^2-0.8612x+46.954$ | | | $0.002x^2-0.4348x+40.5$ | | |
| $CO_2$=4.0 mass% | 35.5 | 31 | 28 | 28 | 25.9 | 23.9 |
| When x=R32, E-HFO-1132 approximate expression | $0.0082x^2-0.8546x+48.335$ | | | $0.0011x^2-0.3768x+40.412$ | | |

(continued)

| Approximate expressions of coefficients a, b, and c when W-$CO_2$ concentration in E-HFO-1132 approximate expression $ax^2+bx+c$ | | |
|---|---|---|
| Coefficient a approximate expression | $-0.00062w^2+0.0036w+0.0037$ | $-0.000463w^2+0.0024w-0.0011$ |
| Coefficient b approximate expression | $0.0375w^2-0.239w-0.4977$ | $0.0457w^2-0.2581w-0.075$ |
| Coefficient c approximate expression | $-0.8575w^2+6.4941w+36.078$ | $-1.355w^2+8.749w+27.096$ |
| x=R32, w=$CO_2$ 4.0≥w≥1.2 E-HFO-1132 approximate expression | $(-0.00062w^2+0.0036w+0.0037)x^2$ $+(0.0375w^2-0.239w-0.4977)x$ $+(-0.8575w^2+6.4941w+36.078)$ | $(-0.000463w^2+0.0024w-0.0011)x^2$ $+(0.0457w^2-0.2581w-0.075)x$ $+(-1.355w^2+8.749w+27.096)$ |
| R1234yf | 100-w-x-y | 100-w-x-y |

Table 32

| $7.0≥CO_2≥4.0$ | | | | | | |
|---|---|---|---|---|---|---|
| Item | N | Ex. | O | O | Ex. | P |
| | 18.2 | 27.6 | 36.8 | 36.8 | 44.2 | 51.7 |
| $CO_2$=4.0 mass% | 35.5 | 31.0 | 28.0 | 28.0 | 25.9 | 23.9 |
| When x=R32, E-HFO-1132 approximate expression | $0.0082x^2-0.8546x+48.335$ | | | $0.0011x^2-0.3768x+40.412$ | | |
| $CO_2$=5.5 mass% | 36.3 | 31.6 | 28.4 | 28.4 | 26.2 | 24.2 |
| When x=R32, E-HFO-1132 approximate expression | $0.0082x^2-0.8747x+49.51$ | | | $0.0021x^2-0.4638x+42.584$ | | |
| $CO_2$=7.0 mass% | 36.7 | 31.9 | 28.6 | 28.6 | 26.4 | 24.2 |
| When x=R32, E-HFO-1132 approximate expression | $0.0082x^2-0.8848x+50.097$ | | | $0.0003x^2-0.3188x+39.923$ | | |
| Approximate expression of Coefficients a, b, and c when w-$CO_2$ concentration In E-HFO-1132 approximate expression $ax^2+bx+c$ | | | | | | |
| Coefficient a approximate expression | 0.0082 | | | $-0.0006258w^2+0.0066w-0.0153$ | | |
| Coefficient b approximate expression | $0.0022w^2-0.0345w-0.7521$ | | | $0.0516w^2-0.5478w+0.9894$ | | |
| Coefficient c approximate expression | $-0.1307w^2+2.0247w+42.327$ | | | $-1.074w^2+11.651w+10.992$ | | |
| x=R32, w=$CO_2$ 7.0≥w≥4.0 E-HFO-1132 approximate expression | $0.0082x^2+(0.0022w^2-0.0345w-0.7521)x$ $+(-0.1307w^2+2.0247w+42.327)$ | | | $(-0.0006258w^2+0.0066w-0.0153)x^2$ $+(0.0516w^2-0.5478w+0.9894)x$ $+(-1.074w^2+11.651w+10.992)$ | | |
| R1234yf | 100-w-x-y | | | 100-w-x-y | | |

Description of Reference Numerals

1:     Sample cell

2:    High-speed camera

3:    Xenon lamp

4:    Collimating lens

5:    Collimating lens

6:    Ring filter

**Claims**

1.    A composition comprising a refrigerant comprising $CO_2$, trans-1,2-difluoroethylene (HFO-1132(E)), difluoromethane (R32), and 2,3,3,3-tetrafluoro-1-propene (R1234yf); the composition further containing water, the water content being $\leq 0.1$ mass% based on the entire refrigerant,

wherein, when the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are within the range of a figure surrounded by curves IJ, JK, and KL, and straight lines LB", B"D, DC and CI that connect the points I, J, K, L, B", D and C, or on the above line segments (excluding points on the straight lines B"D and CI):

I    (0.0, 72.0, 28.0-w),
J    (18.3, 48.5, 33.2-w),
K    (36.8, 35.6, 27.6-w),
L    (51.7, 28.9, 19.4-w); and

if

$$0 < w \leq 1.2:$$

B"    $(-1.5278w^2+2.75w+50.5, 0.0, 1.5278w^2-3.75w+49.5)$,
D    $(-2.9167w+40.317, 0.0, 1.9167w+59.683)$,
C    $(0.0, -4.9167w+58.317, 3.9167w+41.683)$;

if

$$1.2 < w \leq 4.0:$$

B"    (51.6, 0.0, 48.4-w),
D    $(-2.8226w+40.211, 0.0, 1.8226w+59.789)$,
C    $(0.0, 0.1081w^2-5.169w+58.447, -0.1081w^2+4.169w+41.553)$;

if

$$4.0 < w \leq 7.0:$$

B"    (51.6, 0.0, 48.4-w),
D    $(-2.8w+40.1, 0.0, 1.8w+59.9)$,
C    $(0.0, 0.0667w^2-4.9667w+58.3, -0.0667w^2+3.9667w+41.7)$;

the curves IJ, JK and KL being represented by the following coordinates:

IJ       (x, $0.0236x^2$-1.716x+72, $-0.0236x^2$+0.716x+28-w),

JK       (x, $0.0095x^2$-1.2222x+67.676, $-0.0095x^2$+0.2222x+32.324-w),

KL       (x, $0.0049x^2$-0.8842x+61.488, $-0.0049x^2$-0.1158x+38.512-w).

2.   A composition comprising a refrigerant comprising $CO_2$, HFO-1132(E), R32, and R1234yf; the composition further containing water, the water content being $\leq$ 0.1 mass% based on the entire refrigerant,

wherein, when the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are
within the range of a figure surrounded by curves IJ and JK, and straight lines KF, FC and CI that connect the points I, J, K, F and C, or on the above line segments (excluding points on the straight line CI):

I       (0.0, 72.0, 28.0-w),

J       (18.3, 48.5, 33.2-w),

K       (36.8, 35.6, 27.6-w), and

if

$$0 < w \leq 1.2:$$

F       (-0.0833w+36.717, -4.0833w+5.1833, 3.1666w+58.0997),

C       (0.0, -4.9167w+58.317, 3.9167w+41.683);

if

$$1.2 < w \leq 1.3:$$

F       (36.6, -3w+3.9, 2w+59.5),

C       (0.0, $0.1081w^2$-5.169w+58.447, $-0.1081w^2$+4.169w+41.553);

or within the range of a figure surrounded by curves IJ and JK, and straight lines KB', B'D, DC and CI that connect the points I, J, K, B', D and C, or on the above line segments (excluding points on the straight line CI):

I       (0.0, 72.0, 28.0-w),

J       (18.3, 48.5, 33.2-w),

K       (36.8, 35.6, 27.6-w),

B'       (36.6, 0.0, -w+63.4), and

if

$$1.3 < w \leq 4.0:$$

D       (-2.8226w+40.211, 0.0, 1.8226w+59.789),

C       (0.0, $0.1081w^2$-5.169w+58.447, $-0.1081w^2$+4.169w+41.553);

if

$$4.0 < w \leq 7.0:$$

D  (-2.8w+40.1, 0.0, 1.8w+59.9),
C  (0.0, $0.0667w^2$-4.9667w+58.3, $-0.0667w^2$+3.9667w+41.7);

the curves IJ and JK being represented by the following coordinates:

IJ  (x, $0.0236x^2$-1.716x+72, $-0.0236x^2$+0.716x+28-w);
JK  (x, $0.0095x^2$-1.2222x+67.676, $-0.0095x^2$+0.2222x+32.324-w).

3. A composition comprising a refrigerant comprising $CO_2$, R32, HFO-1132(E), and R1234yf; the composition further containing water, the water content being ≤ 0.1 mass% based on the entire refrigerant,

wherein, when the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are within the range of a figure surrounded by curves IJ and JK, and straight lines KF, FC and CI that connect the points I, J, E and C, or on the above line segments (excluding points on the straight line CI):

I  (0.0, 72.0, 28.0-w),
J  (18.3, 48.5, 33.2-w), and

if

$$0 < w \leq 1.2:$$

E  (18.2, $-1.1111w^2$-3.1667w+31.9, $1.1111w^2$+2.1667w+49.9),
C  (0.0, -4.9167w+58.317, 3.9167w+41.683);

if

$$1.2 < w \leq 4.0:$$

E  (-0.0365w+18.26, $0.0623w^2$-4.5381w+31.856, $-0.0623w^2$+3.5746w+49.884),
C  (0.0, $0.1081w^2$-5.169w+58.447, $-0.1081w^2$+4.169w+41.553); or

if

$$4.0 < w \leq 7.0:$$

E  (18.1, $0.0444w^2$-4.3556w+31.411, $-0.0444w^2$+3.3556w+50.489),
C  (0.0, $0.0667w^2$-4.9667w+58.3, $-0.0667w^2$+3.9667w+41.7);

the curve IJ being represented by the coordinates (x, $0.0236x^2$-1.716x+72, $-0.0236x^2$+0.716x+28-w).

4. A composition comprising a refrigerant comprising $CO_2$, R32, HFO-1132(E), and R1234yf; the composition further containing water, the water content being ≤ 0.1 mass% based on the entire refrigerant,

wherein, when the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are
if

$$0 < w \le 0.6:$$

within the range of a figure surrounded by curves GO and OP, and straight lines PB", B"D and DG that connect the points G, O, P, B", and D, or on the above line segments (excluding points on the straight line B"D):

G     ($-5.8333w^2-3.1667w+22.2$, $7.0833w^2+1.4167w+26.2$, $-1.25w^2+0.75w+51.6$),

O     ($36.8$, $0.8333w^2+1.8333w+22.6$, $-0.8333w^2-2.8333w+40.6$),

P     ($51.7$, $1.1111w^2+20.5$, $-1.1111w^2-w+27.8$),

B"     ($-1.5278w^2+2.75w+50.5$, $0.0$, $1.5278w^2-3.75w+49.5$),

D     ($-2.9167w+40.317$, $0.0$, $1.9167w+59.683$);

the curves GO and OP being represented by the following coordinates:

GO     ($x$, $(0.00487w^2-0.0059w+0.0072)x^2+(-0.279w^2+0.2844w-0.6701)x+3.7639w^2-0.2467w+37.512$, $100-w-x-y$);

OP     ($x$, $(0.0074w^2-0.0133w+0.0064)x^2+(-0.5839w^2+1.0268w-0.7103)x+11.472w^2-17.455w+40.07$, $100-w-x-y$);

if

$$0.6 < w \le 1.2:$$

within the range of a figure surrounded by curves GN, NO and OP, and straight lines PB", B"D and DG that connect the points G, N, O, P, B" and D, or on the above line segments (excluding points on the straight line B"D):

points G, O, P, B" and D being as defined above, and N being ($18.2$, $0.2778w^2+3w+27.7$, $-0.2778w^2-4w+54.1$);

the curve OP being as defined above, and the curves GN and NO being represented by the following coordinates:

GN     ($x$, $(0.0122w^2-0.0113w+0.0313)x^2+(-0.3582w^2+0.1624w-1.4551)x+2.7889w^2$ $+3.7417w+43.824$ , $100-w-x-y$);

NO     ($x$, $(0.00487w^2-0.0059w+0.0072)x^2+(-0.279w^2+0.2844w-0.6701)x+3.7639w^2-0.2467w+37.512$, $100-w-x-y$);

if

$$1.2 < w \le 4.0:$$

within the range of a figure surrounded by curves MW, WN, NO, and OP, and straight lines PB", B"D, DC, and CM that connect the points M, W, N, O, P, B", D and C, or on the above line segments (excluding points on the straight line B"D and CM):

M     ($0.0$, $-0.3004w^2+2.419w+55.53$, $0.3004w^2-3.419w+44.47$),

W     ($10.0$, $-0.3645w^2+3.5024w+34.422$, $0.3645w^2-4.5024w+55.578$),

N     ($18.2$, $-0.3773w^2+3.319w+28.26$, $0.3773w^2-4.319w+53.54$),

O     ($36.8$, $-0.1392w^2+1.4381w+24.475$, $0.1392w^2-2.4381w+38.725$),

P     ($51.7$, $-0.2381w^2+1.881w+20.186$, $0.2381w^2-2.881w+28.114$),

B"     ($51.6$, $0.0$, $-w+48.4$),

D     ($-2.8226w+40.211$, $0.0$, $1.8226w+59.789$),

C     ($0.0$, $0.1081w^2-5.169w+58.447$, $-0.1081w^2+4.169w+41.553$);

the curves MW, WN, NO, and OP being represented by the following coordinates:

MW    $(x, (0.0043w^2-0.0359w+0.1509)x^2+(-0.0493w^2+0.4669w-3.6193)x-0.3004w^2+2.419w+55.53, 100-w-x-y)$,

WN    $(x, (0.0055w^2-0.0326w+0.0665)x^2+(-0.1571w^2+0.8981w-2.6274)x+0.6555w^2-2.2153w+54.044, 100-w-x-y)$,

NO    $(x, (-0.00062w^2+0.0036w+0.0037)x^2+(0.0375w^2-0.239w-0.4977)x-0.8575w^2+6.4941w+36.078, 100-w-x-y)$,

OP    $(x, (-0.000463w^2+0.0024w-0.0011)x^2+(0.0457w^2-0.2581w-0.075)x-1.355w^2+8.749w+27.096, 100-w-x-y)$; and

if

$$4.0 < w \le 7.0:$$

within the range of a figure surrounded by curves MW, WN, NO, and OP, and straight lines PB", B"D, DC, and CM that connect the points M, W, N, O, P, B", D and C, or on the above line segments (excluding points on the straight line B"D and CM):

M    $(0.0, -0.0667w^2+0.8333w+58.133, 0.0667w^2-1.8333w+41.867)$,

W    $(10.0, -0.0667w^2+1.1w+39.267, 0.0667w^2-2.1w+50.733)$,

N    $(18.2, -0.0889w^2+1.3778w+31.411, 0.0889w^2-2.3778w+50.389)$,

O    $(36.8, -0.0444w^2+0.6889w+25.956, 0.0444w^2-1.6889w+37.244)$,

P    $(51.7, -0.0667w^2+0.8333w+21.633, 0.0667w^2-1.8333w+26.667)$,

B"    $(51.6, 0.0, -w+48.4)$,

D    $(-2.8w+40.1, 0.0, 1.8w+59.9)$,

C    $(0.0, 0.0667w^2-4.9667w+58.3, -0.0667w^2+3.9667w+41.7)$;

the curves MW, WN, NO, and OP being represented by the following coordinates:

MW    $(x, (0.00357w^2-0.0391w+0.1756)x^2+(-0.0356w^2+0.4178w-3.6422)x-0.0667w^2+0.8333w+58.103, 100-w-x-y)$,

WN    $(x, (-0.002061w^2+0.0218w-0.0301)x^2+(0.0556w^2-0.5821w-0.1108)x-0.4158w^2+4.7352w+43.383, 100-w-x-y)$,

NO    $(x, 0.0082x^2+(0.0022w^2-0.0345w-0.7521)x-0.1307w^2+2.0247w+42.327, 100-w-x-y)$,

OP    $(x, (-0.0006258w^2+0.0066w-0.0153)x^2+(0.0516w^2-0.5478w+0.9894)x-1.074w^2+11.651w+10.992, 100-w-x-y)$.

5. A composition comprising a refrigerant comprising $CO_2$, R32, HFO-1132(E), and R1234yf; the composition further containing water, the water content being $\le 0.1$ mass% based on the entire refrigerant,

   wherein, when the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are
   if

$$0 < w \le 0.6:$$

within the range of a figure surrounded by curve GO, and straight lines OF and FG that connect the points G, O and F, or on the above line segments:

G    $(-5.8333w^2-3.1667w+22.2, 7.0833w^2+1.4167w+26.2, -1.25w^2+0.75w+51.6)$,

O    $(36.8, 0.8333w^2+1.8333w+22.6, -0.8333w^2-2.8333w+40.6)$,

F    $(-0.0833w+36.717, -4.0833w+5.1833, 3.1666w+58.0997)$, or the above line segments;

the curve GO being represented by the coordinates (x, $(0.00487w^2-0.0059w+0.0072)x^2+(-0.279w^2+0.2844w-0.6701)x+3.7639w^2-0.2467w+37.512$, 100-w-x-y);
if

$$0.6 < w \leq 1.2:$$

within the range of a figure surrounded by curves GN and NO, and straight lines OF and FG that connect the points G, N, O and F, or on the above line segments:

points G, O and F being as defined above, and N being $(18.2, 0.2778w^2+3.0w+27.7, -0.2.778w^2-4.0w+54.1)$;
the curves GN and NO being represented by the following coordinates:

GN $(x, (0.0122w^2-0.0113w+0.0313)x^2+(-0.3582w^2+0.1624w-1.4551)x+2.7889w^2+3.7417w+43.824, 100-w-x-y)$;

NO $(x, (0.00487w^2-0.0059w+0.0072)x^2+(-0.279w^2+0.2844w-0.6701)x+3.7639w^2-0.2467w+37.512, 100-w-x-y)$;

if

$$1.2 < w \leq 1.3:$$

within the range of a figure surrounded by curves MW, WN, and NO, and straight lines OF, FC, and CM that connect the points M, W, N, O, F and C, or on the above line segments (excluding points on the straight line CM):

M $(0.0, -0.3004w^2+2.419w+55.53, 0.3004w^2-3.419w+44.47)$,

W $(10.0, -0.3645w^2+3.5024w+34.422, 0.3645w^2-4.5024w+55.578)$,

N $(18.2, -0.3773w^2+3.319w+28.26, 0.3773w^2-4.319w+53.54)$,

O $(36.8, -0.1392w^2+1.4381w+24.475, 0.1392w^2-2.4381w+38.725)$,

F $(36.6, -3w+3.9, 2w+59.5)$,

C $(0.0, 0.1081w^2-5.169w+58.447, -0.1081w^2+4.169w+41.553)$;

the curves MW, WN and NO being represented by the following coordinates:

MW $(x, (0.0043w^2-0.0359w+0.1509)x^2+(-0.0493w^2+0.4669w-3.6193)x-0.3004w^2+2.419w+55.53, 100-w-x-y)$,

WN $(x, (0.0055w^2-0.0326w+0.0665)x^2+(-0.1571w^2+0.8981w-2.6274)x+0.6555w^2-2.2153w+54.044, 100-w-x-y)$,

NO $(x, (-0.00062w^2+0.0036w+0.0037)x^2+(0.0375w^2-0.239w-0.4977)x-0.8575w^2+6.4941w+36.078, 100-w-x-y)$;

if

$$1.3 < w \leq 4.0:$$

within the range of a figure surrounded by curves MW, WN, and NO, and straight lines OB', B'D, DC, and CM that connect the points M, W, N, O, B', D and C, or on the above line segments (excluding points on the straight line CM):

points M, W, N, O and C being defined as in the case of $(1.2 < w \leq 1.3)$, and

B' $(36.6, 0.0, -w+63.4)$,

D $(-2.8226w+40.211, 0.0, 1.8226w+59.789)$, and

the curves MW, WN and NO being represented by the coordinates as in the case of (1.2 < w ≤ 1.3); and
if

$$4.0 < w \leq 7.0:$$

within the range of a figure surrounded by curves MW, WN, and NO, and straight lines OB', B'D, DC, and CM that connect the points M, W, N, O, F and C, or on the above line segments (excluding points on the straight line CM):

| | |
|---|---|
| M | (0.0, $-0.0667w^2+0.8333w+58.133$, $0.0667w^2-1.8333w+41.867$), |
| W | (10.0, $-0.0667w^2+1.1w+39.267$, $0.0667w^2-2.1w+50.733$), |
| N | (18. 2, $-0.0889w^2+1.3778w+31.411$, $0.0889w^2-2.3778w+50.389$), |
| O | (36.8, $-0.0444w^2+0.6889w+25.956$, $0.0444w^2-1.6889w+37.244$), |
| B' | (36.6, 0.0, $-w+63.4$), |
| D | ($-2.8w+40.1$, 0.0, $1.8w+59.9$), |
| C | (0.0, $0.0667w^2-4.9667w+58.3$, $-0.0667w^2+3.9667w+41.7$); |

the curves MW, WN and NO being represented by the following coordinates:

| | |
|---|---|
| MW | (x, $(0.00357w^2-0.0391w+0.1756)x^2+(-0.0356w^2+0.4178w-3.6422)x-0.0667w^2+0.8333w+58.103$, 100-w-x-y), |
| WN | (x, $(-0.002061w^2+0.0218w-0.0301)x^2+(0.0556w^2-0.5821w-0.1108)x-0.4158w^2+4.7352w+43.383$, 100-w-x-y), |
| NO | (x, $0.0082x^2+(0.0022w^2-0.0345w-0.7521)x-0.1307w^2+2.0247w+42.327$, 100-w-x-y). |

6. A composition comprising a refrigerant comprising $CO_2$, R32, HFO-1132(E), and R1234yf; the composition further containing water, the water content being ≤ 0.1 mass% based on the entire refrigerant,

wherein, when the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are
if

$$1.2 < w \leq 4.0:$$

within the range of a figure surrounded by curves MW and WN, and straight lines NE, EC, and CM that connect the points M, W, N, E and C, or on the above line segments (excluding points on the straight line CM):

| | |
|---|---|
| M | (0.0, $-0.3004w^2+2.419w+55.53$, $0.3004w^2-3.419w+44.47$), |
| W | (10.0, $-0.3645w^2+3.5024w+34.422$, $0.3645w^2-4.5024w+55.578$), |
| N | (18.2, $-0.3773w^2+3.319w+28.26$, $0.3773w^2-4.319w+53.54$), |
| E | ($-0.0365w+18.26$, $0.0623w^2-4.5381w+31.856$, $-0.0623w^2+3.5746w+49.884$), |
| C | (0.0, $0.1081w^2-5.169w+58.447$, $-0.1081w^2+4.169w+41.553$); |

the curves MW and WN being represented by the following coordinates:

| | |
|---|---|
| MW | (x, $(0.0043w^2-0.0359w+0.1509)x^2+(-0.0493w^2+0.4669w-3.6193)x-0.3004w^2+2.419w+55.53$, 100-w-x-y), |
| WN | (x, $(0.0055w^2-0.0326w+0.0665)x^2+(-0.1571w^2+0.8981w-2.6274)x+0.6555w^2-2.2153w+54.044$, 100-w-x-y); or |

if

$$4.0 < w \le 7.0:$$

within the range of a figure surrounded by curves MW and WN, and straight lines NE, EC, and CM that connect the points M, W, N, E and C, or on the above line segments (excluding points on the straight line CM):

M $\quad$ (0.0, $-0.0667w^2+0.8333w+58.133$, $0.0667w^2-1.8333w+41.867$),

W $\quad$ (10.0, $-0.0667w^2+1.1w+39.267$, $0.0667w^2-2.1w+50.733$),

N $\quad$ 18.2, $-0.0889w^2+1.3778w+31.411$, $0.0889w^2-2.3778w+50.389$),

E $\quad$ (18.1, $0.0444w^2-4.3556w+31.411$, $-0.0444w^2+3.3556w+50.489$),

C $\quad$ (0.0, $0.0667w^2-4.9667w+58.3$, $-0.0667w^2+3.9667w+41.7$);

the curves MW and WN being represented by the following coordinates:

MW $\quad$ (x, $(0.00357w^2-0.0391w+0.1756)x^2+(-0.0356w^2+0.4178w-3.6422)x-0.0667w^2+0.8333w+58.103$, 100-w-x-y), and

WN $\quad$ (x, $(-0.002061w^2+0.0218w-0.0301)x^2+(0.0556w^2-0.5821w-0.1108)x-0.4158w^2+4.7352w+43.383$, 100-w-x-y).

**7.** The composition of any of claims 1-6, which further comprises a refrigeration oil.

**8.** Use of the composition of any of claims 1-7 as an alternative refrigerant for R410A.

**9.** A refrigerating machine comprising the composition of any of claims 1-7 as a working fluid.

**10.** A method for operating a refrigerating machine, comprising circulating the composition of any of claims 1-7 as a working fluid in a refrigerating machine.

**Patentansprüche**

**1.** Zusammensetzung umfassend ein Kältemittel umfassend $CO_2$, trans-1,2-Difluorethylen (HFO-1132(E)), Difluormethan (R32) und 2,3,3,3-Tetrafluor-1-propen (R1234yf); die Zusammensetzung ferner enthaltend Wasser, wobei der Wassergehalt $\le$ 0,1 Massen-%, bezogen auf das gesamte Kältemittel, beträgt,

worin, wenn die Massen-% von $CO_2$, R32, HFO-1132(E) und R1234yf basierend auf ihrer Summe jeweils durch w, x, y und z dargestellt sind, in einem ternären Zusammensetzungsdiagramm, in dem die Summe von R32, HFO-1132(E) und R1234yf (100-w) Massen-% beträgt, die Koordinaten (x,y,z) sind innerhalb des Bereichs einer Figur umgeben von den Kurven IJ, JK und KL und den geraden Linien LB'', B''D, DC und CI die verbinden die Punkte I, J, K, L, B'', D und C, oder auf den obigen Liniensegmenten (mit Ausnahme der Punkte auf den geraden Linien B''D und CI):

I $\quad$ (0,0, 72,0, 28,0-w),

J $\quad$ (18,3, 48,5, 33,2-w),

K $\quad$ (36,8, 35,6, 27,6-w),

L $\quad$ (51, 7, 28, 9, 19,4-w); und

falls

$$0 < w \le 1,2:$$

B'' $\quad$ ($-1,5278w^2+2,75w+50,5$, 0,0, $1,5278w^2-3,75w+49,5$),

D $\quad$ ($-2,9167w+40,317$, 0,0, $1,9167w+59,683$),

C $\quad$ (0,0, $-4, 9167w+58, 317$, $3,9167w+41,683$);

falls

$$1,2 < w \leq 4,0:$$

B"     (51,6, 0,0, 48,4-w),

D     (-2,8226w+40,211, 0,0, 1,8226w+59,789),

C     (0,0, 0,1081w$^2$-5,169w+58,447, - 0,1081w$^2$+4,169w+41,553);

falls

$$4,0 < w \leq 7,0:$$

B"     (51,6, 0,0, 48,4-w),

D     (-2,8w+40,1, 0,0, 1,8w+59,9),

C     (0,0, 0,0667w$^2$-4,9667w+58,3, - 0,0667w$^2$+3,9667w+41,7);

wobei die Kurven IJ, JK und KL durch die folgenden Koordinaten dargestellt sind:

IJ     (x, 0,0236x$^2$-1,716x+72, -0,0236x$^2$+0,716x+28-w),

JK     (x, 0,0095x$^2$-1,2222x+67,676, - 0,0095x$^2$+0,2222x+32,324-w),

KL     (x, 0,0049x$^2$-0,8842x+61,488, -0,0049x$^2$-0,1158x+38,512-w).

2. Zusammensetzung umfassend ein Kältemittel umfassend $CO_2$, HFO-1132(E), R32 und R1234yf; die Zusammensetzung ferner enthaltend Wasser, wobei der Wassergehalt $\leq$ 0,1 Massen-%, bezogen auf das gesamte Kältemittel, beträgt,

worin, wenn die Massen-% von $CO_2$, R32, HFO-1132(E) und R1234yf basierend auf ihrer Summe jeweils durch w, x, y und z dargestellt sind, in einem ternären Zusammensetzungsdiagramm, in dem die Summe von R32, HFO-1132(E) und R1234yf (100-w) Massen-% beträgt, die Koordinaten (x,y,z) sind innerhalb des Bereichs einer Figur umgeben von den Kurven IJ und JK, und den geraden Linien KF, FC und CI die verbinden die Punkte I, J, K, L, F und C, oder auf den obigen Liniensegmenten (mit Ausnahme der Punkte auf der geraden Linie CI):

I     (0,0, 72,0, 28,0-w),

J     (18,3, 48,5, 33,2-w),

K     (36,8, 35,6, 27,6-w) und

falls

$$0 < w \leq 1,2:$$

F     (-0,0833w+36,717, -4,0833w+5,1833, 3,1666w+58,0997),

C     (0,0, -4, 9167w+58, 317, 3,9167w+41,683);

falls

$$1,2 < w \leq 1,3:$$

F     (36,6, -3w+3,9, 2w+59,5),

(continued)

C        (0,0, 0,1081w$^2$-5,169w+58,447, - 0,1081w$^2$+4,169w+41,553) ;

oder innerhalb des Bereichs einer Figur umgeben von den Kurven IJ und JK, und den geraden Linien KB', B'D, DC und CI die verbinden die Punkte I, J, K, B', D und C, oder auf den oben genannten Liniensegmenten (mit Ausnahme der Punkte auf der geraden Linie CI):

I        (0,0, 72,0, 28,0-w),
J        (18,3, 48,5, 33,2-w),
K        (36,8, 35,6, 27,6-w),
B'       (36,6, 0,0, -w+63,4) und

falls

$$1,3 < w \leq 4,0:$$

D        (-2,8226w+40,211, 0,0, 1,8226w+59,789),
C        (0,0, 0,1081w$^2$-5,169w+58,447, - 0,1081w$^2$+4,169w+41,553);

falls

$$4,0 < w \leq 7,0:$$

D        (-2,8w+40,1, 0,0, 1,8w+59,9),
C        (0,0, 0,0667w$^2$4,9667w+58,3, -0,0667w$^2$+3,9667w+41,7);

wobei die Kurven IJ und JK durch die folgenden Koordinaten dargestellt sind:

IJ       (x, 0,0236x$^2$-1,716x+72, -0,0236x$^2$+0,716x+28-w);
JK       (x, 0,0095x$^2$-1,2222x+67,676, - 0,0095x$^2$+0,2222x+32,324-w).

3.   Zusammensetzung umfassend ein Kältemittel umfassend CO$_2$, R32, HFO-1132(E) und R1234yf; die Zusammensetzung ferner enthaltend Wasser, wobei der Wassergehalt ≤ 0,1 Massen-%, bezogen auf das gesamte Kältemittel, beträgt,

worin, wenn die Massen-% von CO$_2$, R32, HFO-1132(E) und R1234yf basierend auf ihrer Summe jeweils durch w, x, y und z dargestellt sind, in einem ternären Zusammensetzungsdiagramm, in dem die Summe von R32, HFO-1132(E) und R1234yf (100-w) Massen-% beträgt, die Koordinaten (x,y,z) sind innerhalb des Bereichs einer Figur umgeben von den Kurven IJ und JK, und den geraden Linien KF, FC und CI die verbinden die Punkte I, J, E und C, oder auf den oben genannten Liniensegmenten (mit Ausnahme der Punkte auf der geraden Linie CI):

I        (0,0, 72,0, 28,0-w),
J        (18,3, 48,5, 33,2-w) und

falls

$$0 < w \leq 1,2:$$

E        (18,2, -1,1111w$^2$-3,1667w+31,9, 1,1111w$^2$+2,1667w+49,9),

(continued)

| | |
|---|---|
| C | (0,0, -4, 9167w+58, 317, 3,9167w+41,683); |

falls

$$1,2 < w \leq 4,0:$$

| | |
|---|---|
| E | (-0,0365w+18,26, 0,0623$w^2$-4,5381w+31,856, -0,0623$w^2$+3,5746w+49,884), |
| C | (0,0, 0,1081$w^2$-5,169w+58,447, -0,1081$w^2$+4,169w+41,553); oder |

falls

$$4,0 < w \leq 7,0:$$

| | |
|---|---|
| E | (18, 1, 0,0444$w^2$-4,3556w+31,411, - 0,0444$w^2$+3,3556w+50,489), |
| C | (0,0, 0,0667$w^2$4,9667w+58,3, -0,0667$w^2$+3,9667w+41,7); |

wobei die Kurve IJ durch die folgenden Koordinaten dargestellt ist (x, 0,0236$x^2$-1,716x+72, - 0,0236$x^2$ +0,716x+28-w) .

4. Zusammensetzung umfassend ein Kältemittel umfassend $CO_2$, R32, HFO-1132(E) und R1234yf; die Zusammensetzung ferner enthaltend Wasser, wobei der Wassergehalt $\leq$ 0,1 Massen-%, bezogen auf das gesamte Kältemittel, beträgt,

worin, wenn die Massen-% von $CO_2$, R32, HFO-1132(E) und R1234yf basierend auf ihrer Summe jeweils durch w, x, y und z dargestellt sind, in einem ternären Zusammensetzungsdiagramm, in dem die Summe von R32, HFO-1132(E) und R1234yf (100-w) Massen-% beträgt, die Koordinaten (x,y,z) sind
falls

$$0 < w \leq 0,6:$$

innerhalb des Bereichs einer Figur umgeben von den Kurven GO und OP und den geraden Linien PB", B"D und DG die verbinden die Punkte G, O, P, B" und D, oder auf den obigen Liniensegmenten (mit Ausnahme der geraden Linie B"D):

| | |
|---|---|
| G | (-5,8333$w^2$-3,1667w+22,2, 7,0833$w^2$+1,4167w+26,2, -1,25$w^2$+0,75w+51,6), |
| O | (36,8, 0,8333$w^2$+1,8333w+22,6, -0,8333$w^2$-2,8333w+40,6), |
| P | (51,7, 1,1111$w^2$+20,5, -1,1111$w^2$-w+27,8), |
| B" | (-1,5278$w^2$+2,75w+50,5, 0,0, 1,5278$w^2$-3,75w+49,5), |
| D | (-2,9167w+40,317, 0,0, 1,9167w+59,683); |

wobei die Kurven GO und OP durch die folgenden Koordinaten dargestellt sind:

| | |
|---|---|
| GO | (x, (0,00487$w^2$-0,0059w+0,0072)$x^2$+(-0, 279$w^2$+0,2844w-0,6701)x+3,7639$w^2$-0,2467w+37,512, 100-w-x-y); |
| OP | (x, (0, 0074$w^2$-0,0133w+0, 0064) $x^2$+(-0, 5839$w^2$+1,0268w-0,7103)x+11,472$w^2$-17,455w+40,07, 100-w-x-y); |

falls

$$0,6 < w \leq 1,2:$$

innerhalb des Bereichs einer Figur umgeben von den Kurven GN, NO und OP, und den geraden Linien PB", B"D und DG die verbinden die Punkte G, N, O, P, B" und D, oder auf den obigen Liniensegmenten (mit Ausnahme der geraden Linie B"D):

wobei die Punkte G, O, P, B" und D wie oben definiert sind und N (18,2, $0,2778w^2+3w+27,7$, $-0,2778w^2-4w+54,1$) ist;
die Kurve OP wie oben definiert ist, und die Kurven GN und NO durch die folgenden Koordinaten dargestellt sind:

GN    (x, $(0, 0122w^2-0,0113w+0, 0313) x^2+(-0, 3582w^2+0,1624w-1,4551)x+2,7889w^2$ $+3,7417w+43,824$ , 100-w-x-y);

NO    (x, $(0,00487w^2-0,0059w+0,0072) x^2+(-0, 279w^2+0,2844w-0,6701)$ $x+3,7639w^2-0,2467w+37,512$, 100-w-x-y);

falls

$$1,2 < w \leq 4,0:$$

innerhalb des Bereichs einer Figur umgeben von den Kurven MW, WN, NO und OP, und den geraden Linien PB", B"D, DC und CM die verbinden die Punkte M, W, N, O, P, B", D und C, oder auf den obigen Liniensegmenten (mit Ausnahme der geraden Linie B"D und CM):

M    $(0,0, -0,3004w^2+2,419w+55,53, 0,3004w^2-3,419w+44,47)$,
W    $(10,0, -0,3645w^2+3,5024w+34,422, 0,3645w^2-4,5024w+55,578)$,
N    $(18,2, -0,3773w^2+3,319w+28,26, 0,3773w^2-4,319w+53,54)$,
O    $(36,8, -0,1392w^2+1,4381w+24,475, 0,1392w^2-2,4381w+38,725)$,
P    $(51,7, -0,2381w^2+1,881w+20,186, 0,2381w^2-2,881w+28,114)$,
B"    $(51,6, 0,0, -w+48,4)$,
D    $(-2,8226w+40,211, 0,0, 1,8226w+59,789)$,
C    $(0,0, 0,1081w^2-5,169w+58,447, - 0,1081w^2+4,169w+41,553)$;

wobei die Kurven MW, WN, NO und OP durch die folgenden Koordinaten dargestellt sind:

MW    (x, $(0, 0043w^2-0,0359w+0,1509)x^2+(-0,0493w^2+0,4669w-3,6193)x-0,3004w^2+2,419w+55,53$, 100-w-x-y),

WN    (x, $(0, 0055w^2-0,0326w+0, 0665) x^2+(-0, 1571w^2+0,8981w-2,6274)$ $x+0,6555w^2-2,2153w+54,044$, 100-w-x-y),

NO    (x, $(-0,00062w^2+0,0036w+0,0037)x^2+(0,0375w^2-0,239w-0,4977)x-0,8575w^2$ $+6,4941w+36,078$, 100-w-x-y),

OP    (x, $(-0,000463w^2+0,0024w-0,0011)x^2+(0,0457w^2-0,2581w-0,075)x-1,355w^2+8,749w+27,096$, 100-w-x-y); und

falls

$$4,0 < w \leq 7,0:$$

innerhalb des Bereichs einer Figur umgeben von den Kurven MW, WN, NO und OP, und den geraden Linien PB", B"D, DC, und CM die verbinden die Punkte M, W, N, O, P, B", D und C, oder auf den obigen Liniensegmenten (mit Ausnahme der Punkte auf der geraden Linie B"D und CM):

M    $(0,0, -0,0667w^2+0,8333w+58,133, 0,0667w^2-1,8333w+41,867)$,
W    $(10,0, -0,0667w^2+1,1w+39,267, 0,0667w^2 2,1w+50,733)$,
N    $(18,2, -0,0889w^2+1,3778w+31,411, 0,0889w^2-2,3778w+50,389)$,

(continued)

| | |
|---|---|
| O | (36,8, -0,0444w$^2$+0,6889w+25,956, 0,0444w$^2$-1,6889w+37,244), |
| P | (51,7, -0,0667w$^2$+0,8333w+21,633, 0,0667w$^2$-1,8333w+26,667), |
| B" | (51,6, 0,0, -w+48,4), |
| D | (-2,8w+40,1, 0,0, 1,8w+59,9), |
| C | (0,0, 0,0667w$^2$-4,9667w+58,3, -0,0667w$^2$+3,9667w+41,7); |

wobei die Kurven MW, WN, NO und OP durch die folgenden Koordinaten dargestellt sind:

| | |
|---|---|
| MW | (x, (0, 00357w$^2$-0,0391w+0, 1756) x$^2$+(-0, 0356w$^2$+0,4178w-3,6422)x-0,0667w$^2$ +0,8333w+58,103, 100-w-x-y), |
| WN | (x, (-0, 002061w$^2$+0,0218w-0, 0301) x$^2$+(0, 0556w$^2$-0,5821w-0,1108)x-0,4158w$^2$ +4,7352w+43,383, 100-w-x-y), |
| NO | (x, 0, 0082x$^2$+(0,0022w$^2$-0,0345w-0,7521)x-0,1307w$^2$+2,0247w+42,327, 100-w-x-y), |
| OP | (x, (-0, 0006258w$^2$+0,0066w-0, 0153) x$^2$+(0, 0516w$^2$-0,5478w+0,9894)x-1,074w$^2$ +11,651w+10,992, 100-w-x-y). |

5. Zusammensetzung umfassend ein Kältemittel umfassend $CO_2$, R32, HFO-1132(E) und R1234yf; die Zusammensetzung ferner enthaltend Wasser, wobei der Wassergehalt ≤ 0,1 Massen-%, bezogen auf das gesamte Kältemittel, beträgt,

worin, wenn die Massen-% von $CO_2$, R32, HFO-1132(E) und R1234yf basierend auf ihrer Summe jeweils durch w, x, y, und z dargestellt sind, in einem ternären Zusammensetzungsdiagramm, in dem die Summe von R32, HFO-1132(E) und R1234yf (100-w) Massen-% beträgt, die Koordinaten (x,y,z) sind
falls

$$0 < w \leq 0,6:$$

innerhalb des Bereichs einer Figur umgeben von den Kurven GO, und den geraden Linien OF und FG die verbinden die Punkte G, O und F, oder auf den obigen Liniensegmenten:

| | |
|---|---|
| G | (-5,8333w$^2$-3,1667w+22,2, 7,0833w$^2$+1,4167w+26,2, - 1,25w$^2$+0,75w+51,6), |
| O | (36,8, 0,8333w$^2$+1,8333w+22,6, -0,8333w$^2$-2,8333w+40,6), |
| F | (-0,0833w+36,717, -4,0833w+5,1833, 3,1666w+58,0997), oder auf den obigen Liniensegmenten; |

wobei die Kurve GO durch die Koordinaten (x, (0,00487w$^2$-0,0059w+0,0072) x$^2$+(-0,279w$^2$+0,2844w-0,6701) x+3,7639w$^2$-0,2467w+37,512, 100-w-x-y) dargestellt ist;
falls

$$0,6 < w \leq 1,2:$$

innerhalb des Bereichs einer Figur umgeben von den Kurven GN und NO, und den geraden Linien OF und FG die verbinden die Punkte G, N, O und F, oder auf den obigen Liniensegmenten:
wobei die Punkte G, O und F wie oben definiert sind und N (18,2, 0,2778w$^2$+3,0w+27,7, -0,2778w$^2$-4,0w+54,1) ist;
die Kurven GN und NO durch die folgenden Koordinaten dargestellt sind:

| | |
|---|---|
| GN | (x, (0, 0122w$^2$-0,0113w+0, 0313)x$^2$+(-0,3582w$^2$+0,1624w-1,4551)x+2,7889w$^2$+3,7417w+43,824, 100-w-x-y); |
| NO | (x, (0,00487w$^2$-0,0059w+0,0072) x$^2$+(-0, 279w$^2$+0,2844w-0,6701)x+3,7639w$^2$-0,2467w+37,512, 100-w-x-y); |

falls

$$1,2 < w \le 1,3:$$

innerhalb des Bereichs einer Figur umgeben von den Kurven MW, WN und NO, und den geraden Linien OF, FC und CM die verbinden die Punkte M, W, N, O, F und C, oder auf den obigen Liniensegmenten (mit Ausnahme der geraden Linie CM) :

| | |
|---|---|
| M | (0,0, $-0,3004w^2+2,419w+55,53$, $0,3004w^2-3,419w+44,47$), |
| W | (10,0, $-0,3645w^2+3,5024w+34,422$, $0,3645w^2-4,5024w+55,578$), |
| N | (18,2, $-0,3773w^2+3,319w+28,26$, $0,3773w^2-4,319w+53,54$), |
| O | (36,8, $-0,1392w^2+1,4381w+24,475$, $0,1392w^2-2,4381w+38,725$), |
| F | (36,6, $-3w+3,9$, $2w+59,5$), |
| C | (0,0, $0,1081w^2-5,169w+58,447$, $-0,1081w^2+4,169w+41,553$); |

wobei die Kurven MW, WN und NO durch die folgenden Koordinaten dargestellt sind:

| | |
|---|---|
| MW | (x, $(0,0043w^2-0,0359w+0,1509)x^2+(-0,0493w^2+0,4669w-3,6193)x-0,3004w^2+2,419w+55,53$, 100-w-x-y), |
| WN | (x, $(0,0055w^2-0,0326w+0,0665)x^2+(-0,1571w^2+0,8981w-2,6274)x+0,6555w^2-2,2153w+54,044$, 100-w-x-y), |
| NO | (x, $(-0,00062w^2+0,0036w+0,0037)x^2+(0,0375w^2-0,239w-0,4977)x-0,8575w^2+6,4941w+36,078$, 100-w-x-y); |

falls

$$1,3 < w \le 4,0:$$

innerhalb des Bereichs einer Figur umgeben von den Kurven MW, WN und NO, und den geraden Linien OB', B'D, DC und CM die verbinden die Punkte M, W, N, O, B', D und C, oder auf den obigen Liniensegmenten (mit Ausnahme der Punkte auf der geraden Linie CM):

wobei die Punkte M, W, N, O und C wie im Fall von (1,2 < w $\le$ 1,3) definiert sind, und

| | |
|---|---|
| B' | ( 36, 6, 0,0, $-w+63,4$), |
| D | ($-2,8226w+40,211$, 0,0, $1,8226w+59,789$) und |

die Kurven MW, WN und NO durch die Koordinaten wie im Fall von (1,2 < w $\le$ 1,3) definiert sind; und falls

$$4,0 < w \le 7,0:$$

innerhalb des Bereichs einer Figur umgeben von den Kurven MW, WN und NO, und den geraden Linien OB', B'D, DC und CM die verbinden die Punkte M, W, N, O, F und C, oder auf den obigen Liniensegmenten (mit Ausnahme der Punkte auf der geraden Linie CM):

| | |
|---|---|
| M | (0,0, $-0,0667w^2+0,8333w+58,133$, $0,0667w^2-1,8333w+41,867$), |
| W | (10,0, $-0,0667w^2+1,1w+39,267$, $0,0667w^2 2,1w+50,733$), |
| N | (18, 2, $-0,0889w^2+1,3778w+31,411$, $0,0889w^2-2,3778w+50,389$), |
| O | (36, 8, $-0,0444w^2+0,6889w+25,956$, $0,0444w^2-1,6889w+37,244$), |
| B' | (36,6, 0,0, $-w+63,4$), |
| D | ($-2,8w+40,1$, 0,0, $1,8w+59,9$), |
| C | (0,0, $0,0667w^2 4,9667w+58,3$, $-0,0667w^2+3,9667w+41,7$); |

wobei die Kurven MW, WN und NO durch die folgenden Koordinaten dargestellt sind:

MW    (x, (0, 00357$w^2$-0,0391w+0, 1756) $x^2$+(-0,0356$w^2$+0,4178w-3,6422)x-0,0667$w^2$ +0,8333w+58,103, 100-w-x-y),

WN    (x, (-0, 002061$w^2$+0,0218w-0, 0301)$x^2$+(0, 0556$w^2$-0,5821w-0,1108)x-0,4158$w^2$ +4,7352w+43,383, 100-w-x-y),

NO    (x, (0,0082$x^2$+(0,0022$w^2$-0,0345w-0,7521)x-0,1307$w^2$+2,0247w+42,327, 100-w-x-y).

**6.** Zusammensetzung umfassend ein Kältemittel umfassend $CO_2$, R32, HFO-1132(E) und R1234yf; die Zusammensetzung ferner enthaltend Wasser, wobei der Wassergehalt ≤ 0,1 Massen-%, bezogen auf das gesamte Kältemittel, beträgt,

worin, wenn die Massen-% von $CO_2$, R32, HFO-1132(E) und R1234yf basierend auf ihrer Summe jeweils durch w, x, y, und z dargestellt sind, in einem ternären Zusammensetzungsdiagramm, in dem die Summe von R32, HFO-1132(E) und R1234yf (100-w) Massen-% beträgt, die Koordinaten (x,y,z) sind falls

$$1,2 < w \le 4,0:$$

innerhalb des Bereichs einer Figur umgeben von den Kurven MW und WN, und den geraden Linien NE, EC und CM die verbinden die Punkte M, W, N, E und C, oder auf den obigen Liniensegmenten (mit Ausnahme der geraden Linie CM) :

M    (0,0, -0,3004$w^2$+2,419w+55,53, 0,3004$w^2$-3,419w+44,47),

W    (10,0, -0,3645$w^2$+3,5024w+34,422, 0,3645$w^2$-4,5024w+55,578),

N    (18,2, -0,3773$w^2$+3,319w+28,26, 0,3773$w^2$-4,319w+53,54),

E    (-0,0365w+18,26, 0,0623$w^2$-4,5381w+31,856, -0,0623$w^2$+3,5746w+49,884),

C    (0,0, 0,1081$w^2$-5,169w+58,447, - 0,1081$w^2$+4,169w+41,553);

wobei die Kurven MW und WN durch die folgenden Koordinaten dargestellt sind:

MW    (x, (0, 0043$w^2$-0,0359w+0,1509)$x^2$+(-0, 0493$w^2$+0,4669w-3,6193)x-0,3004$w^2$+2,419w+55,53, 100-w-x-y),

WN    (x, (0, 0055$w^2$-0,0326w+0, 0665)$x^2$+(-0, 1571$w^2$+0,8981w-2,6274)x+0, 6555$w^2$-2,2153w+54,044, 100-w-x-y); oder

falls

$$4.0 < w \le 7.0:$$

innerhalb des Bereichs einer Figur umgeben von den Kurven MW und WN, und den geraden Linien NE, EC und CM die verbinden die Punkte M, W, N, E und C, oder auf den obigen Liniensegmenten (mit Ausnahme der Punkte auf der geraden Linie CM):

M    (0,0, -0,0667$w^2$+0,8333w+58,133, 0,0667$w^2$-1,8333w+41,867),

W    (10,0, -0,0667$w^2$+1,1w+39,267, 0,0667$w^2$2,1w+50,733),

N    18,2, -0,0889$w^2$+1,3778w+31,411, 0,0889$w^2$-2,3778w+50,389),

E    (18,1, 0,0444$w^2$-4,3556w+31,411, - 0,0444$w^2$+3, 3556w+50,489),

C    (0,0, 0,0667$w^2$4,9667w+58,3, -0,0667$w^2$+3,9667w+41,7);

wobei die Kurven MW und WN durch die folgenden Koordinaten dargestellt sind:

MW    (x, (0, 00357w$^2$-0, 0391w+0, 1756) x$^2$+(-0, 0356w$^2$+0, 4178w-3,6422)x-0,0667w$^2$ +0,8333w+58,103, 100-w-x-y) und

WN    (x, (-0,002061w$^2$+0,0218w-0,0301)x$^2$+(0,0556w$^2$-0,5821w-0,1108)x-0,4158w$^2$+4,7352w+43,383, 100-w-x-y).

**7.** Zusammensetzung gemäß mindestens einem der Ansprüche 1-6, die ferner ein Kältemittelöl umfasst.

**8.** Verwendung der Zusammensetzung gemäß mindestens einem der Ansprüche 1-7 als alternatives Kältemittel zu R410A.

**9.** Kältemaschine, umfassend die Zusammensetzung gemäß mindestens einem der Ansprüche 1-7 als Arbeitsflüssigkeit.

**10.** Verfahren zum Betreiben einer Kältemaschine, umfassend das Zirkulieren der Zusammensetzung gemäß mindestens einem der Ansprüche 1-7 als Arbeitsflüssigkeit in einer Kältemaschine.

**Revendications**

**1.** Composition comprenant un réfrigérant comprenant du $CO_2$, du trans-1,2-difluoroéthylène (HFO-1132(E)), du difluorométhane (R32) et du 2,3,3,3-tétrafluoro-1-propène (R1234yf) ; la composition contenant en outre de l'eau, la teneur en eau étant < 0,1 % en masse sur la base de l'ensemble du réfrigérant,

dans laquelle, lorsque le % en masse de $CO_2$, R32, HFO-1132(E) et R1234yf sur la base de leur somme est respectivement représenté par w, x, y, et z, dans un diagramme de composition ternaire dans laquelle la somme de R32, HFO-1132(E) et R1234yf est (100-w) % en masse, les coordonnées (x,y,z) sont dans la plage d'une figure entourée par les courbes IJ, JK et KL, et les lignes droites LB", B"D, DC et CI qui relient les points I, J, K, L, B", D et C, ou sur les segments de droite ci-dessus (à l'exclusion de points sur les lignes droites B"D et CI) :

I        (0,0, 72,0, 28,0-w),
J        (18,3, 48,5, 33,2-w),
K       (36,8, 35,6, 27,6-w),
L       (51,7, 28,9, 19,4-w) ; et

si

$$0 < w \leq 1,2 :$$

B"      (-1,5278w$^2$+2,75w+50,5, 0,0, 1,5278w$^2$ -3,75w+49,5),
D       (-2,9167w+40,317, 0,0, 1,9167w+59,683),
C       (0,0, -4,9167w+58,317, 3,9167w+41,683) ;

si

$$1,2 < w \leq 4,0 :$$

B"      (51,6, 0,0, 48,4-w),
D       (-2,8226w+40,211, 0,0, 1,8226w+59,789),
C       (0,0, 0,1081w$^2$-5,169w+58,447, -0,1081w$^2$+4,169w+41,553) ;

si

$$4,0 < w \leq 7,0 :$$

B"   (51,6, 0,0, 48,4-w),
D   (-2,8W+40,1, 0,0, 1,8w+59,9),
C   (0,0, 0,0667w$^2$-4,9667w+58,3, -0,0667w$^2$+3,9667w+41,7) ;

les courbes IJ, JK et KL étant représentées par les coordonnées suivantes :

IJ   (x, 0,0236x$^2$-1,716x+72, -0,0236x$^2$+0,716x+28-w),
JK   (x, 0,0095x$^2$-1,2222x+67,676, -0,0095x$^2$+0,2222x+32,324-w),
KL   (x, 0,0049x$^2$-0,8842x+61,488, -0,0049x$^2$-0,1158x+38,512-w).

2.   Composition comprenant un réfrigérant comprenant du $CO_2$, du HFO-1132(E), du R32 et du R1234yf ; la composition contenant en outre de l'eau, la teneur en eau étant ≤ 0,1 % en masse sur la base de l'ensemble du réfrigérant,

dans laquelle, lorsque le % en masse de $CO_2$, R32, HFO-1132(E) et R1234yf sur la base de leur somme est respectivement représenté par w, x, y, et z, dans un diagramme de composition ternaire dans laquelle la somme de R32, HFO-1132(E) et R1234yf est (100-w) % en masse, les coordonnées (x,y,z) sont
dans la plage d'une figure entourée par les courbes IJ et JK, et les lignes droites KF, FC et CI qui relient les points I, J, K, F et C, ou sur les segments de droite ci-dessus (à l'exclusion de points sur la ligne droite CI) :

I   (0,0, 72,0, 28,0-w),
J   (18,3, 48,5, 33,2-w),
K   (36,8, 35,6, 27,6-w), et

si

$$0 < w \leq 1,2 :$$

F   (-0,0833w+36,717, -4,0833w+5,1833, 3,1666w+58,0997),
C   (0,0, -4,9167w+58,317, 3,9167w+41,683) ;

si

$$1,2 < w \leq 1,3 :$$

F   (36,6, -3w+3,9, 2w+59,5),
C   (0,0, 0,1081w$^2$-5,169w+58,447, -0,1081w$^2$+4,169w+41,553) ;

ou dans la plage d'une figure entourée par les courbes IJ et JK, et les lignes droites KB', B'D, DC et CI qui relient les points I, J, K, B', D et C, ou sur les segments de droite ci-dessus (à l'exclusion de points sur la ligne droite CI) :

I   (0,0, 72,0, 28,0-w),
J   (18,3, 48,5, 33,2-w),
K   (36,8, 35,6, 27,6-w),
B'   (36,6, 0,0, -w+63,4), et

si

82

1,3 < w ≤ 4,0 :

D     (-2,8226w+40,211, 0,0, 1,8226w+59,789),

C     (0,0, $0,1081w^2$–5,169w+58,447, $-0,1081w^2$+4,169w+41,553) ;

si

4,0 < w ≤ 7,0 :

D     (-2,8W+40,1, 0,0, 1,8w+59,9),

C     (0,0, $0,0667w^2$-4,9667w+58,3, $-0,0667w^2$+3,9667w+41,7) ;

les courbes IJ et JK étant représentées par les coordonnées suivantes :

IJ     (x, $0,0236x^2$-1,716x+72, $-0,0236x^2$+0,716x+28-w) ;

JK     (x, $0,0095x^2$-1,2222x+67,676, $-0,0095x^2$+0 2222x+32,324-w).

**3.** Composition comprenant un réfrigérant comprenant du $CO_2$, du R32, HFO-1132(E), et R1234yf ; la composition contenant en outre de l'eau, la teneur en eau étant < 0,1 % en masse sur la base de l'ensemble du réfrigérant,

dans laquelle, lorsque le % en masse de $CO_2$, R32, HFO-1132(E) et R1234yf sur la base de leur somme est respectivement représenté par w, x, y, et z, dans un diagramme de composition ternaire dans laquelle la somme de R32, HFO-1132(E) et R1234yf est (100-w) % en masse, les coordonnées (x,y,z) sont dans la plage d'une figure entourée par les courbes IJ et JK, et les lignes droites KF, FC et CI qui relient les points I, J, E et C, ou sur les segments de droite ci-dessus (à l'exclusion de points sur la ligne droite CI) :

I     (0,0, 72,0, 28,0-w),

J     (18,3, 48,5, 33,2-w), et

si

0 < w ≤ 1,2 :

E     (18,2, $-1,1111w^2$-3,1667w+31,9, $1,1111w^2$+2,1667w+49,9),

C     (0,0, -4,9167w+58,317, 3,9167w+41,683) ;

si

1,2 < w ≤ 4,0 :

E     (-0,0365w+18,26, $0,0623w^2$-4,5381w+31,856, $-0,0623w^2$+3,5746w+49,884),

C     (0,0, $0,1081w^2$–5,169w+58,447, $-0,1081w^2$+4,169w+41,553) ; ou

si

4,0 < w ≤ 7,0 :

E     (18,1, $0,0444w^2$-4,3556w+31,411, $-0,0444w^2$+3,3556w+50,489),

(continued)

C    $(0,0, 0,0667w^2-4,9667w+58,3, -0,0667w^2+3,9667w+41,7)$ ;

la courbe IJ étant représentée par les coordonnées $(x, 0,0236x^2-1,716x+72, - 0,0236x^2+0,716x+28-w)$.

4. Composition comprenant un réfrigérant comprenant du CO2, du R32, du HFO-1132(E) et du R1234yf ; la composition contenant en outre de l'eau, la teneur en eau étant < 0,1 % en masse sur la base de l'ensemble du réfrigérant,

dans laquelle, lorsque le % en masse de $CO_2$, R32, HFO-1132(E) et R1234yf sur la base de leur somme est respectivement représenté par w, x, y, et z, dans un diagramme de composition ternaire dans laquelle la somme de R32, HFO-1132(E) et R1234yf est (100-w) % en masse, les coordonnées (x,y,z) sont
si $0 < w \leq 0,6$ :

dans la plage d'une figure entourée par les courbes GO et OP, et les lignes droites PB", B"D et DG qui relient les points G, O, P, B", et D, ou sur les segments de droite ci-dessus (à l'exclusion de points sur la ligne droite B"D) :

G    $(-5,8333w^2-3,1667w+22,2, 7,0833w^2+1,4167w+26,2, -1,25w^2+0,75w+51,6)$,
O    $(36,8, 0,8333w^2+1,8333w+22,6, -0,8333w^2 -2,8333w+40,6)$,
P    $(51,7, 1,1111w^2+20,5, -1,1111w^2-w+27,8)$,
B"   $(-1,5278w^2+2,75w+50,5, 0,0, 1,5278w^2-3,75w+49,5)$,
D    $(-2,9167w+40,317, 0,0, 1,9167w+59,683)$ ;

les courbes GO et OP étant représentées par les coordonnées suivantes :

GO $(x, (0,00487w^2-0,0059w+0,0072)x^2+(-0,279w^2+0,2844w-0,6701)x+3,7639w^2-0,2467w+37,512, 100-w-x-y)$ ;
OP $(x, (0,0074w^2-0,0133w+0,0064)x^2+(-0,5839w^2+1,0268w-0,7103)x+11,472w^2-17,455w+40,07, 100-w-x-y)$ ;
si $0,6 < w \leq 1,2$ :

dans la plage d'une figure entourée par les courbes GN, NO et OP, et les lignes droites PB", B"D et DG qui relient les
points G, N, O, P, B" et D, ou sur les segments de droite ci-dessus
(à l'exclusion de points sur la ligne droite B"D) :

les points G, O, P, B" et D étant tels que définis ci-dessus, et N étant $(18,2, 0,2778w^2+3w+27,7, -0,2778w^2-4w+54,1)$ ;
la courbe OP étant telle que définie ci-dessus, et les courbes GN et NO étant représentées par les coordonnées suivantes :

GN    $(x, (0,0122w^2-0,0113w+0,0313)x^2+(-0,3582w^2+0,1624w-1,4551)x+2,7889w^2 +3,7417w+43,824, 100-w-x-y)$ ;
NO    $(x, (0,00487w^2-0,0059w+0,0072)x^2+(-0,279w^2+0,2844w-0,6701) x+3,7639w^2-0,2467w+37,512, 100-w-x-y)$ ;
si $1,2 < w \leq 4,0$ :

dans la plage d'une figure entourée par les courbes MW, WN, NO et OP, et les lignes droites PB", B"D, DC et CM qui relient les points M, W, N, O, P, B", D et C, ou sur les segments de droite ci-dessus (à l'exclusion de points sur la ligne droite B"D et CM) :

M     $(0,0, -0,3004w^2+2,419w+55,53, 0,3004w^2-3,419w+44,47)$,

W     $(10,0, -0,3645w^2+3,5024w+34,422, 0,3645w^2-4,5024w+55,578)$,

N     $(18,2, -0,3773w^2+3,319w+28,26, 0,3773w^2-4,319w+53,54)$,

O     $(36,8, -0,1392w^2+1,4381w+24,475, 0,1392w^2-2,4381w+38,725)$,

P     $(51,7, -0,2381w^2+1,881W+20,186, 0,2381w^2-2,881w+28,114)$,

B"    $(51,6, 0,0, -w+48,4)$,

D     $(-2,8226w+40,211, 0,0, 1,8226w+59,789)$,

C     $(0,0, 0,1081w^2-5,169w+58,447, -0,1081w^2+4,169w+41,553)$;

les courbes MW, WN, NO et OP étant représentées par les coordonnées suivantes :

MW   $(x, (0,0043w^2-0,0359w+0,1509)x^2+(-0,0493w^2+0,4669w-3,6193)x-0,3004w^2$
          $+2,419w+55,53, 100-w-x-y)$,

WN   $(x, (0,0055w^2-0,0326w+0,0665)x^2+(-0,1571w^2+0,8981w-2,6274)$
          $x+0,6555w^2-2,2153w+54,044, 100-w-x-y)$,

NO   $(x, (-0,00062w^2+0,0036w+0,0037) x^2+(0,0375w^2-0,239w-0,4977)x-0,8575w^2$
          $+6,4941w+36,078, 100-w-x-y)$,

OP   $(x, (-0,000463w^2+0,0024w-0,0011)x^2+(0,0457w^2-0,2581w-0,075)x-1,355w^2$
          $+8,749w+27,096, 100-w-x-y)$ ; et

si

$$4,0 < w \leq 7,0 :$$

dans la plage d'une figure entourée par les courbes MW, WN, NO et OP, et les lignes droites PB", B"D, DC et CM qui relient les points M, W, N, O, P, B", D et C, ou sur les segments de droite ci-dessus (à l'exclusion de points sur la ligne droite B"D et CM) :

M     $(0,0, -0,0667w^2+0,8333w+58,133, 0,0667w^2-1,8333w+41,867)$,

W     $(10,0, -0,0667w^2+1,1w+39,267, 0,0667w^2-2,1w+50,733)$,

N     $(18,2, -0,0889w^2+1,3778w+31,411, 0,0889w^2-2,3778w+50,389)$,

O     $(36,8, -0,0444w^2+0,6889w+25,956, 0,0444w^2-1,6889w+37,244)$,

P     $(51,7, -0,0667w^2+0,8333w+21,633, 0,0667w^2-1,8333w+26,667)$,

B"    $(51,6, 0,0, -w+48,4)$,

D     $(-2,8W+40,1, 0,0, 1,8w+59,9)$,

C     $(0,0, 0,0667w^2-4,9667w+58,3, -0,0667w^2+3,9667w+41,7)$ ;

les courbes MW, WN, NO et OP étant représentées par les coordonnées suivantes :

MW   $(x, (0,00357w^2-0,0391w+0,1756)x^2+(-0,0356w^2+0,4178w-3,6422)x-0,0667w^2$
          $+0,8333w+58,103, 100-w-x-y)$,

WN   $(x, (-0,002061w^2+0,0218w-0,0301)x^2+(0,0556w^2-0,5821w-0,1108)x-0,4158w^2$
          $+4,7352w+43,383, 100-w-x-y)$,

NO   $(x, 0,0082x^2+ (0,0022w^2-0,0345w-0,7521)x-0,1307w^2+2,0247w+42,327, 100-w-x-y)$,

OP   $(x, (-0,0006258w^2+0,0066w-0,0153)x^2+(0,0516w^2-0,5478w+0,9894)x-1,074w^2$
          $+11,651w+10,992, 100-w-x-y)$.

**5.**   Composition comprenant un réfrigérant comprenant du $CO_2$, du R32, du HFO-1132(E) et du R1234yf ; la composition contenant en outre de l'eau, la teneur en eau étant < 0,1 % en masse sur la base de l'ensemble du réfrigérant,

dans laquelle, lorsque le % en masse de $CO_2$, R32, HFO-1132(E) et R1234yf sur la base de leur somme est respectivement représenté par w, x, y, et z, dans un diagramme de composition ternaire dans laquelle la somme de R32, HFO-1132(E) et R1234yf est (100-w) % en masse, les coordonnées (x,y,z) sont
si

$$0 < w \leq 0,6 :$$

dans la plage d'une figure entourée par la courbe GO, et les lignes droites OF et FG qui relient les points G, O et F, ou sur les segments de droite ci-dessus ;

G      $(-5,8333w^2-3,1667w+22,2, 7,0833w^2+1,4167w+26,2, -1,25w^2+0,75w+51,6)$,

O      $(36,8, 0,8333w^2+1,8333w+22,6, -0,8333w^2-2,8333w+40,6)$,

F      $(-0,0833w+36,717, -4,0833w+5,1833, 3,1666w+58,0997)$, ou les segments de

droite ci-dessus ;
la courbe GO étant représentée par les coordonnées (x, $(0,00487w^2-0,0059w+0,0072)$ $x^2+(-0,279w^2+0,2844w-0,6701)x+3,7639w^2-0,2467w+37,512$, 100-w-x-y) ;
si

$$0,6 < w \leq 1,2 :$$

dans la plage d'une figure entourée par les courbes GN et NO, et les lignes droites OF et FG qui relient les points G, N, O et F, ou sur les segments de droite ci-dessus :

les points G, O et F étant tels que définis ci-dessus, et N étant (18,2, $0,2778w^2+3,0w+27,7$, $-0.2\,77w^2-4,0w+54,1$) ;
les courbes GN et NO étant représentées par les coordonnées suivantes :

GN      (x, $(0,0122w^2-0,0113w+0,0313)x^2+(-0,3582w^2+0,1624w-1,4551)x+2,7889w^2+3,7417w+43,824$, 100-w-x-y) ;

NO      (x, $(0,00487w^2-0,0059w+0,0072)x^2+(-0,279w^2+0,2844w-0,6701)x+3,7639w^2-0,2467w+37,512$, 100-w-x-y) ;

si

$$1,2 < w \leq 1,3 :$$

dans la plage d'une figure entourée par les courbes MW, WN et NO, et les lignes droites OF, FC et CM qui relient les points M, W, N, O, F et C, ou sur les segments de droite ci-dessus (à l'exclusion de points sur la ligne droite CM) :

M      $(0,0, -0,3004w^2+2,419w+55,53, 0,3004w^2-3,419w+44,47)$,

W      $(10,0, -0,3645w^2+3,5024w+34,422, 0,3645w^2-4,5024w+55,578)$,

N      $(18,2, -0,3773w^2+3,319w+28,26, 0,3773w^2-4,319w+53,54)$,

O      $(36,8, -0,1392w^2+1,4381w+24,475, 0,1392w^2-2,4381w+38,725)$,

F      $(36,6, -3w+3,9, 2w+59,5)$,

C      $(0,0, 0,1081w^2-5,169w+58,447, -0,1081w^2+4,169w+41,553)$ ;

les courbes MW, WN et NO étant représentées par les coordonnées suivantes :

MW      (x, $(0,0043w^2-0,0359w+0,1509)x^2+(-0,0493w^2+0,4669w-3,6193)x-0,3004w^2+2,419w+55,53$, 100-w-x-y),

WN      (x, $(0,0055w^2-0,0326w+0,0665)x^2+(-0,1571w^2+0,8981w-2,6274)x+0,6555w^2-2,2153w+54,044$, 100-w-x-y),

(continued)

NO    (x, (-0,00062$w^2$+0,0036w+0,0037) $x^2$+(0,0375$w^2$-0,239w-0,4977)x-0,8575$w^2$ +6,4941w+36,078, 100-w-x-y) ;

si

$$1,3 < w \leq 4,0 :$$

dans la plage d'une figure entourée par les courbes MW, WN et NO, et les lignes droites OB', B'D, DC et CM qui relient les points M, W, N, O, B', D et C, ou sur les segments de droite ci-dessus
(à l'exclusion de points sur la ligne droite CM) :

les points M, W, N, O et C étant définis comme dans le cas de (1,2 < w $\leq$ 1,3), et
B' (36,6, 0,0, -w+63,4),
D (-2,8226w+40,211, 0,0, 1,8226w+59,789), et
les courbes MW, WN et NO étant représentées par les coordonnées comme dans le cas de (1,2 < w $\leq$ 1,3) ; et
si

$$4,0<w\leq7,0 :$$

dans la plage d'une figure entourée par les courbes MW, WN et NO, et les lignes droites OB', B'D, DC et CM qui relient les points M, W, N, O, F et C, ou sur les segments de droite ci-dessus
(à l'exclusion de points sur la ligne droite CM) :

| | |
|---|---|
| M | (0,0, -0,0667$w^2$+0,8333w+58,133, 0,0667$w^2$-1,8333w+41,867), |
| W | (10,0, -0,0667$w^2$+1,1w+39,267, 0,0667$w^2$-2,1w+50,733), |
| N | (18, 2, -0,0889$w^2$+1,3778w+31,411, 0,0889$w^2$-2,3778w+50,389), |
| O | (36,8, -0,0444$w^2$+0,6889w+25,956, 0,0444$w^2$-1,6889w+37,244), |
| B' | (36,6, 0,0, -w+63,4), |
| D | (-2,8W+40, 1, 0,0, 1,8w+59,9) |
| C | (0,0, 0,0667$w^2$-4,9667w+58,3, -0,0667$w^2$+3,9667w+41,7) ; |

les courbes MW, WN et NO étant représentées par les coordonnées suivantes :

MW    (x, (0,00357$w^2$-0,0391w+0,1756)$x^2$+(-0,0356$w^2$+0,4178w-3,6422)x-0,0667$w^2$ +0,8333w+58,103, 100-w-x-y),

WN    (x, (-0,002061$w^2$+0,0218w-0,0301)$x^2$+(0,0556$w^2$-0,5821w-0,1108)x-0,4158$w^2$ +4,7352w+43,383, 100-w-x-y),

NO    (x, 0,0082$x^2$+ (0,0022$w^2$-0,0345w-0,7521)x-0,1307$w^2$+2,0247w+42,327, 100-w-x-y).

6.  Composition comprenant un réfrigérant comprenant du $CO_2$, du R32, du HFO-1132(E) et du R1234yf ; la composition contenant en outre de l'eau, la teneur en eau étant < 0,1 % en masse sur la base de l'ensemble du réfrigérant,

dans laquelle, lorsque le % en masse de $CO_2$, R32, HFO-1132(E) et R1234yf sur la base de leur somme est respectivement représenté par w, x, y, et z, dans un diagramme de composition ternaire dans laquelle la somme de R32, HFO-1132(E) et R1234yf est (100-w) % en masse, les coordonnées (x,y,z) sont
si

$$1,2 < w \leq 4,0 :$$

dans la plage d'une figure entourée par les courbes MW et WN, et les lignes droites NE, EC et CM qui relient les points M, W, N, E et C, ou sur les segments de droite ci-dessus (à l'exclusion de points sur la ligne droite CM) :

M (0,0, -0,3004w$^2$+2,419w+55,53, 0,3004w$^2$-3,419w+44,47),
W (10,0, -0,3645w$^2$+3,5024w+34,422, 0,3645w$^2$-4,5024w+55,578), N (18,2, - 0,3773w$^2$+3,319w+28,26, 0,3773w$^2$ -4,319w+53,54),
E (-0,0365w+18,26, 0,0623w$^2$-4,5381w+31,856, -0,0623w$^2$+3,5746w+49,884),
C (0,0, 0,1081w$^2$-5,169w+58,447, -0,1081w$^2$+4,169w+41,553) ;
les courbes MW et WN étant représentées par les coordonnées suivantes :

MW (x, (0,0043w$^2$-0,0359w+0,1509)x$^2$+(-0,0493w$^2$+0,4669w-3,6193)x-0,3004w$^2$+2,419w+55,53, 100-w-x-y),
WN (x, (0,0055w$^2$-0,0326w+0,0665)x$^2$+(-0,1571w$^2$+0,8981w-2,6274) x+0,6555w$^2$-2,2153w+54,044, 100-w-x-y) ; ou
si

$$4,0 < w \leq 7,0 :$$

dans la plage d'une figure entourée par les courbes MW et WN,
et les lignes droites NE, EC et CM qui relient les points M,
W, N, E et C, ou sur les segments de droite ci-dessus (à l'exclusion de points sur la ligne droite CM) :

M (0,0, -0,0667w$^2$+0,8333w+58,133, 0,0667w$^2$-1,8333w+41,867),
W (10,0, -0,0667w$^2$+1,1w+39,267, 0,0667w$^2$-2,1w+50,733),
N 18,2, -0,0889w$^2$+1,3778w+31,411, 0,0889w$^2$-2,3778w+50,389),

E (18,1, 0,0444w$^2$-4,3556w+31,411, -0,0444w$^2$+3,3556w+50,489), C (0,0, 0,0667w$^2$-4,9667w+58,3, -0,0667w$^2$+3,9667w+41,7) ;

les courbes MW et WN étant représentées par les coordonnées suivantes :

MW (x, (0,00357w$^2$-0,0391w+0,1756)x$^2$+(-0,0356w$^2$+0,4178w-3,6422)x-0,0667w$^2$ +0,8333w+58,103, 100-w-x-y), et
WN (x, (-0,002061w$^2$+0,0218w-0,0301)x$^2$+(0,0556w$^2$-0,5821w-0,1108)x-0,4158w$^2$ +4,7352w+43,383, 100-w-x-y).

7. Composition selon l'une quelconque des revendications 1 à 6, qui comprend en outre une huile frigorigène.

8. Utilisation de la composition selon l'une quelconque des revendications 1 à 7 en tant que fluide frigorigène alternatif au R410A.

9. Machine frigorifique comprenant la composition selon l'une quelconque des revendications 1 à 7 en tant que fluide de travail.

10. Procédé de fonctionnement d'une machine frigorifique, comprenant la mise en circulation de la composition selon l'une quelconque des revendications 1 à 7 en tant que fluide de travail dans une machine frigorifique.

Fig. 1

Fig. 2

Fig. 3

HFO1132(E)

R32

R1234yf

Ternary composition diagram (0.6% CO₂)
— GWP=125
⋯⋯ GWP=250
— GWP=350
WCF lower flammability
— ASHRAE lower flammability (WCF and WCFF)
— 80% cap. (relative to R410A)
----80%Cap.(对r410A)

Fig. 4

Fig. 5

Fig. 6

Fig. 7

Fig. 8

Fig. 9

**REFERENCES CITED IN THE DESCRIPTION**

**Patent documents cited in the description**

- WO 2015186557 A